(19) Europäisches Patentamt
European Patent Office
Office européen des brevets

(11) **EP 3 701 551 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **18795500.0**

(22) Anmeldetag: **25.10.2018**

(51) Int Cl.:
*H01F 1/18* (2006.01)       *C21D 6/00* (2006.01)
*C21D 8/02* (2006.01)       *C21D 8/12* (2006.01)
*C21D 11/00* (2006.01)      *C22C 38/10* (2006.01)
*C22C 38/12* (2006.01)      *H01F 41/02* (2006.01)

(86) Internationale Anmeldenummer:
**PCT/EP2018/079339**

(87) Internationale Veröffentlichungsnummer:
**WO 2019/081672 (02.05.2019 Gazette 2019/18)**

(54) **VERFAHREN ZUM HERSTELLEN EINER HOCHPERMEABLEN WEICHMAGNETISCHEN LEGIERUNG**

METHOD FOR PRODUCING A HIGHLY-PERMEABLE SOFT-MAGNETIC ALLOY

PROCÉDÉ POUR PRODUIRE UN ALLIAGE MAGNÉTIQUE DOUX À PERMÉABILITÉ ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2017 DE 102017009999**
**24.05.2018 DE 102018112493**

(43) Veröffentlichungstag der Anmeldung:
**02.09.2020 Patentblatt 2020/36**

(73) Patentinhaber: **Vacuumschmelze GmbH & Co. KG**
**63450 Hanau (DE)**

(72) Erfinder:
• **FOHR, Jan, Frederik**
**63322 Rödermark (DE)**
• **TENBRINK, Johannes**
**63776 Mömbris (DE)**
• **VOLBERS, Niklas**
**63486 Bruchköbel (DE)**

(74) Vertreter: **Moore, Joanne Camilla**
**Jensen & Son**
**366-368 Old Street**
**London EC1V 9LT (GB)**

(56) Entgegenhaltungen:
EP-A1- 1 918 407        WO-A1-01/00895
DE-A1-102007 035 774    DE-B- 1 180 954

**Beschreibung**

Die vorliegende Erfindung betrifft eine weichmagnetische Legierung, insbesondere eine hochpermeable weichmagnetische Legierung.

Nicht-kornorientiertes Elektroblech mit ca. 3 Gew-% Silizium (SiFe) ist das am weitesten verbreitete kristalline weichmagnetische Material, das in Blechpaketen von elektrischen Maschinen Anwendung findet. Im Zuge der voranschreitenden Elektromobilität werden effizientere Materialien benötigt, die gegenüber dem SiFe eine bessere Performance aufweisen. Dies bedeutet neben einem ausreichend hohen elektrischen Widerstand, dass vor allem ein höheres Induktionsniveau wünschenswert ist, um hohe Drehmomente und/oder ein kleines Bauvolumen auszubilden.

Für den Einsatz in manchen Technologien, wie der Automobilindustrie und der Elektromobilität sind noch effizientere Materialien wünschenswert. Weichmagnetische Kobalt-Eisen-Legierungen (CoFe) werden aufgrund ihrer überragend hohen Sättigungsinduktion auch in elektrischen Maschinen verwendet. Kommerziell verfügbare CoFe-Legierungen weisen typischerweise eine Zusammensetzung von 49 Gew. % Fe, 49 Gew. % Co und 2 % V auf. Bei einer solchen Zusammensetzung wird eine Sättigungsinduktion von etwa 2,35 T erreicht bei gleichzeitig hohem elektrischen Widerstand von 0,4 $\mu\Omega$m. Es ist jedoch wünschenswert, die Material- und Herstellungskosten für CoFe-Legierungen zu reduzieren, die beispielsweise auf Grund des hohen Co-Gehaltes, der zusätzlichen Fertigungsschritte sowie des Schrottanteils entstehen.

WO 01/00895 A1, EP 1 918 407 A1, DE 10 2007 035774 A1 und DE 11 80 954 B zeigen Fe-Co-V-Legierungen mit FCC/BCC Phasenübergang, die durch Warmwalzen, Zwischen- und Schlussglühen verarbeitet werden.

Die zu lösende Aufgabe besteht somit darin eine FeCo-Legierung bereitzustellen, die niedrigere Materialkosten aufweist und die gleichzeitig gut verarbeitbar ist, um die Herstellkosten der Legierung bis hin zum Blechpaket zu reduzieren, und gleichzeitig eine hohe Leistungsdichte zu ermöglichen.

Gelöst wird dies durch den Gegenstand der unabhängigen Ansprüche. Weitere vorteilhafte Weiterbildungen sind Gegenstand der jeweiligen abhängigen Ansprüche.

Erfindungsgemäß wird eine weichmagnetische Legierung, insbesondere eine hochpermeable weichmagnetische FeCo-Legierung bereitgestellt, die im Wesentlichen aus

| | | |
|---|---|---|
| 5 Gew.-% | $\leq$ Co | $\leq$ 25 Gew.-% |
| 0,3 Gew.-% | $\leq$ V | $\leq$ 5,0 Gew.-% |
| 0 Gew.-% | $\leq$ Cr | $\leq$ 3,0 Gew.-% |
| 0 Gew.% | $\leq$ Si | $\leq$ 3,0 Gew.-% |
| 0 Gew.% | $\leq$ Mn | $\leq$ 3,0 Gew.-% |
| 0 Gew.-% | $\leq$ Al | $\leq$ 3,0 Gew.-% |
| 0 Gew.% | $\leq$ Ta | $\leq$ 0,5 Gew.-% |
| 0 Gew.% | $\leq$ Ni | $\leq$ 0,5 Gew.-% |
| 0 Gew.% | $\leq$ Mo | $\leq$ 0,5 Gew.-% |
| 0 Gew.% | $\leq$ Cu | $\leq$ 0,2 Gew.-% |
| 0 Gew.% | $\leq$ Nb | $\leq$ 0,25 Gew.-% |
| 0 Gew.% | $\leq$ Ti | $\leq$ 0,05 Gew.-% |
| 0 Gew.% | $\leq$ Ce | $\leq$ 0,05 Gew.-% |
| 0 Gew.% | $\leq$ Ca | $\leq$ 0,05 Gew.-% |
| 0 Gew.% | $\leq$ Mg | $\leq$ 0,05 Gew.-% |
| 0 Gew.% | $\leq$ C | $\leq$ 0,02 Gew.-% |
| 0 Gew.% | $\leq$ Zr | $\leq$ 0,1 Gew.-% |
| 0 Gew.% | $\leq$ O | $\leq$ 0,025 Gew.-% |
| 0 Gew.% | $\leq$ S | $\leq$ 0,015 Gew.-% |

Rest Eisen, wobei Cr+Si+Al+Mn $\leq$ 3,0 Gew.-%, und bis zu 0,2 Gew.-% an anderen Verunreinigungen besteht. Die Legierung weist eine maximale Permeabilität $\mu_{max} \geq$ 5.000, vorzugsweise $\mu_{max} \geq$ 10.000, vorzugsweise $\mu_{max} \geq$ 12.000, vorzugsweise $\mu_{max} \geq$ 17.000 auf. Andere Verunreinigungen sind zum Beispiel B, P, N, W, Hf, Y, Re, Sc, Be, andere Lanthanoide außer Ce.

Auf Grund des niedrigeren Co-Gehalts sind die Rohkosten der erfindungsgemäßen Legierung gegenüber einer Legierung auf 49 Gew. % Fe, 49 Gew. % Co, 2 % V-Basis reduziert. Erfindungsgemäß wird eine FeCo- Legierung mit einem maximalen Kobaltgehalt von 25 Gewichtsprozent geschaffen, die bessere weichmagnetische Eigenschaften, insbesondere eine deutlich höhere Permeabilität bietet als andere FeCo-Legierungen mit einem maximalen Kobaltgehalt von 25 Gewichtsprozent, wie die bestehenden und kommerziell erhältlichen FeCo-Legierungen wie VACOFLUX 17, AFK 18 oder HIPERCO 15. Diese bestehenden und kommerziell erhältlichen Legierungen weisen eine maximale Permeabilität von unterhalb 5000 auf.

Die erfindungsgemäße Legierung weist keine signifikante Ordnungseinstellung auf, so dass diese Legierung im Unterschied zu Legierungen mit über 30 Gew.-% Co ohne einen vorgeschalteten Abschreckvorgang kaltgewalzt werden kann. Eine Abschreckvorgang ist insbesondere bei großen Mengen an Materialien nur schwierig zu kontrollieren, da ausreichend schnelle Abkühlraten nur schwierig zu erreichen sind, so dass eine Ordnung mit einer daraus resultierenden Versprödung der Legierung stattfinden kann. Das Fehlen eines Ordnung-Unordnung-Übergangs bei der erfindungsgemäßen Legierung vereinfacht somit die großtechnische Herstellung.

Ein merklicher Ordnungs-Unordnungs-Übergang, so wie bei CoFe-Legierungen mit einem Co-Gehalt von mehr als 30 Gew.-%, kann für eine Legierung mittels DSC-Messungen (Differential Scanning Calorimetry) ermittelt werden, da er zu einem Peak in der DSC-Messung führt. Solch ein Peak wird für die erfindungsgemäße Legierung bei einer DSC-Messung unter den gleichen Bedingungen nicht ermittelt.

Gleichzeitig bietet diese neue Legierung aber signifikant niedrigere Hystereseverluste als die bisher bekannten und kommerziell erhältlichen Legierungen mit Co-Gehalten zwischen 10 und 30 Gew.-% sowie eine höhere Sättigung neben dem deutlich höheren, bisher für derartige Legierungen nie erreichten Permeabilitätsniveau. Die erfindungsgemäße FeCo-Legierung kann auch kostengünstig großtechnisch hergestellt werden.

Die erfindungsgemäße Legierung kann auf Grund der höheren Permeabilität bei Anwendungen, wie einem Rotor oder einen Stator eines Elektromotors verwendet werden, um die Größe des Rotors bzw. Stators und somit des Elektromotors zu verkleinern und/oder die Leistung zu steigern. Beispielsweise kann bei der gleichen Baugröße und/oder bei dem gleichen Gewicht ein höheres Drehmoment erzeugt werden, was bei der Anwendung in elektrisch- oder hybridbetriebenen Kraftfahrzeugen vorteilhaft wäre.

Neben einer maximalen Permeabilität $\mu_{max} \geq 5.000$, vorzugsweise $\mu_{max} \geq 10.000$, vorzugsweise $\mu_{max} \geq 12.000$, vorzugsweise $\mu_{max} \geq 17.000$ kann die Legierung einen elektrischen Widerstand $p \geq 0,25\ \mu\Omega m$, vorzugsweise $p \geq 0,30\ \mu\Omega m$, und/oder Hystereseverluste $P_{Hys} \leq 0,07$ J/kg vorzugsweise Hystereseverluste $P_{Hys} \leq 0,06$ J/kg vorzugsweise Hystereseverluste $P_{Hys} \leq 0,05$ J/kg, jeweils bei einer Amplitude von 1,5 T, und/oder eine Koerzitivfeldstärke $H_c$ von $\leq 0,7$ A/cm vorzugsweise eine Koerzitivfeldstärke $H_c$ von $\leq 0,6$ A/cm vorzugsweise eine Koerzitivfeldstärke $H_c$ von $\leq 0,5$ A/cm vorzugweise $H_c$ von $\leq 0,4$ A/cm, vorzugsweise $H_c$ von $\leq 0,3$ A/cm und/oder Induktion $B \geq 1,90$ T bei 100 A/cm, vorzugsweise $B \geq 1,95$ T bei 100 A/cm, vorzugsweise $B \geq 2,00$ T bei 100 A/cm aufweisen.

Die Hystereseverluste $P_{Hyst}$ werden aus den Ummagnetisierungsverlusten P bei einer Amplitude der Induktion von 1,5T über den y- Achsenabschnitt in einer Auftragung P/f über die Frequenz f durch lineare Regression ermittelt. Die lineare Regression erfolgt dabei über mindestens 8 Messwerte, welche über den Frequenzbereich 50 Hz bis 1kHz annähernd gleichmäßig (z.B. bei 50, 100, 200, 300, 400, 500, 600, 700, 800, 900, 1.000Hz) verteilt sind.

In einem Ausführungsbeispiel weist die Legierung eine maximale Permeabilität $\mu_{max} \geq \mu_{max} \geq 10.000$, einen elektrischen Widerstand $p \geq 0,28\ \mu\Omega m$, Hystereseverluste $P_{Hys} \leq 0,055$ J/kg bei einer Amplitude von 1,5 T, eine Koerzitivfeldstärke $H_c$ von $\leq 0,5$ A/cm und eine Induktion $B \geq 1,95$ T bei 100 A/cm auf. Diese Kombination von Eigenschaften ist besonders vorteilhaft für Anwendung als oder in einem Rotor oder einem Stator eines Elektromotors, um die Größe des Rotors bzw. Stators und somit des Elektromotors zu verkleinern und/oder die Leistung zu steigern, oder bei der gleichen Baugröße und/oder bei dem gleichen Gewicht ein höheres Drehmoment zu erzeugen.

Die weichmagnetische Legierung kann somit in einer elektrischen Maschine, wie beispielweise als oder in einem Stator und/oder Rotor eines Elektromotors und/oder eines Generators, und/oder in einem Transformator und/oder in einem elektromagnetischen Aktor verwendet werden. Sie kann in Form eines Blechs bereitgestellt werden, beispielsweise mit einer Dicke von 0,5 mm bis 0,05 mm. Mehrere Bleche aus der Legierung können zu einem Blechpaket gestapelt werden, das als Stator oder Rotor verwendet wird.

Die erfindungsgemäße Legierung weist einen elektrischen Widerstand von mindestens 0,25 $\mu\Omega m$ auf, vorzugsweise minimal 0,3 $\mu\Omega m$. Die Wirbelstromverluste können über die Wahl einer etwas niedrigeren Banddicke auf ein niedrigeres Niveau abgesenkt werden.

In weiteren Ausführungsbeispielen wird die Zusammensetzung der weichmagnetischen Legierung näher definiert, wobei 10 Gew.-% $\leq$ Co $\leq$ 20 Gew.-%, vorzugsweise 15 Gew.-% $\leq$ Co $\leq$ 20 Gew.-% und 0,3 Gew.-% $\leq$ V $\leq$ 5,0 Gew.-%, vorzugsweise 1,0 Gew.-% $\leq$ V $\leq$ 3,0 Gew.-%, vorzugsweise 1,3 Gew.-% $\leq$ V $\leq$ 2,7 Gew.-% und/oder 0,1 Gew.-% $\leq$ Cr+Si $\leq$ 2,0 Gew.-%, vorzugsweise 0,2 Gew.-% $\leq$ Cr+Si $\leq$ 1,0 Gew.-%, vorzugsweise 0,25 Gew.-% $\leq$ Cr+Si $\leq$ 0,7 Gew.-% gilt.

In einem Ausführungsbeispiel ist die Summenformel näher definiert, wobei 0,2 Gew.-% $\leq$ Cr+Si+Al+Mn $\leq$ 1,5 Gew.-%, vorzugsweise 0,3 Gew.-% $\leq$ Cr+Si+Al+Mn $\leq$ 0,6 Gew.-% gilt.

Die weichmagnetische Legierung kann auch Silizium aufweisen, wobei 0,1 Gew.-% $\leq$ Si $\leq$ 2,0 Gew.-%, vorzugsweise 0,15 Gew.-% $\leq$ Si $\leq$ 1,0 Gew.-%, vorzugsweise 0,2 Gew.-% $\leq$ Si $\leq$ 0,5 Gew.-% gilt.

Aluminium und Silizium können gegeneinander ausgetauscht werden, so dass in einem Ausführungsbeispiel die Summe an Si und Aluminium (Si+Al) 0 Gew.-% $\leq$ (Si + Al) $\leq$ 3,0 Gew.-% ist.

Die erfindungsgemäßen Legierungen sind nahezu kohlenstofffrei und weisen maximal bis zu 0,02 Gew.-% Kohlenstoff auf, vorzugsweise ≤ 0,01 Gew.-% Kohlenstoff. Dieser maximale Kohlenstoffgehalt ist als unvermeidbare Verunreinigung anzusehen. Bei den erfindungsgemäßen Legierungen können Kalzium, Beryllium und/oder Magnesium lediglich in geringen Maßen bis zu 0,05 Gew.-% zur Desoxidation und Entschwefelung zulegiert werden. Um eine besonders gute Desoxidation zu erreichen, können bis zu 0,05 Gew.-% Cer oder Cermischmetall zulegiert werden.

Die verbesserten magnetischen Eigenschaften können erfindungsgemäß durch eine Wärmebehandlung erreicht werden, die auf die Zusammensetzung wie folgt abgestimmt wird. Insbesondere hat es sich herausgestellt, dass die Ermittlung der Phasenübergangstemperaturen für die ausgewählten Zusammensetzungen und die Bestimmung der Wärmebehandlungstemperaturen und Abkühlrate in Bezug auf diese ermittelten Phasenübergangstemperaturen zu verbesserten magnetischen Eigenschaften führt. Außerdem wird berücksichtigt, dass die erfindungsgemäßen Legierungen mit einem Kobaltgehalt von maximal 25 Gewichtsprozent keine Ordnungs-Unordnungs-Übergang aufweist, so dass im Fertigungsweg keine Abschreckung notwendig ist, um eine Ordnung und daraus resultierende Versprödung zu vermeiden.

Herkömmlich werden CoFe-Legierungen in Banddicken im Bereich von 0,50 mm bis hin zu sehr dünnen Abmessungen von 0,050 mm eingesetzt. Zur Bandverarbeitung wird herkömmlich das Material warmgewalzt und anschließend an Enddicke kaltgewalzt. Beim Abkühlen findet nach dem Warmwalzen eine versprödende Ordnungseinstellung bei ca. 730°C statt, sodass für eine ausreichende Kaltwalzbarkeit zusätzlich eine spezielle Zwischenglühung mit anschließendem Abschrecken zur Unterdrückung der Ordnungseinstellung erfolgen muss. Auf dieses Abschrecken wird bei der erfindungsgemäßen Legierung verzichtet, da sie keine Ordnungs-Unordnungs-Übergang aufweist, was das Herstellen vereinfacht.

CoFe-Legierungen werden zur Erzielung der magnetischen Eigenschaften einer abschließenden Wärmebehandlung unterzogen, die auch als magnetische Schlussglühung bezeichnet wird. Dazu wird das Material bis zur Glühtemperatur aufgeheizt, bei der Glühtemperatur eine bestimmte Zeit gehalten und anschließend mit definierter Geschwindigkeit abgekühlt. Es ist vorteilhaft diese Schlussglühung bei möglichst hohen Temperaturen und unter trockener reiner Wasserstoffatmosphäre durchzuführen, da bei hohen Temperaturen erstens die Reduzierung von Verunreinigungen durch den Wasserstoff effizienter wird und zweitens die Kornstruktur gröber wird und damit die weichmagnetischen Eigenschaften wie Koerzitivfeldstärke und Permeabilität besser werden.

Die Glühtemperatur ist im System CoFe in der Praxis nach oben beschränkt, da im binären System bei ca. 950°C ein Phasenübergang stattfindet, der die magnetische und ferritische BCC- Phase in die nichtmagnetische und austenitische FCC-Phase überführt. Bei Zulegierung entsteht zwischen FCC und BCC-Phase ein Zweiphasengebiet, in dem beide Phasen koexistieren. Der Übergang zwischen der BCC-Phase und dem Zweiphasen- oder BCC/FCC-Mischgebiet liegt bei einer Temperatur $T_{Ü1}$ und der Übergang zwischen dem Zweiphasengebiet und der FCC-Phase bei einer Temperatur $T_{Ü2}$, wobei $T_{Ü2} > T_{Ü1}$ ist. Die Lage und Größe des Zweiphasengebietes hängt weiter von der Art und dem Umfang der Zulegierung ab. Findet die Glühung im Zweiphasengebiet oder im FCC-Gebiet statt, können nach Abkühlung und nicht vollständiger Rückumwandlung, Reste der FCC- Phase die Magnetik schädigen. Selbst bei vollständiger Rückumwandlung bleibt ein schädigender Effekt über die zusätzlich entstandenen Korngrenzen, da die Koerzitivfeldstärke sich umgekehrt proportional zum Korndurchmesser verhält. Konsequenterweise werden die bekannten, kommerziell erhältlichen Legierungen mit Co-Gehalten um 20 Gew.-% bei Temperaturen unterhalb des Zweiphasengebietes BCC+FCC schlußgeglüht. So lautet z.B. für AFK 18 die Empfehlung 3h/850°C, für AFK 1 3h/900°C. Für VACOFLUX 17 lautet die Empfehlung 10h/850°C. Bei derart niedrigen Schlußglühtemperaturen und aufgrund der relativ hohen magnetokristallinen Anisotropie ($K_1$ ca. 45.000 J/m$^3$ bei 17 Gew.-% Co), ist das Potential für besonders gute weichmagnetische Eigenschaften bei diesen FeCo-Legierungen begrenzt. So kann man z.B. mit VACOFLUX 17-Band lediglich Maximalpermeabilitäten um 4.000 erreichen, bei einer Koerzitivfeldstärke von typischerweise 1 A/cm, was den Einsatz begrenzt.

Im Gegensatz zu diesen bekannten Schlussglühungsverfahren ermöglicht die erfindungsgemäße Zusammensetzung eine Wärmebehandlung, die bessere magnetische Eigenschaften hervorbringt als die bei FeCo- Legierungen übliche einstufige Glühung mit Ofenkühlung, unabhängig davon in welchem Temperaturbereich die einstufige Glühung erfolgt. Die Zulegierungen werden so gewählt, dass die untere Grenze des Zweiphasengebietes, und der BCC/FCC-Phasenübergang nach oben geschoben werden, um Glühungen bei hohen Temperaturen, beispielsweise oberhalb 925°C im reinen BCC- Gebiet zu ermöglichen. Glühungen bei solch hohen Temperaturen sind mit bisher bekannten FeCo- Legierungen nicht darstellbar.

Weiterhin wird aufgrund der erfindungsgemäßen Zusammensetzung die Breite des Zweiphasengebietes, d.h. die Differenz zwischen der unteren Übergangstemperatur $T_{Ü1}$ und der oberen Übergangstemperatur $T_{Ü2}$, möglichst schmal gehalten. Somit wird durch eine Schlussglühung oberhalb des Zweiphasengebietes, in Verbindung mit einer Abkühlung durch das Zweiphasengebiet und anschließender Haltezeit oder kontrollierter Abkühlung im reinen BCC-Gebiet die Vorteile einer hohen Schlussglühung, d.h. die Aufhebung möglicher magnetisch ungünstiger Texturen, die Reinigungswirkung unter H$_2$, und das Wachstum von großen Körnern, erhalten, ohne das Risiko von magnetisch schädlichen Resten der FCC- Phase.

Es wurde gefunden, dass Zusammensetzungen mit einem Phasenübergang zwischen dem reinen BCC-Gebiet und dem BCC/FCC Mischgebiet bei höheren Temperaturen, beispielsweise oberhalb von 925°C und mit einem schmalen Zweiphasengebiet, beispielsweise von weniger als 45K deutlich verbesserte magnetische Eigenschaften aufweisen. Zusammensetzungen mit dieser bestimmten Kombination von Merkmalen des Phasendiagramms werden erfindungsgemäß ausgewählt und entsprechend wärmebehandelt, um ein hohe Permeabilität von mehr als 5000 oder mehr als 10.000 zu gewährleisten.

Vanadium wurde in einer Fe-Co Legierung als eines der effektivsten Elemente ausgemacht, welches den elektrischen Widerstand erhöht und gleichzeitig das Zweiphasengebiet zu höheren Temperaturen verschiebt. Mit niedrigerem Co-Gehalt ist die Anhebung der Übergangstemperaturen durch Vanadium effektiver. Bei der Fe-17Co Legierung können durch Zugabe von ca. 2% Vanadium die Übergangstemperaturen sogar über den Wert der binären FeCo-Zusammensetzung angehoben werden.

Im Fe-Co System liegt ab ca. 15% Kobalt die BCC/FCC Phasenumwandlung bei niedrigeren Temperaturen als die Curie-Temperatur. Da die FCC-Phase paramagnetisch ist, wird der magnetische Phasenübergang nicht mehr durch die Curie-Temperatur, sondern durch die BCC/FCC Phasenumwandlung bestimmt. Vanadium in ausreichend hohen Mengen verschiebt die BCC/FCC Phasenumwandlung über die Curie-Temperatur $T_c$, sodass die paramagnetische BCC- Phase sichtbar wird.

Wenn jedoch der Vanadiumgehalt zu hoch ist, wird die Breite des Mischgebiets erhöht. Diese Zusammensetzungen weisen niedrigere maximale Permeabilitätswerte auf, obwohl der Phasenübergang zwischen dem BCC/FCC Mischgebiet und dem reinen BCC-Gebiet bei höheren Temperaturen stattfindet. Folglich wurde festgestellt, dass die Zusammensetzung sowohl auf die Temperaturen, bei denen die Phasenübergänge stattfinden, als auch auf die Breite des Mischgebiets Einfluss hat, und bei der Auswahl der Zusammensetzung berücksichtigt werden sollte. Die Temperaturen der Wärmebehandlung können in Bezug auf die Temperaturen, bei denen die Phasenübergänge für diese Zusammensetzung stattfinden, ausgewählt werden, um die höchsten Permeabilitätswerte zu erreichen.

Es wurde somit gefunden, dass eine genauere Ermittlung der Temperaturen, bei denen die Phasenübergänge stattfinden, für eine bestimmte Zusammensetzung bei der Optimierung des Herstellungsverfahrens vorteilhaft ist. Diese können mittels DSC-Messungen (Differential Scanning Calorimetry) ermittelt werden. Die DSC Messung kann bei einer Probenmasse von 50 mg und einer DSC Aufheizrate von 10 Kelvin pro Minute durchgeführt werden und die so ermittelten Temperaturen der Phasenübergänge beim Aufheizen und beim Abkühlen der Probe können verwendet werden, um die Temperaturen für die Wärmebehandlung zu bestimmen.

Chrom und andere Elemente können beigemischt werden, um z.B. den elektrischen Widerstand oder die mechanischen Eigenschaften zu verbessern. Chrom senkt, wie die meisten anderen Elemente, das Zweiphasengebiet der binären Fe-17Co Legierung ab. Der Anteil der Zulegierung neben Vanadium wird bevorzugt daher so gewählt, dass es in Summe mit Vanadium zu einer Anhebung des Zweiphasengebietes gegenüber der binären FeCo-Legierung kommt. Dazu müssen die Verunreinigungen und Elemente, die besonders stark den Austenit stabilisieren (z.B. Nickel) so niedrig wie möglich gehalten werden.

Als bevorzugt haben sich folgende Gehalte zur Erzielung von sehr guten magnetischen Eigenschaften erwiesen: Kobalt von 5 Gew.-% ≤ Co ≤ 25 Gew.-% und bevorzugt sind Gehalte von 10 Gew.-% ≤ Co ≤ 20 Gew.-%, ganz besonders bevorzugt sind Gehalte von 15 Gew.-% ≤ Co ≤ 20 Gew.-%

Vanadium von 0,3 Gew.-% ≤ V ≤ 5,0 Gew.-% und bevorzugt sind Gehalte von 1,0 Gew.-% ≤ V ≤ 3,0 Gew.-% und folgende Summenformel: 0,2 Gew.-% ≤ Cr + Si + Al + Mn ≤ 3,0 Gew.-%.

Die erfindungsgemäßen Legierungen sind nahezu kohlenstofffrei und weisen maximal bis zu 0,02 Gew.-% Kohlenstoff auf, vorzugsweise ≤ 0,01 Gew.-% Kohlenstoff. Dieser maximale Kohlenstoffgehalt ist als unvermeidbare Verunreinigung anzusehen.

Bei den erfindungsgemäßen Legierungen können Kalzium, Beryllium und/oder Magnesium lediglich in geringen Maßen bis zu 0,05 Gew.-% zur Desoxidation und Entschwefelung zulegiert werden. Um eine besonders gute Desoxidation und Entschwefelung zu erreichen, können bis zu 0,05 Gew.-% Cer oder Cermischmetall zulegiert werden.

Die erfindungsgemäße Zusammensetzung ermöglicht eine weitere Verbesserung. Kobalt hat in der paramagnetischen BCC Phase einen höheren Diffusionskoeffizienten als in der ferromagnetischen BCC Phase. Daher ermöglicht Vanadium durch die Trennung von Zweiphasengebiet und Curie-Temperatur $T_c$ einen weiteren Temperaturbereich mit hoher Selbstdiffusion, sodass durch Wärmebehandlung in diesem Bereich oder aufgrund von Abkühlung durch diesen Bereich, eine größere BCC- Kornstruktur und damit bessere weichmagnetische Eigenschaften ermöglicht werden. Weiterhin führt die Trennung von Zweiphasengebiet und Curie-Temperatur $T_c$ dazu, dass beim Abkühlen sowohl der Durchgang durch das Zweiphasengebiet BCC/FCC als auch der Übergang in das Gebiet der reinen BCC-Phase vollständig im paramagnetischen Zustand erfolgt. Dies wirkt sich ebenfalls positiv auf die weichmagnetischen Eigenschaften aus.

Erfindungsgemäß wird ein Verfahren zum Herstellen einer weichmagnetischen FeCo-Legierung bereitgestellt, wobei das Verfahren Folgendes aufweist. Ein Vorprodukt wird bereitgestellt, das eine Zusammensetzung, die im Wesentlichen aus

| 5 Gew.-% | $\leq$ Co | $\leq$ 25 Gew.-% |
|---|---|---|
| 0,3 Gew.-% | $\leq$ V | $\leq$ 5,0 Gew.-% |
| 0 Gew.-% | $\leq$ Cr | $\leq$ 3,0 Gew.-% |
| 0 Gew.% | $\leq$ Si | $\leq$ 3,0 Gew.-% |
| 0 Gew.% | $\leq$ Mn | $\leq$ 3,0 Gew.-% |
| 0 Gew.% | $\leq$ Al | $\leq$ 3,0 Gew.-% |
| 0 Gew.% | $\leq$ Ta | $\leq$ 0,5 Gew.-% |
| 0 Gew.% | $\leq$ Ni | $\leq$ 0,5 Gew.-% |
| 0 Gew.% | $\leq$ Mo | $\leq$ 0,5 Gew.-% |
| 0 Gew.% | $\leq$ Cu | $\leq$ 0,2 Gew.-% |
| 0 Gew.% | $\leq$ Nb | $\leq$ 0,25 Gew.-% |
| 0 Gew.% | $\leq$ Ti | $\leq$ 0,05 Gew.-% |
| 0 Gew.% | $\leq$ Ce | $\leq$ 0,05 Gew.-% |
| 0 Gew.% | $\leq$ Ca | $\leq$ 0,05 Gew.-% |
| 0 Gew.% | $\leq$ Mg | $\leq$ 0,05 Gew.-% |
| 0 Gew.% | $\leq$ C | $\leq$ 0,02 Gew.-% |
| 0 Gew.% | $\leq$ Zr | $\leq$ 0,1 Gew.-% |
| 0 Gew.% | $\leq$ O | $\leq$ 0,025 Gew.-% |
| 0 Gew.-% | $\leq$ S | $\leq$ 0,015 Gew.-% |

Rest Eisen, wobei Cr+Si+Al+Mn $\leq$ 3,0 Gew.-%, und bis zu 0,2 Gew.-% an anderen schmelzbedingten Verunreinigungen besteht. Die anderen Verunreinigungen können zum Beispiel eines oder mehrerer der Elemente B, P, N, W, Hf, Y, Re, Sc, Be, andere Lanthanoide außer Ce. In manchen Ausführungsbeispielen weist das Vorprodukt eine Kaltwalztextur oder eine Fasertextur auf.

Das Vorprodukt oder die aus dem Vorprodukt gefertigten Teile werden wärmebehandelt. In einem Ausführungsbeispiel wird das Vorprodukt bei einer Temperatur $T_1$ wärmebehandelt und danach von $T_1$ bis Raumtemperatur abgekühlt.

In einem alternativen Ausführungsbeispiel wird das Vorprodukt bei einer Temperatur $T_1$, danach auf eine Temperatur $T_2$ abgekühlt, die oberhalb Raumtemperatur liegt, und bei der Temperatur $T_2$ weiter wärmebehandelt, wobei $T_1 > T_2$ ist. Erst nach der Wärmebehandlung bei der Temperatur $T_2$ wird das Vorprodukt auf Raumtemperatur abgekühlt.

Das Vorprodukt weist einen Phasenübergang von einem BCC-Phasengebiet, in ein BCC/FCC Mischgebiet zu einem FCC Phasengebiet auf, wobei bei aufsteigender Temperatur der Phasenübergang zwischen dem BCC Phasengebiet und dem BCC/FCC Mischgebiet bei einer ersten Übergangstemperatur $T_{\ddot{U}1}$ und bei weiter ansteigender Temperatur der Übergang zwischen dem BCC/FCC Mischgebiet und dem FCC Phasengebiet bei einer zweiten Übergangstemperatur $T_{\ddot{U}2}$ stattfindet, wobei $T_{\ddot{U}2} > T_{\ddot{U}1}$. Die Temperatur $T_1$ liegt oberhalb $T_{\ddot{U}2}$ und die Temperatur $T_2$ liegt unterhalb $T_{\ddot{U}1}$.

Die Übergangstemperaturen $T_{\ddot{U}1}$ und $T_{\ddot{U}2}$ sind abhängig von der Zusammensetzung des Vorprodukts. Die Übergangstemperaturen $T_{\ddot{U}1}$ und $T_{\ddot{U}2}$ können mittels DSC-Messungen ermittelt werden, wobei die Übergangstemperatur $T_{\ddot{U}1}$ beim Aufheizen und die Übergangstemperatur $T_{\ddot{U}2}$ beim Abkühlen ermittelt werden. In einem Ausführungsbeispiel liegt die Übergangstemperatur $T_{\ddot{U}1}$ bei einer Probenmasse von 50 mg und einer DSC Aufheizrate von 10 Kelvin pro Minute über 900°C, vorzugsweise über 920°C, und vorzugsweise über 940°C.

Erfindungsgemäß ist die Solidustemperatur des Vorprodukts bei der Auswahl der Temperaturen $T_1$ und $T_2$ berücksichtigt. In einem Ausführungsbeispiel ist 930°C $\leq T_1 < T_m$, vorzugsweise 940°C $\leq T_1 < T_m$, vorzugsweise 960°C $\leq T_1 < T_m$, und 700°C $\leq T_2 \leq$ 1050°C und $T_2 < T_1$ ist, wobei $T_m$ die Solidustemperatur ist.

In einem Ausführungsbeispiel ist die Differenz $T_{\ddot{u}2} - T_{\ddot{u}1}$ geringer als 45K, vorzugsweise geringer als 25K.

Erfindungsgemäß beträgt die Abkühlrate über zumindest den Temperaturbereich von $T_1$ auf $T_2$ 10°C/h bis 900°C/h, vorzugsweise 20°C/h bis 1.000°C/h, vorzugsweise 20°C/h bis 900°C/h, vorzugsweise 25°C/h bis 500°C/h. Diese Abkühlrate kann bei beiden der oben genannten Wärmebehandlungen verwendet werden.

In einem Ausführungsbeispiel ist die Differenz $T_{\ddot{u}2} - T_{\ddot{u}1}$ geringer als 45K, vorzugsweise geringer als 25K, $T_1$ liegt oberhalb $T_{\ddot{U}2}$ und $T_2$ liegt unterhalb $T_{\ddot{U}1}$ ist, wobei 940°C $\leq T_1 < T_m$, 700°C $\leq T_2 \leq$ 1050°C und $T_2 < T_1$, wobei $T_m$ die Solidustemperatur ist, und die Abkühlrate beträgt über zumindest den Temperaturbereich von $T_1$ auf $T_2$ 10°C/h bis 900°C/h. Diese Kombination von Eigenschaften der Legierung, d.h. $T_{\ddot{u}2}$ und $T_{\ddot{u}1}$, mit den Temperaturen $T_1$ und $T_2$ der Wärmebehandlung können verwendet werden, um besonders hohe Permeabilitätswerte zu erreichen.

In einem Ausführungsbeispiel wird das Vorprodukt für eine Zeit von über 30 Minuten oberhalb von $T_{\ddot{U}2}$ wär-

mebehandelt, und danach auf $T_2$ abgekühlt.

In einem Ausführungsbeispiel wird das Vorprodukt bei $T_1$ für eine Zeit $t_1$ wärmebehandelt, wobei 15 Minuten $\leq t_1 \leq$ 20 Stunden ist, und danach von $T_1$ auf $T_2$ abgekühlt. In einem Ausführungsbeispiel wird das Vorprodukt von $T_1$ auf $T_2$ abgekühlt, bei $T_2$ für eine Zeit $t_2$ wärmebehandelt, wobei 30 Minuten $\leq t_2 \leq$ 20 Stunden ist, und danach von $T_2$ auf Raumtemperatur abgekühlt.

In Ausführungsbeispielen, bei denen das Vorprodukt von $T_1$ auf Raumtemperatur abgekühlt wird, kann das Vorprodukt danach von Raumtemperatur auf $T_2$ aufgeheizt werden und bei $T_2$ nach einem der hierin beschriebenen Ausführungsbeispiele wärmebehandelt werden.

Da die Legierung keinen Ordnung-Unordnung-Übergang aufweist, wird auf eine Abschreckung über den Temperaturbereich von 800°C bis 600°C verzichtet. Die Abkühlrate von 800°C bis 600°C kann beispielsweise zwischen 100°C/h bis 500°C/h liegen. Sie kann aber prinzipiell auch noch langsamer gewählt werden. Die genannten Abkühlraten können auch problemlos bis zur Abkühlung auf Raumtemperatur durchgeführt werden.

Das Vorprodukt kann von $T_1$ auf Raumtemperatur bei einer Rate von 10°C/h bis 50.000°C/h, vorzugsweise von 10°C/h bis 1.000°C/h, vorzugsweise 10°C/h bis 900°C/h, vorzugsweise 25°C/h bis 900°C/h, vorzugsweise von 25°C/h bis 500°C/h abgekühlt werden.

Die Abkühlrate von $T_2$ auf Raumtemperatur hat weniger Einfluss auf die magnetischen Eigenschaften, so dass das Vorprodukt von $T_2$ auf Raumtemperatur bei einer Rate von 10°C/h bis 50,000°C/h, vorzugsweise 100°C/h bis 1000°C/h abgekühlt werden kann.

In einem weiteren alternativen Ausführungsbeispiel wird das Vorprodukt von $T_1$ bis Raumtemperatur mit einer Abkühlrate von 10°C/h bis 900°h abgekühlt. In Ausführungsbeispielen mit einer langsamen Abkühlung von $T_1$ auf Raumtemperatur, beispielsweise mit einer Abkühlrate von weniger als 500°C/h, vorzugsweise weniger als 200°C/h kann auch auf eine weitere Wärmebehandlung bei der Temperatur $T_2$ verzichtet werden.

Nach der Wärmebehandlung kann die weichmagnetische Legierung eine der folgenden Kombinationen von Eigenschaften aufweisen:

eine maximale Permeabilität $\mu_{max} \geq$ 5.000, und/oder einen elektrischen Widerstand p $\geq$ 0,25 $\mu\Omega$m, und/oder Hystereseverluste $P_{Hys} \leq$ 0,07 J/kg bei einer Amplitude von 1,5 T, eine Koerzitivfeldstärke $H_c$ von $\leq$ 0,7 A/cm und Induktion B $\geq$ 1,90 T bei 100 A/cm aufweisen, oder

eine maximale Permeabilität $\mu_{max} \geq$ 10.000, und/oder einen elektrischen Widerstand p $\geq$ 0,25 $\mu\Omega$m, und/oder Hystereseverluste $P_{Hys} \leq$ 0,06 J/kg bei einer Amplitude von 1,5 T, und/oder eine Koerzitivfeldstärke $H_c$ von $\leq$ 0,6 A/cm, vorzugsweise $H_c \leq$ 0,5 A/cm und/oder Induktion B $\geq$ 1,95 T bei 100 A/cm aufweisen, oder

eine maximale Permeabilität $\mu_{max} \geq$ 12.000, vorzugsweise $\mu_{max} \geq$ 17.000 und/oder einen elektrischen Widerstand p $\geq$ 0,30 $\mu\Omega$m, und/oder Hystereseverluste $P_{Hys} \leq$ 0,05 J/kg bei einer Amplitude von 1,5 T, und/oder eine Koerzitivfeldstärke $H_c$ von $\leq$ 0,5 A/cm, vorzugsweise $H_c \leq$ 0,4 A/cm, vorzugsweise $H_c \leq$ 0,3 A/cm und/oder Induktion B $\geq$ 2,00 T bei 100 A/cm.

In bestimmten Ausführungsbeispielen weist die weichmagnetische Legierung eine der folgenden Kombinationen von Eigenschaften auf:

eine maximale Permeabilität $\mu_{max} \geq$ 5.000, einen elektrischen Widerstand p $\geq$ 0,25 $\mu\Omega$m, Hystereseverluste $P_{Hys} \leq$ 0,07 J/kg bei einer Amplitude von 1,5 T, eine Koerzitivfeldstärke $H_c$ von $\leq$ 0,7 A/cm und Induktion B $\geq$ 1,90 T bei 100 A/cm, oder

eine maximale Permeabilität $\mu_{max} \geq$ 10.000, einen elektrischen Widerstand p $\geq$ 0,25 $\mu\Omega$m, Hystereseverluste $P_{Hys} \leq$ 0,06 J/kg bei einer Amplitude von 1,5 T, eine Koerzitivfeldstärke $H_c$ von $\leq$ 0,6 A/cm und Induktion B $\geq$ 1,95 T bei 100 A/cm, oder

eine maximale Permeabilität $\mu_{max} \geq$ 12.000, einen elektrischen Widerstand $\rho \geq$ 0,28 $\mu\Omega$m, Hystereseverluste $P_{Hys} \leq$ 0,05 J/kg bei einer Amplitude von 1,5 T, eine Koerzitivfeldstärke $H_c$ von $\leq$ 0,5 A/cm und Induktion B $\geq$ 2,00 T bei 100 A/cm.

eine maximale Permeabilität $\mu_{max} \geq$ 17.000, einen elektrischen Widerstand $\rho \geq$ 0,30 $\mu\Omega$m, Hystereseverluste $P_{Hys} \leq$ 0,05 J/kg bei einer Amplitude von 1,5 T, eine Koerzitivfeldstärke $H_c$ von $\leq$ 0,4 A/cm, vorzugsweise $H_c$ von $\leq$ 0,3 A/cm und Induktion B $\geq$ 2,00 T bei 100 A/cm.

In einem Ausführungsbeispiel beträgt der maximale Unterschied der Koerzitivfeldstärke $H_c$ nach Wärmebehandlung gemessen parallel zur Walzrichtung, gemessen diagonal (45°) zur Walzrichtung, oder gemessen senkrecht zur Walzrichtung zwischen zwei dieser Richtungen maximal 6%, bevorzugt maximal 3%. In anderen Worten der maximale Unterschied der Koerzitivfeldstärke $H_c$ gemessen parallel zur Walzrichtung und gemessen diagonal (45°) zur Walzrichtung beträgt maximal 6%, bevorzugt maximal 3% und/oder der maximale Unterschied der Koerzitivfeldstärke $H_c$ gemessen parallel zur Walzrichtung und gemessen senkrecht zur Walzrichtung beträgt maximal 6%, bevorzugt maximal 3% und/oder der maximale Unterschied der Koerzitivfeldstärke $H_c$ gemessen diagonal (45°) zur Walzrichtung, oder gemessen senkrecht zur Walzrichtung zwischen zwei dieser Richtungen maximal 6%, bevorzugt maximal 3%. Diese für weichmagnetische FeCo-Legierungen äußerst geringe Anisotropie führt in Rotor- oder Statoranwendungen zu gleichmäßigen Eigenschaften entlang des Umfangs und es besteht deswegen kein Bedarf, Rotor- oder Statorbleche je Blechlage zu verdrehen, um so für ausreichende Isotropie der magnetischen Eigenschaften im Blechpaket zu sorgen.

Das Wärmebehandeln kann unter einer wasserstoffhaltigen Atmosphäre oder unter einem Inertgas durchgeführt werden.

In einem Ausführungsbeispiel wird das Wärmebehandeln bei $T_1$ in einem stationären Ofen und bei $T_2$ in einem stationären Ofen oder einem Durchlaufofen durchgeführt. In einem anderen Ausführungsbeispiel wird das Wärmebehandeln bei $T_1$ in einem Durchlaufofen und bei $T_2$ in einem stationären Ofen oder einem Durchlaufofen durchgeführt.

Das Vorprodukt kann vor dem Wärmebehandeln eine Kaltwalztextur oder eine Fasertextur aufweisen.

Das Vorprodukt kann in Gestalt eines Bands bereitgestellt werden. Zumindest ein Blech kann aus dem Band durch Stanzen, Laserschneiden oder Wasserstrahlscheiden gefertigt werden. In einem Ausführungsbeispiel erfolgt das Wärmebehandeln an gestanzten, lasergeschnittenen, erodierten oder wasserstrahlgeschnittenen Blechschnitten, die aus dem Bandmaterial gefertigt werden.

In einem Ausführungsbeispiel werden nach dem Wärmebehandeln mehrere Bleche mittels eines isolierenden Klebers zu einem Blechpaket verklebt, oder oberflächlich zur Einstellung einer isolierend wirkenden Schicht oxidiert und anschließend zum Blechpaket verklebt oder lasergeschweißt, oder mit einer anorganisch-organischen Hybridbeschichtung beschichtet und anschließend zum Blechpaket weiterverarbeitet.

In manchen Ausführungsbeispielen weist das Vorprodukt die Gestalt eines Blechpakets auf, und das Blechpaket wird gemäß einem der hierin beschriebenen Ausführungsbeispiele wärmebehandelt. Das Wärmebehandeln kann somit an stanzpaketierten oder geschweißten Blechpaketen, die aus Blechschnitten gefertigt werden, erfolgen.

Das Vorprodukt kann wie folgt hergestellt werden. Eine Schmelze kann beispielsweise durch Vakuum- Induktionsschmelzen, Elektroschlacke- Umschmelzen oder Vakuum-Lichtbogen-Umschmelzen bereitgestellt werden, wobei die Schmelze im Wesentlichen aus

| | | | |
|---|---|---|---|
| 5 Gew.-% | $\leq$ Co | $\leq$ 25 Gew.-% | |
| 0,3 Gew.-% | $\leq$ V | $\leq$ 5,0 Gew.-% | |
| 0 Gew.-% | $\leq$ Cr | $\leq$ 3,0 Gew.-% | |
| 0 Gew.% | $\leq$ Si | $\leq$ 3,0 Gew.-% | |
| 0 Gew.% | $\leq$ Mn | $\leq$ 3,0 Gew.-% | |
| 0 Gew.-% | $\leq$ Al | $\leq$ 3,0 Gew.-% | |
| 0 Gew.% | $\leq$ Ta | $\leq$ 0,5 Gew.-% | |
| 0 Gew.% | $\leq$ Ni | $\leq$ 0,5 Gew.-% | |
| 0 Gew.% | $\leq$ Mo | $\leq$ 0,5 Gew.-% | |
| 0 Gew.% | $\leq$ Cu | $\leq$ 0,2 Gew.-% | |
| 0 Gew.% | $\leq$ Nb | $\leq$ 0,25 Gew.-% | |
| 0 Gew.% | $\leq$ Ti | $\leq$ 0,05 Gew.-% | |
| 0 Gew.% | $\leq$ Ce | $\leq$ 0,05 Gew.-% | |
| 0 Gew.% | $\leq$ Ca | $\leq$ 0,05 Gew.-% | |
| 0 Gew.% | $\leq$ Mg | $\leq$ 0,05 Gew.-% | |
| 0 Gew.% | $\leq$ C | $\leq$ 0,02 Gew.-% | |
| 0 Gew.% | $\leq$ Zr | $\leq$ 0,1 Gew.-% | |
| 0 Gew.% | $\leq$ O | $\leq$ 0,025 Gew.-% | |
| 0 Gew.% | $\leq$ S | $\leq$ 0,025 Gew.-% | |

Rest Eisen, wobei Cr+Si+Al+Mn $\leq$ 3,0 Gew.-%, und bis zu 0,2 Gew.-% an anderen Verunreinigungen besteht. Andere Verunreinigungen können eines oder mehrerer der Elemente B, P, N, W, Hf, Y, Re, Sc, Be, andere Lanthanoide außer Ce sein. Die Schmelze wird zu einem Gussblock erstarrt und der Gussblock zu einem Vorprodukt mit Endmaßen umformt, wobei die Umformung mittels Heizwalzen und/oder Schmieden und/oder Kaltumformung durchgeführt wird.

In einem Ausführungsbeispiel wird der Gussblock mittels Warmwalzen zu einer Bramme mit einer Dicke $D_1$ bei Temperaturen zwischen 900°C und 1300°C umgeformt und danach mittels Kaltwalzen zu einem Band mit einer Dicke $D_2$ umformt, wobei $1,0\,mm \leq D_1 \leq 5,0\,mm$ und $0,05\,mm \leq D_2 \leq 1,0\,mm$ ist, wobei $D_2 < D_1$ ist. Der Kaltverformungsgrad durch Kaltwalzen kann >40%, vorzugsweise >80% sein.

In einem Ausführungsbeispiel wird der Gussblock mittels Warmwalzen zu einem Knüppel bei Temperaturen zwischen 900°C und 1300°C umgeformt und danach mittels Kaltziehen zu einem Draht umformt. Der Kaltverformungsgrad durch Kaltziehen kann >40%, vorzugsweise >80% sein.

Eine Zwischenglühung an einer Zwischenabmessung in einem Durchlaufofen oder in einem stationären Ofen kann erfolgen, um die Kaltverfestigung zu reduzieren und so den gewünschten Kaltverformungsgrad einzustellen.

Die Curie-Temperatur der Legierung kann bei der Auswahl der Temperaturen $T_1$ und/oder $T_2$ berücksichtigt werden. Beispielsweise ist $T_{ü1} > T_C$, wobei $T_C$ die Curie-Temperatur ist, und $T_C \geq 900°C$ ist. In einem Ausführungsbeispiel wird $T_{ü1} > T_2 > T_C$ gewählt.

Bei Zusammensetzungen, bei denen es eine Trennung des Zweiphasengebiets und der Curie-Temperatur $T_C$ gibt, besteht einen weiterer Temperaturbereich mit hoher Selbstdiffusion, sodass durch Wärmebehandlung in diesem Bereich oder aufgrund von Abkühlung durch diesen Bereich, eine größere BCC- Kornstruktur und damit bessere weichmagnetische Eigenschaften ermöglicht werden. Weiterhin führt die Trennung von Zweiphasengebiet und Curie-Temperatur $T_C$ dazu, dass beim Abkühlen sowohl der Durchgang durch das Zweiphasengebiet BCC/FCC als auch der Übergang in das Gebiet der reinen BCC-Phase vollständig im paramagnetischen Zustand erfolgt. Mit der Auswahl der Temperatur $T_2$, so dass $T_{ü1} > T_2 > T_C$ ist, können die weichmagnetischen Eigenschaften weiter verbessert werden.

In einem Ausführungsbeispiel beträgt die mittlere Korngröße nach der abschließenden Glühung mindestens $100\,\mu m$ beträgt, vorzugsweise mindestens $200\,\mu m$, vorzugsweise mindestens $250\,\mu m$.

In einem Ausführungsbeispiel ist die gemessene Dichte der geglühten Legierung um mehr als 0,10% niedriger ist, als die per Dreisatz aus dem mittleren Atomgewicht der metallischen Elemente der Legierung, aus dem mittleren Atomgewicht der metallischen Elemente der entsprechenden binären FeCo-Legierung und aus der gemessenen Dichte dieser geglühten binären FeCo-Legierung berechnete Dichte.

Auf Grund der Wärmebehandlung kann der Schwefelgehalt in der fertigen Legierung kleiner als in der Schmelze sein. Zum Beispiel kann die Obergrenze des Schwefelgehalts in der Schmelze 0,025 Gewichtsprozent sein, während in der fertigen weichmagnetischen Legierung liegt die Obergrenze bei 0,015 Gewichtsprozent.

In einem Ausführungsbeispiel wird ferner das Vorprodukt zur elektrischen Isolation mit einer Oxidschicht beschichtet. Dieses Ausführungsbeispiel kann zum Beispiel verwendet werden, wenn das Vorprodukt in einem Blechpaket verwendet wird. Die Blechschnitte, oder das Blechpaket kann mit einer Oxidschicht beschichtet werden. Das Vorprodukt kann mit einer Schicht aus Magnesium-Methylat oder vorzugsweise Zirkon-Propylat beschichtet werden, welche sich während der Wärmebehandlung in eine isolierende Oxidschicht umwandelt. Das Vorprodukt kann zur Ausbildung der elektrisch isolierenden Schicht in einer sauerstoff- oder wasserdampfhaltigen Atmosphäre wärmebehandelt werden.

In einem Ausführungsbeispiel werden ferner aus dem Vorprodukt gestanzte, lasergeschnittene, oder erodierte Blechschnitte einer abschließenden Glühung unterzogen, und die geglühten Einzelbleche danach mittels eines isolierenden Klebers zu einem Blechpaket verklebt, oder die geglühten Einzelbleche werden oberflächlich zur Einstellung einer isolierend wirkenden Schicht oxidiert und anschließend zum Blechpaket verklebt, geschweißt, oder lasergeschweißt, oder die geglühten Einzelbleche werden mit einer anorganisch-organischen Hybridbeschichtung wie z.B. Remisol-C5 beschichtet und anschließend zum Blechpaket weiterverarbeitet.

Die weichmagnetische Legierung nach einem der vorherstehenden Ausführungsbeispiele, die bei einem der hierin beschriebenen Verfahren hergestellt werden kann, kann in einer elektrischen Maschine, wie beispielweise als oder in einem Stator und/oder Rotor eines Elektromotors und/oder eines Generators, und/oder in einem Transformator und/oder in einem elektromagnetischen Aktor verwendet werden.

Ausführungsbeispiele der Erfindung werden nun anhand der Zeichnungen und folgender Beispiele näher erläutert.

Figur 1     zeigt eine schematische (nicht maßstabsgetreue) Darstellung von drei Varianten der erfindungsgemäßen Wärmebehandlung.

Figur 2     zeigt einen typischen Verlauf einer DSC Aufheiz- und Abkühlkurve beim Phasenübergang am Beispiel von Charge 930423.

Figur 3     zeigt die Darstellung der 1. Onset Temperaturen des Phasenübergangs der erfindungsgemäßen Fe-17Co-Cr-V Legierungen mit steigendem V-Gehalt im Vergleich zu der binären Fe-17Co Schmelze für das Aufheizen (DSC) und die Abkühlung (DSC). Gegen eine 2. Y-Achse ist der Verlauf der Maximalpermeabilität $\mu_{max}$ aufgetragen.

Figur 4    zeigt Koeffizienten der Induktionswerte B nach multilinearer Regression.

Figur 5    zeigt Koeffizienten des elektrischen Widerstandes nach multilinearer Regression.

Figur 6    zeigt Koerzitivfeldstärke Hc der Charge 930329 (Fe-17Co1,5V-0,5Cr) als Funktion des reziproken Korndurchmessers d für verschiedenen Glühungen.

Figur 7    zeigt für verschiedene Chargen die Übergangstemperaturen $T_{ü1}$ und $T_{ü2}$ und die besten erreichten Koerzitivfeldstärke $H_c$ dieser Fe-17Co Sonderschmelzen mit unterschiedlichem V-Gehalt. Die Legierungen enthalten zusätzlich bis zu in Summe 0,6 Gew.-% an Cr und/oder Si. Die Daten zu Figur 7 inklusive der Angabe der jeweiligen Glühung zeigt Tabelle 29.

Figur 8    zeigt Maximalpermeabilität und Koerzitivfeldstärke nach Stufenglühung der ersten Glühstufe.

Figur 9    zeigt Maximalpermeabilität und Koerzitivfeldstärke nach Stufenglühung der zweiten Glühstufe unterhalb des Phasenübergangs nach vorheriger ersten Glühstufe 4h 1000°C oberhalb des Phasenübergangs.

Figur 10   zeigt Koerzitivfeldstärke Hc der Chargen 930329 (Fe-17Co-0,5Cr-1,5V) und 930330 (Fe-17Co-2,OV) in Abhängigkeit vom Kaltverformungsgrad.

Figur 11   zeigt (200)-Polfiguren von Charge 93/0330 (Fe-17Co-2V). a) Kaltverformt: Links oben. b) Nach Schlussglühung bei 910°C für 10h: Mitte oben. c) Nach Schlussglühung bei 1050°C für 4h: Rechts oben. d) Nach Schlussglühung bei 1050°C für 4h und 910°C für 10h: Unten.

Figur 12   zeigt Koerzitivfeldstärke Hc der Charge 930330 (Fe-17Co-2V) gemessen parallel zur Walzrichtung ("längs"), in 45° zur Walzrichtung und senkrecht zur Walzrichtung ("quer") für die angegebenen Glühungen.

Figur 13   zeigt Koerzitivfeldstärke Hc der Charge 930335 (Fe-23Co-2V) gemessen parallel zur Walzrichtung ("längs"), in 45° zur Walzrichtung und senkrecht zur Walzrichtung ("quer") für die angegebenen Glühungen.

Figur 14   zeigt Neukurven der erfindungsgemäßen Chargen 930329 (Fe-17Co-1,5V-0,5Cr), 930505 (Fe-17Co-1,4V-0,4Si) und 930330 (Fe-17Co-2V) nach optimaler Glühung im Vergleich zu einem typischen SiFe (TRAFOPERM N4) und typischen FeCo Legierungen.

Figur 15   zeigt Permeabilität der erfindungsgemäßen Chargen 930329 (Fe-17Co-1,5V-0,5Cr), 930505 (Fe-17Co-1,4V-0,4Si) und 930330 (Fe-17Co-2V) nach optimaler Glühung im Vergleich zu einem typischen SiFe (TRAFOPERM N4) und typischen FeCo Legierungen.

Figur 16   zeigt Verluste der erfindungsgemäßen Chargen 930329 (Fe-17Co-1,5V-0,5Cr) und 930330 (Fe-17Co-2V) nach optimaler Glühung bei einer Induktionsamplitude von 1,5T im Vergleich zu einem typischen SiFe (TRAFOPERM N4) und FeCo Legierungen. Die Blechdicke betrug jeweils 0,35mm.

Figur 17   zeigt ein Diagramm der Maximalpermeabilität als Funktion des relativen Dichteunterschiedes $\Delta\rho$ für Legierungen auf der Basis Fe-17Co für die Daten aus der Tabelle 25.

Erfindungsgemäß wird eine weichmagnetische Legierung bereitgestellt, die im Wesentlichen aus:

| 5 Gew.-% | $\leq$ Co | $\leq$ 25 Gew.-% |
| 0,3 Gew.-% | $\leq$ V | $\leq$ 5,0 Gew.-% |
| 0 Gew.-% | $\leq$ Cr | $\leq$ 3,0 Gew.-% |
| 0 Gew.% | $\leq$ Si | $\leq$ 3,0 Gew.-% |
| 0 Gew.% | $\leq$ Mn | $\leq$ 3,0 Gew.-% |
| 0 Gew.% | $\leq$ Al | $\leq$ 3,0 Gew.-% |
| 0 Gew.% | $\leq$ Ni | $\leq$ 0,5 Gew.-% |
| 0 Gew.% | $\leq$ Mo | $\leq$ 0,5 Gew.-% |
| 0 Gew.% | $\leq$ Ta | $\leq$ 0,5 Gew.-% |
| 0 Gew.% | $\leq$ Cu | $\leq$ 0,2 Gew.-% |

(fortgesetzt)

| 0 Gew.% | ≤ Nb | ≤ 0,1 Gew.-% |
| 0 Gew.% | ≤ Ti | ≤ 0,05 Gew.-% |
| 0 Gew.% | ≤ Ce | ≤ 0,05 Gew.-% |
| 0 Gew.% | ≤ Ca | ≤ 0,05 Gew.-% |
| 0 Gew.% | ≤ Mg | ≤ 0,05 Gew.-% |
| 0 Gew.% | ≤ C | ≤ 0,02 Gew.-% |
| 0 Gew.% | ≤ Zr | ≤ 0,1 Gew.-% |
| 0 Gew.% | ≤ O | ≤ 0,025 Gew.-% |
| 0 Gew.% | ≤ S | ≤ 0,015 Gew.-% |

Rest Eisen,

und bis zu 0,2 Gew.-% an anderen schmelzbedingten Verunreinigungen besteht. Die Verunreinigungen können beispielsweise eines oder mehrerer der Elemente B, P, N, W, Hf, Y, Re, Sc, Be, andere Lanthanoide außer Ce sein.

Zur Steigerung des elektrischen Widerstandes können neben dem Legierungselement Vanadium auch eines oder mehrere der Gruppe von Cr, Si, Al und Mn in dem Maße zulegiert werden, wobei die folgende Summenformel erfüllt ist:

0,05 Gew.-% ≤ Cr + Si + Al + Mn ≤ 3,0 Gew.-%

Die Legierung nach der vorliegenden Erfindung wird vorzugsweise in Vakuuminduktionsöfen erschmolzen. Es sind jedoch auch die Verarbeitung über Vakuumlichtbogenumschmelzen und Elektroschlackeumschmelzen möglich. Die Schmelze erstarrt zuerst zu einem Block, der von der Oxidhaut befreit wird und danach bei Temperaturen zwischen 900 °C und 1300 °C geschmiedet oder warmgewalzt wird. Die Entfernung der Oxidhaut kann alternativ auch an zuerst geschmiedeten oder warmgewalzten Stangen erfolgen. Das gewünschte Maß kann durch Warmumformung von Bändern, Knüppeln oder Stangen erzielt werden. Warmgewalztes Material kann durch Strahlen, Schleifen oder Schälen von oberflächlichen Oxiden befreit werden. Das gewünschte Endmaß kann jedoch auch alternativ durch Kaltumformung von Bändern, Stangen oder Drähten erfolgen. Bei kaltgewalzten Bändern kann zur Befreiung von Oxidwurzeln aus dem Warmwalzvorgang ein Schleifvorgang zwischengeschoben werden. Sollte eine zu hohe Verfestigung nach einer Kaltumformung erfolgt sein, können eine oder mehrere Zwischenglühungen zur Erholung und Rekristallisation bei Temperaturen zwischen 400 °C und 1300 °C durchgeführt werden. Die Dicke oder der Durchmesser für die Zwischenglühung sollte dabei so gewählt werden, dass vorzugsweise eine Kaltverformung > 40% bis zur Enddicke erreicht wird, besonders bevorzugt eine Kaltverformung von > 80%.

Als letzter Bearbeitungsschritt erfolgt eine Wärmebehandlung bei Temperaturen zwischen 700 °C und der Solidustemperatur $T_m$ (typischerweise jedoch maximal 1200°C), die auch als magnetische Schlussglühung bezeichnet wird. Die Schlussglühung erfolgt bevorzugt unter reiner trockener Wasserstoffatmosphäre. Glühungen unter Schutzgas oder im Vakuum sind ebenfalls möglich.

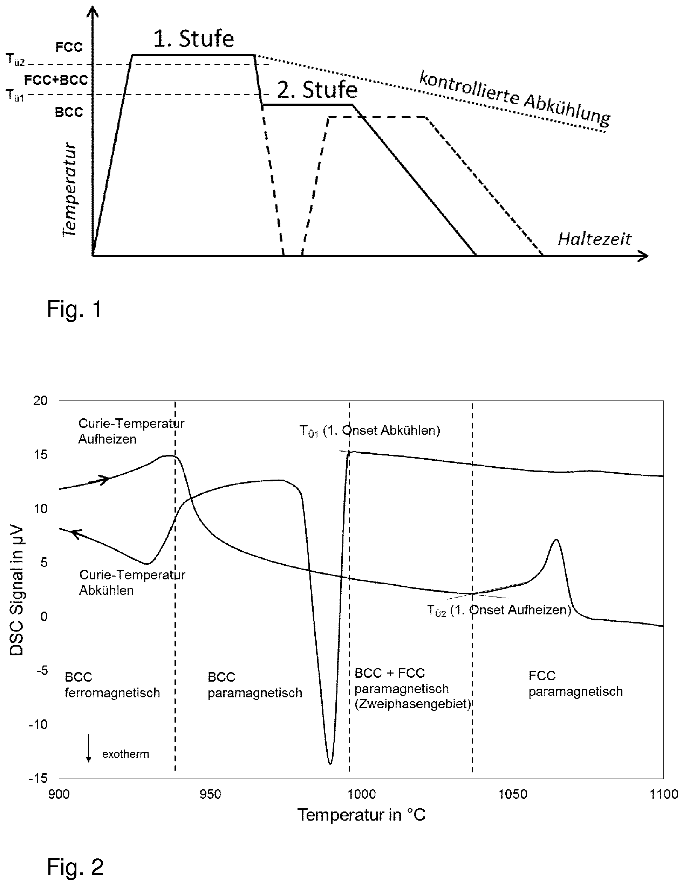

Figur 1 zeigt eine schematische Darstellung von drei Varianten der erfindungsgemäßen Wärmebehandlung in Bezug auf die Phasenübergänge und insbesondere auf die FCC, FCC+BCC und BCC-Gebiete.

Bei Variante 1, die mit der durchgezogenen Linie in Figur 1 dargestellt ist, erfolgt nach einer ersten Glühstufe im FCC- Gebiet direkt anschließend eine zweite Glühstufe im BCC- Gebiet. Die zweite Glühstufe ist optional und kann verwendet werden, um die weichmagnetischen Eigenschaften, insbesondere die Permeabilität und die Hystereseverluste weiter zu verbessern. Bei Variante 2, die mit der gestrichelten Linie in Figur 1 dargestellt ist, wird von der ersten Glühstufe im FCC-Gebiet zuerst auf Raumtemperatur abgekühlt. Die zweite Glühstufe im BCC-Gebiet erfolgt zu einem späteren Zeitpunkt. Bei Variante 3, die mit der gepunkteten Linie in der Figur 1 dargestellt ist, wird von der Glühstufe im FCC-Gebiet auf Raumtemperatur kontrolliert abgekühlt. Eine derart kontrollierte Abkühlung kann in Variante 1 auch beim Abkühlen von der 1. Stufe auf die 2. Stufe erfolgen (in Figur 1 nicht dargestellt).

Erfindungsgemäß kann somit die Glühung entweder zweistufig erfolgen oder durch kontrollierte Abkühlung von einer Temperatur oberhalb der oberen Übergangstemperatur. Kontrollierte Abkühlung bedeutet, dass eine definierte Abkühlrate zur optimalen Einstellung der weichmagnetischen Eigenschaften existiert. In jedem Fall erfolgt eine der Glühstufen im FCC-Gebiet. Die erfindungsgemäßen Glühungen können entweder in einem Durchlaufofen oder in einem stationären Ofen durchgeführt werden.

Bei der erfindungsgemäßen Glühung wird die Legierung mindestens einmal bei einer Temperatur oberhalb $T_{ü2}$ zwischen 900°C (wenn $T_{ü2}$ > 900°C, dann oberhalb $T_{ü2}$) und $T_m$ im austenitischen FCC-Gebiet geglüht, um ein großes Korn zu erzeugen, die Reinigungswirkung des Wasserstoffs auszunutzen und mögliche magnetisch ungünstige Texturen zu entfernen. Diese Stufe der Schlußglühung oberhalb $T_{ü2}$ erfolgt entweder in einer stationären Glühung oder in einem Durchlaufofen. Diese Stufe der Wärmebehandlung kann alternativ auch am Band in einem Durchlaufofen erfolgen. Anschließend wird die Legierung mit einer Rate von 10 bis 50.000°C pro Stunde, vorzugsweise mit einer Rate von 20-1.000 °C pro Stunde auf Raumtemperatur oder auf eine Temperatur zwischen 700°C und 1.000°C im BCC-Gebiet abgekühlt.

Eine zweite Glühstufe kann entweder durch Aufheizen, oder durch Halten im ferritischen BCC- Gebiet bei einer Temperatur zwischen 700°C und 1000°C (wenn $T_{Ü1}$ < 1000°C, dann unterhalb $T_{Ü1}$) erfolgen, um mögliche vorhandene Reste der FCC-Phase zu entfernen. Die Legierung wird dann nach einer erfolgten magnetischen Schlussglühung von der Glühtemperatur mit einer Rate von 10 bis 50.000°C pro Stunde, vorzugsweise mit einer Rate von 20-1.000 °C pro Stunde abgekühlt.

Die erfindungsgemäßen Legierungen weisen einen Phasenübergang von einem BCC-Phasengebiet in ein BCC/FCC Mischgebiet auf und bei noch etwas höherer Temperatur einen weiteren Phasenübergang von dem BCC/FCC Mischgebiet zu einem FCC Phasengebiet auf, wobei bei aufsteigender Temperatur der Phasenübergang zwischen dem BCC Phasengebiet und dem BCC/FCC Mischgebiet bei einer ersten Übergangstemperatur $T_{Ü1}$ und bei weiter ansteigender Temperatur der Übergang zwischen dem BCC/FCC Mischgebiet und dem FCC Phasengebiet bei einer zweiten Übergangstemperatur $T_{Ü2}$ stattfindet, wie in der Figur 2 dargestellt ist.

Die Temperatur, bei der die Phasenübergänge von einem BCC-Phasengebiet in ein BCC/FCC Mischgebiet von dem BCC/FCC Mischgebiet zu einem FCC Phasengebiet auftreten, können mittels DSC Messungen ermittelt werden. Figur 2 zeigt ein typischer Verlauf einer DSC Aufheiz- und Abkühlkurve beim Phasenübergang am Beispiel von Charge 930423. Die Curie-Temperatur und die 1. Onset- Temperaturen des Phasenübergangs sind in der Figur 2 auch dargestellt.

In den folgenden Figuren sind die Ergebnisse von DSC Messungen zu sehen, die mit einem dynamischen Wärmestrom-Differenz-Kalorimeter der Fa. Netzsch durchgeführt wurden. In einem Ofen befinden sich zwei identische Tiegel aus Korund ($Al_2O_3$), von denen einer mit der eigentlichen Messprobe bestückt ist und der andere mit einer Kalibrierprobe als Referenz dient. Beide Tiegel erfahren dasselbe Temperaturprogramm, das aus einer Kombination von Aufheizen, Abkühlen oder isothermen Abschnitten bestehen kann. Durch die Messung der Temperaturdifferenz an einer definierten Wärmeleitstrecke zwischen Probe und Referenz wird die Wärmestromdifferenz quantitativ erfasst. Die verschiedenen bei einer DSC-Messung bestimmten Maxima und Minima (Peaks) lassen sich anhand ihrer Kurvenform bestimmten Arten von Phasenumwandlungen zuordnen. Es entstehen typische Kurvenverläufe, die materialspezifisch sind aber auch von den Messbedingungen abhängen, insbesondere der Probenmasse und den Heiz- und Abkühlraten. Um eine Vergleichbarkeit der Messungen zu gewährleisten wurden die Heiz- und Abkühlraten des Messgerätes und die Probenmassen der hier untersuchten Proben gleich gewählt. Die in diesen Untersuchungen verwendeten Aufheiz- und Abkühlraten betrugen jeweils 10 K/min, die Probenmasse war jeweils 50 mg.

Die Übergangstemperaturen $T_{Ü1}$ und $T_{Ü2}$ werden mittels einer DSC- Messung ermittelt, indem die Probe mit einer definierten Masse und Heizrate aufgeheizt wird. In dieser Messung werden die Übergangstemperaturen durch den 1. Onset repräsentiert. Diese in DIN 51005 ("Thermische Analyse") definierte Kenngröße wird auch als extrapolierte Peakanfangstemperatur bezeichnet, die den Beginn der Phasenumwandlung darstellt und definiert ist als Schnittpunkt der extrapolierten Anfangsbasislinie mit der Tangente durch den linearen Teil einer ansteigenden bzw. abfallenden Peakflanke. Der Vorteil dieser Kenngröße ist, dass sie unabhängig von Probenmasse und Aufheiz- bzw. Abkühlraten ist. Als Breite des Zweiphasengebietes wird die Differenz der Temperaturen des 1. Onset definiert:

$$T_{1.\ Onset}(BCC+FCC \rightarrow FCC) \quad - \quad T_{1.\ Onset}(BCC+FCC \rightarrow BCC) = T_{Ü2} - T_{Ü1}$$

$$\text{(aus DSC Aufheizen)} \qquad\qquad \text{(aus DSC Abkühlen)}$$

Der Einfluss der Zusammensetzung auf die Übergangstemperaturen $T_{Ü1}$ und $T_{Ü2}$ werden mittels einer DSC-Messung ermittelt.

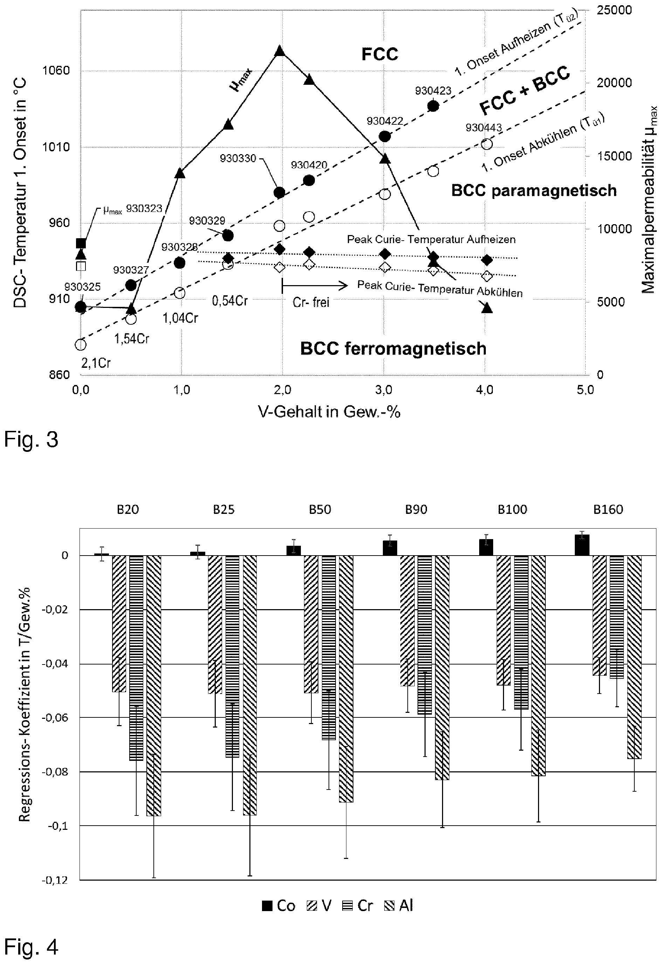

Figur 3 zeigt eine Darstellung der 1. Onset Temperaturen des Phasenübergangs der Fe-17Co-Cr-V-Legierungen mit steigendem V- Gehalt (Kreise) im Vergleich zu der binären Fe-17Co Legierung (Quadrate) für das Aufheizen (gefüllte Symbole) und die Abkühlung (offene Symbole). Die Zusammensetzungen der Legierungen sind in der Tabellen 1 bis 4 angegeben.

Die Peak- Curie-Temperaturen $T_c$ von Aufheizen (DSC) und Abkühlen (DSC) sind als Rauten dargestellt. Für die Sonderschmelzen mit niedrigeren V- Gehalten entspricht $T_c$ der Temperatur des Phasenübergangs. Die höchste gemessene Maximalpermeabilität $\mu_{max}$ (Dreiecke) ist auf der Sekundärachse aufgetragen. Die höchsten Maximalpermeabilitäten werden hier für V-Gehalte zwischen 1 und 3 Gew.-% erzielt.

Figur 3 zeigt, dass bei zunehmendem V-Gehalt die Phasenübergange $T_{Ü2}$ sowie $T_{Ü1}$ zu höheren Temperaturen stattfinden und dass die Breite des Zweiphasengebietes BCC+FCC, d.h. ($T_{Ü2} - T_{Ü1}$) größer wird.

Zur Einstellung der weichmagnetischen Eigenschaften wird eine Schlussglühung durchgeführt. Diese wurde im Rahmen dieser Untersuchung stets unter einer $H_2$-Schutzatmosphäre durchgeführt. Die verwendete $H_2$- Qualität war stets Wasserstoff 3.0 (oder Wasserstoff- technisch) mit einem $H_2$- Anteil > 99,9%, wobei $H_2O \leq 40$ppm-mol, $O_2 \leq 10$

ppm-mol, $N_2 \leq 100$ ppm-v ist.

Die magnetischen Eigenschaften der Legierungen wurden anhand von Bandmaterial untersucht, welches aus 5 kg schweren Gussblöcken gefertigt wurde. Die Legierungen wurden unter Vakuum erschmolzen und anschließend in eine Flachkokille bei ca. 1500 °C abgegossen. Nach dem Abfräsen der Oxidhaut von den einzelnen Gussblöcken wurden die Blöcke zu 3,5mm dicken Bändern bei einer Temperatur von ca. 1000 °C bis 1300 °C warmgewalzt. Die resultierenden warmgewalzten Bänder wurden danach gebeizt um die Oxidhaut zu entfernen und anschließend auf eine Dicke von 0,35mm kaltgewalzt. Zur Charakterisierung der magnetischen Eigenschaften wurden aus dem Band Probenringe gestanzt und Widerstandsstreifen geschnitten. Der elektrische Widerstand p wurde an den Widerstandsstreifen bestimmt. Die maximale Permeabilität $\mu_{max}$, die Koerzitivfeldstärke $H_c$, die Induktionen B bei Feldstärken von 20, 25, 50, 90, 100 sowie 160A/cm, die Remanenz $B_r$ und die Hystereseverluste $P_{Hyst}$ wurde an den hergestellten Probenringen im geglühten Zustand bei Raumtemperatur gemessen. Die Bestimmung der Hystereseverluste erfolgte dabei durch die Messung der Verluste bei einer Induktionsamplitude von 1,5T für verschiedene Frequenzen. Der durch lineare Regression ermittelte Achsenabschnitt in der Auftragung P/f über f ergibt die Hystereseverluste.

Von den Gussblöcken wurde eine Scheibe für die Analyse der Elemente abgesägt. Das Ergebnis der Analyse ist in Tabellen 1 bis 4 zu sehen. Tabelle 1 zeigt die nasschemische Analyse der metallischen Elemente zur Festlegung der Grundzusammensetzung. Rest Eisen, weitere Elemente < 0,01% sind nicht angegeben, wobei die Angaben in Gew.-% sind. Tabelle 2 zeigt die Analyse der nichtmetallischen Verunreinigungen der Chargen aus Tabelle 1 per Heißgasextraktion, wobei die Angaben in Gew.-% sind. Tabelle 3 zeigt die nasschemische Analyse der metallischen Elemente zur Feinabstimmung der Grundzusammensetzung und zur Begrenzung der Zusammensetzungsbereiche und der Verunreinigungen. Rest Eisen, weitere Elemente < 0,01% sind nicht angegeben. Angaben in Gew.-%. Bei den Chargen 930502 und 930503 wurde Eisen Einsatzmaterial mit einem höheren Verunreinigungsgrad eingesetzt. Tabelle 4 zeigt die Analyse der nichtmetallischen Verunreinigungen der Chargen aus Tabelle 3 per Heißgasextraktion, wobei die Angaben in Gew.-% sind.

Tabelle 3 zeigt weiterhin die Analyse der metallischen Elemente zweier Großschmelzen. Rest Eisen, P-Gehalt der Großschmelze 76/4988 ist 0,003 Gew.-%, P-Gehalt der Großschmelze 76/5180 ist 0,002 Gew.-%, weitere Elemente < 0,01% sind nicht angegeben. Tabelle 4 zeigt ebenfalls die Analyse der nichtmetallischen Verunreinigungen der beiden Großschmelzen aus Tabelle 3 per Heißgasextraktion, wobei die Angaben in Gew.-% sind.

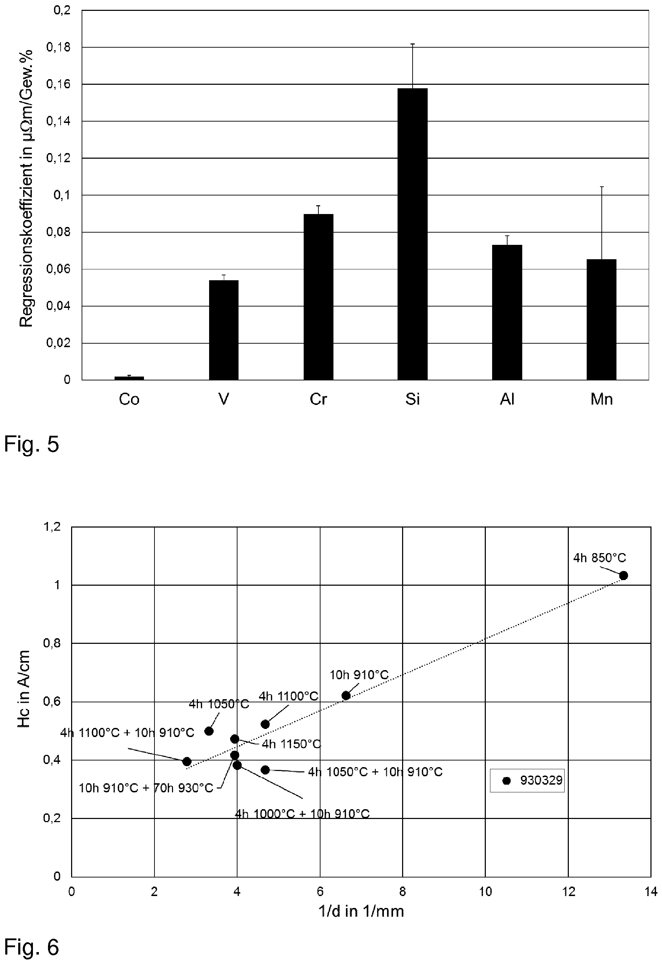

Die Figuren 4 und 5 zeigen eine statistische Auswertung des Einflusses der Hauptlegierungselemente Kobalt, Vanadium und Chrom auf die Induktionswerte nach optimaler Glühung und den elektrischen Widerstand mit Hilfe der multilinearen Regression.

Figur 4 zeigt Koeffizienten der Induktionswerte B nach multilinearer Regression. Die Zahlen hinter den B-Werten (z.B. B20) geben die Feldstärke in A/cm an. Die Balken zeigen die Änderung der Induktionswerte bei Zulegierung von 1 Gew.-% an. Dargestellt sind nur diejenigen Elemente, deren Regressionswert größer als der Regressionsfehler ist.

Figur 5 zeigt Koeffizienten des elektrischen Widerstandes nach multilinearer Regression. Die Balken zeigen die Änderung des elektrischen Widerstandes bei Zulegierung von 1 Gew.-% der jeweiligen Elemente.

Aus diesen Figuren erkennt man, dass Vanadium die niedrigen Induktionen weniger stark absenkt als Chrom. Dafür erhöht Chrom den elektrischen Widerstand stärker als Vanadium bei gleichem Sättigungsabfall (B160). Co erhöht die Sättigung (B160), hat aber wenig Einfluss auf die niedrigen Induktionswerte und den elektrischen Widerstand.

Tabelle 7 zeigt erfindungsgemäße Glühvarianten der Charge 93/0330 bei Banddicke 0,35mm im Vergleich zu nicht erfindungsgemäßen Glühvarianten, siehe Figur 1. Die Abkühlrate beträgt 150°C/h wenn nicht anders angegeben. Vor der Messung wurde nicht entmagnetisiert.

Figur 6 zeigt die Koerzitivfeldstärke Hc der Charge 930329 (Fe-17Co1,5V-0,5Cr) als Funktion des reziproken Korndurchmessers d für verschiedenen Glühungen. Tabelle 5 zeigt die mittlere Korngrößen d und Koerzitivfeldstärken $H_c$ und Maximalpermeabilitäten $\mu_{max}$ nach angegebener Glühung, siehe Figur 4. Die Abkühlrate war 150°C/h.

Tabelle 6 zeigt DSC Übergangstemperaturen und Curie- Temperaturen $T_c$. Angaben in °C. #NV bedeutet, dass in der DSC Messung kein Signal erkennbar ist.

Einer der Gründe für die sehr guten weichmagnetischen Eigenschaften ist die für Fe-Co Legierungen ungewöhnlich große Kornstruktur, die nach Glühung im FCC-Gebiet erreicht wird. So wurden nach kurzzeitiger Glühung von 4h bei 1050°C bei Charge 93/0330 (Fe-17Co-2V) Korngrößen von 354 - 447 $\mu$m festgestellt. Ähnlich große Körner können durch Glühung im BCC- Gebiet erst nach mehreren Tagen Glühdauer erreicht werden. Figur 6 zeigt beispielhaft anhand von Charge 930329 die Koerzitivfeldstärke $H_c$ gegenüber der reziproken Korngröße. Ein linearer Zusammenhang wird gezeigt.

Zum Vergleich der oben genannten Glühvarianten wurde beispielhaft die Charge 930330 untersucht. Tabelle 8 zeigt die Ergebnisse nach einer Stufenglühung der ersten Glühstufe (Charge 93/0330), siehe Figur 6. Die Abkühlrate beträgt 150°C/h. Solange die erste Glühung im unteren FCC- Gebiet erfolgt (hier bei 1050°C) zeigen alle Glühvarianten sehr gute weichmagnetische Eigenschaften, die wesentlich besser sind als eine Glühung im reinen BCC- Gebiet. Eine zweite Glühstufe im oberen BCC-Gebiet nach vorheriger erster Glühstufe im FCC- Gebiet verbessert die Werte weiter.

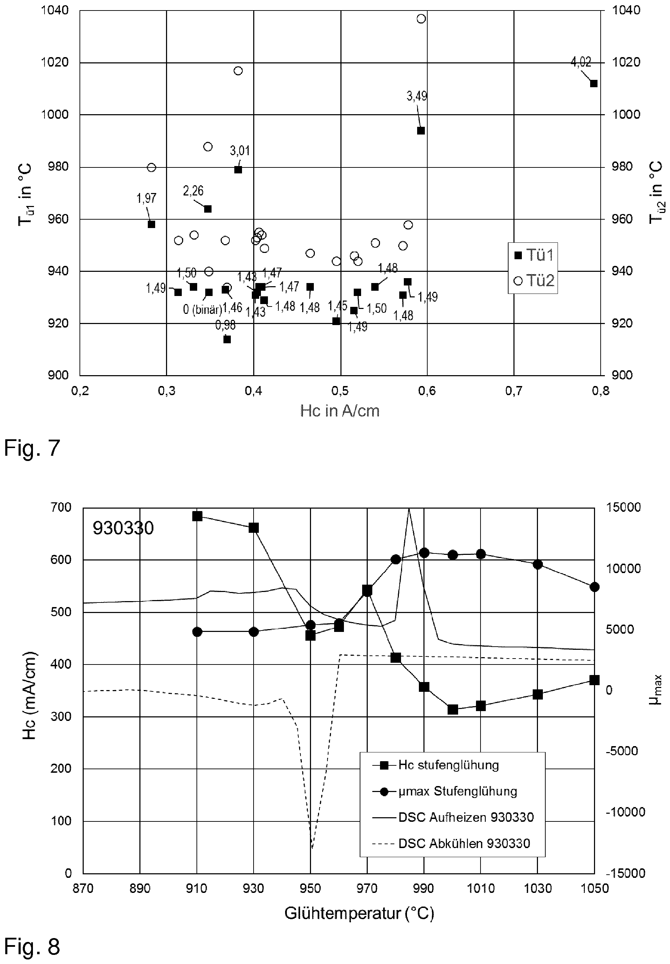

Figur 7 zeigt die Übergangstemperaturen $T_{ü1}$ und $T_{ü2}$ als Funktion der besten erreichten Koerzitivfeldstärke

$H_c$ der Fe-17Co Sonderschmelzen mit unterschiedlichen V-Gehalt. Die Beschriftungen geben den V Gehalt wider. Figur 7 zeigt, dass der V-Gehalt entscheidend für die Einstellung der weichmagnetischen Eigenschaften ist. Ist der V-Gehalt zu niedrig, kommt es zu keiner Anhebung von $T_{\ddot{U}1}$. Ist der V-Gehalt zu hoch, verschlechtern sich die weichmagnetischen Eigenschaften, da das Zweiphasengebiet $(T_{\ddot{u}2} - T_{\ddot{u}1})$ durch Vanadium aufgeweitet wird, siehe auch Figur 3 und Tabelle 6. Es ergibt sich somit ein Minimum der Koerzitivfeldstärke $H_c$ bei ca. 1,4 bis 2 Gew.-% Vanadium.

Um die optimale Glühtemperatur zu finden, werden Proben bei unterschiedlichen Glühtemperaturen geglüht und anschließend gemessen. Wenn die Anzahl der notwendigen Glühungen größer ist als die Anzahl der vorhandenen Proben, wird üblicherweise der gleiche Probensatz bei verschiedenen Temperaturen geglüht. Bei dieser sogenannten "Stufenglühung" geht man von einer niedrigen Start- Temperatur aus und glüht schrittweise bei höheren Temperaturen. Die Stufenglühung kann angewendet werden um z.B. Ausscheidungsbereiche, Rekristallisationstemperaturen oder Phasenumwandlungen aufzuspüren, die direkten Einfluss auf die Magnetik haben.

Figur 8 zeigt Maximalpermeabilität und Koerzitivfeldstärke nach Stufenglühung der ersten Glühstufe. Tabelle 9 zeigt die Ergebnisse nach einer Stufenglühung der Charge 93/0330 unterhalb des Phasenübergangs nach vorheriger erster Glühstufe 4h 1000°C oberhalb des Phasenübergangs. Die Abkühlrate beträgt 150°C/h. Ein ausgedehntes Maximum um 1000°C ist erkennbar. Zum Vergleich mit der Phasenlage ist die zugehörige DSC Messung mit eingezeichnet.

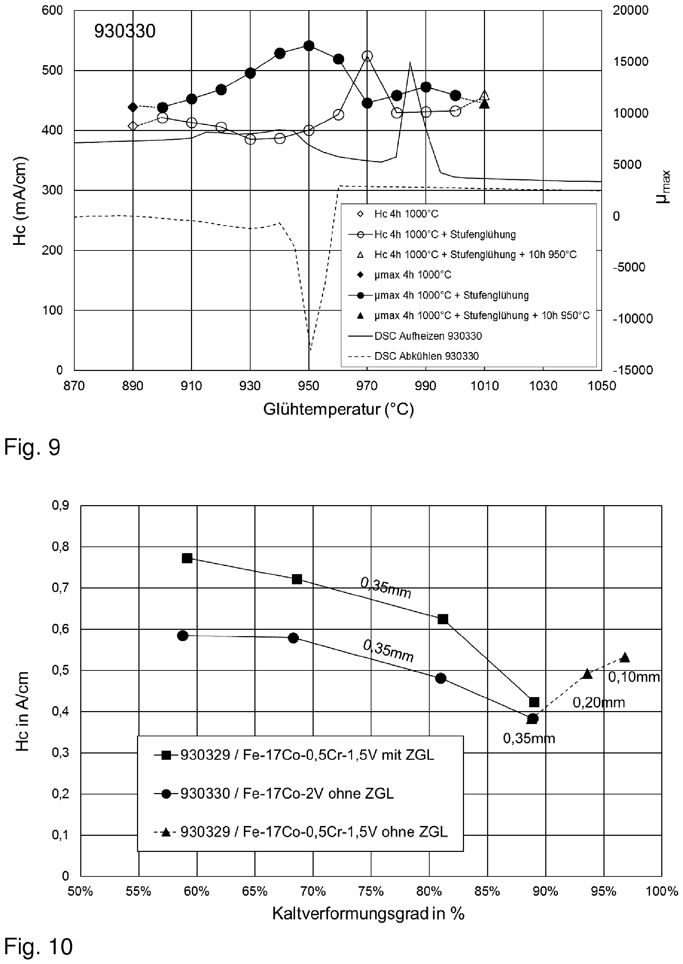

Figur 9 zeigt Maximalpermeabilität und Koerzitivfeldstärke nach Stufenglühung der zweiten Glühstufe unterhalb des Phasenübergangs (Kreise) nach vorheriger ersten Glühstufe 4h 1000°C oberhalb des Phasenübergangs (Rauten). Vor der Messung der statischen Werte wurde nicht entmagnetisiert. Ein Maximum bei 950°C ist erkennbar. Nach der letzten Glühung der Stufenglühung bei 1000°C wurden die Proben nochmals 10h bei 950°C geglüht (Dreiecke). Die ursprünglichen Werte der Stufenglühung bei 950°C werden nicht mehr erreicht. Durch das nochmalige Durchfahren des Zweiphasengebietes BCC+FCC kommt es zu einer Schädigung der weichmagnetischen Eigenschaften.

Die magnetischen Eigenschaften waren für Legierungen verschiedener Zusammensetzungen nach unterschiedlichen Glühungen gemessen. Die Ergebnisse sind in den Tabellen 10 bis 24 zusammengefasst. Die Werte $B_{20}$, $B_{25}$, $B_{50}$, $B_{90}$, $B_{100}$, $B_{160}$ (T) $H_c$ (A/cm), $\mu_{max}$, Br (T) und $P_{Hyst.}$ 1,5T (Ws/kg) sind angegeben.

Tabelle 10 zeigt die Ergebnisse nach einer Glühung einer Auswahl der Chargen bei 850°C für 4h mit einer Abkühlrate von 150°C/h. Diese Ausführungsbeispiele sind nicht erfindungsgemäß.

Tabelle 11 zeigt die Ergebnisse nach einer Glühung einer Auswahl der Chargen 10h bei 910°C mit einer Abkühlrate von 150°C/h. Vor der Messung der statischen Werte wurde nicht entmagnetisiert. Diese Ausführungsbeispiele sind nicht erfindungsgemäß.

Tabelle 12 zeigt die Ergebnisse nach einer Glühung einer Auswahl der Chargen bei 10h bei 910°C und Abkühlung auf Raumtemperatur und anschließend 70h bei 930°C. Die Abkühlrate beträgt 150°C/h. Vor der Messung der statischen Werte wurde nicht entmagnetisiert. Diese Ausführungsbeispiele sind nicht erfindungsgemäß. Tabelle 13 zeigt die Ergebnisse nach einer Glühung einer Auswahl der Chargen 4h bei 1000°C. Abkühlrate 150°C/h. Vor der Messung der statischen Werte wurde nicht entmagnetisiert.

Tabelle 14 zeigt die Ergebnisse nach einer Glühung einer Auswahl der Chargen bei der ersten Glühstufe 4h bei 1000°C mit Abkühlung auf Raumtemperatur und anschließender zweiten Glühstufe 10h bei 910°C. Die Abkühlrate beträgt 150°C/h. Vor der Messung der statischen Werte wurde nicht entmagnetisiert.

Tabelle 15 zeigt die Ergebnisse nach einer Glühung aller Fe-Co-V-Cr Chargen für 4h bei 1050°C. Abkühlrate 150°C/h. Vor der Messung der statischen Werte wurde nicht entmagnetisiert. Die Widerstände der Chargen 930322 bis 930339 wurden nach einer Glühung von 4h bei 850°C gemessen. Bei den V- reichen Chargen 930422 und 930423 liegt $T_{\ddot{u}2}$ zu knapp unterhalb 1050°C. Angepasste Glühstufen sind in Tabelle 18 angegeben.

Tabelle 16 zeigt die Ergebnisse nach einer Glühung aller Fe-Co-V-Cr Chargen bei der ersten Glühstufe 4h bei 1050°C mit Abkühlung auf Raumtemperatur und anschließender zweiter Glühstufe 10h bei 910°C. Abkühlrate 150°C/h. Vor der Messung wurde entmagnetisiert. Bei den grau markierten Chargen liegt $T_{\ddot{u}1}$ entweder zu knapp oder zu weit oberhalb 910°C. Angepasste Glühstufen sind in Tab. 17 zu finden.

Tabelle 17 zeigt die Ergebnisse nach einer Anpassung der Glühungen derjenigen Chargen, bei denen die Übergangstemperaturen der DSC Messung (Tabelle 6) nicht oder nur knapp erfindungsgemäß mit der Glühung 4h 1050°C + 10h 910°C (Tabelle 15 und 16) übereinstimmen. Die Abkühlrate beträgt 150°C/h. Bei den Glühungen 4h 1050°C wurde vor der Messung nicht entmagnetisiert, bei allen anderen Glühungen wurde vor der Messung entmagnetisiert.

Tabelle 18 zeigt die Ergebnisse nach Glühungen der Charge 930423 in unterschiedlichen Phasengebieten zur Klärung des Einflusses des ferromagnetischen und paramagnetischen BCC- Bereiches auf die magnetischen Eigenschaften, siehe auch Figur 2. Die Abkühlrate beträgt 150°C/h. Bei den Glühungen 4h 1050°C wurde vor der Messung nicht entmagnetisiert, bei allen anderen Glühungen wurde vor der Messung entmagnetisiert.

Tabelle 19 zeigt die Ergebnisse nach einer Glühung einer Auswahl der Chargen 4h bei 1050°C mit anschließender langsamer Abkühlung 50°C/h auf Raumtemperatur. Vor der Messung der statischen Werte wurde nicht entmagnetisiert.

Tabelle 20 zeigt die Ergebnisse nach einer Glühung einer Auswahl der Chargen 4h bei 1050°C mit langsamer Abkühlung 50°C/h auf Raumtemperatur und zweiter Glühstufe bei 10h bei 910°C mit Ofenkühlung ca. 150°C/h. Vor der Messung der statischen Werte wurde nicht entmagnetisiert.

Tabelle 21 zeigt die Ergebnisse nach einer Glühung einer Auswahl der Chargen 4h bei 1100°C. Die Abkühlrate beträgt 150°C/h. Vor der Messung der statischen Werte wurde bis auf die Chargen 930422 und 930423 nicht entmagnetisiert.

Tabelle 22 zeigt die Ergebnisse nach einer Glühung einer Auswahl der Chargen bei erster Glühstufe 4h bei 1100°C und Abkühlung auf Raumtemperatur und zweiter Glühstufe 10h bei 910°C. Die Abkühlrate beträgt 150°C/h. Vor der Messung der statischen Werte wurde nicht entmagnetisiert.

Tabelle 23 zeigt die Ergebnisse nach einer Glühung einer Auswahl der Chargen 4h bei 1150°C. Die Abkühlrate beträgt 150°C/h. Vor der Messung der statischen Werte wurde bis auf Charge 930442 nicht entmagnetisiert.

Tabelle 24 zeigt die Ergebnisse nach einer Glühung einer Auswahl der Chargen bei erster Glühstufe 4h bei 1150°C und Abkühlung auf Raumtemperatur und zweiter Glühstufe 10h bei 910°C. Die Abkühlrate beträgt 150°C/h. Vor der Messung der statischen Werte wurde nicht entmagnetisiert.

Tabelle 25 zeigt die Daten für die Maximalpermeabilität und die Dichte für verschiedene Legierungszusammensetzungen Fe-17Co mit verschiedenen Zusätzen. Ausgehend von der binären Legierung Fe-16,98Co, deren gemessener Dichte von 7,942g/cm$^3$, und deren mittlerem Atomgewicht von 56,371g/mol (berechnet aus den analysierten Gehalten der metallischen Legierungselemente) wird für Fe-17Co-Legierungen mit Zusätzen an V, Cr, Mn, Si, Al und anderen metallischen Elementen deren fiktive Dichte anhand deren mittlerem Atomgewicht rechnerisch bestimmt und mit der gemessenen Dichte verglichen. So ist z.B. für eine Legierung Fe-17,19Co-1,97V (Charge 93/0330) das mittlere Atomgewicht 56,281g/mol. Man kann nun per Dreisatz 7,942g/cm$^3$ x 56,281/56,371 = 7,929g/cm$^3$ eine fiktive Dichte ausrechnen, die diese Legierung Fe-17,19Co-1,97V haben müsste, wenn deren Gitterkonstante gegenüber der binären Fe-16,98Co-Legierung unverändert wäre. In der Realität misst man aber an dieser Legierung mit 7,909g/cm$^3$ eine Dichte, welche um -0,26% niedriger als die fiktive Dichte 7,929g/cm$^3$ liegt. Das bedeutet, dass die Gitterkonstante dieser Legierung um ca. 0,085% größer sein muss, als die der binären Legierung.

Tabelle 26 zeigt die Daten für ausgewählte Chargen und Glühungen, welche besonders hohe Maximalpermeabilitäten und gleichzeitig niedrige Hystereseverluste aufweisen, und dies bei sehr hohem Niveau der Induktion B bei 100A/cm ($B_{100}$).

Tabelle 27 zeigt die Daten für die Verunreinigungen C und S in ppm für ausgewählte Chargen und Glühungen. Durch eine Glühung bei 1050°C unter Wasserstoff werden diese Verunreinigungen effektiv reduziert.

Tabelle 28 zeigt Magnetwerte für die beiden Großschmelzen 76/4988 und 76/5180. Die Notation A bzw. B bedeutet aus Block A bzw. aus Block B - die Schmelzen wurde jeweils in zwei Kokillen abgegossen. Der spezifische Widerstand der Charge 76/4988 beträgt 0,306μΩm, der der Charge 76/5180 beträgt 0,318μΩm.

Tabelle 29 zeigt für verschiedene Chargen die Übergangstemperaturen $T_{ü1}$ und $T_{ü2}$ und die besten erreichten Koerzitivfeldstärke $H_c$ dieser Fe-17Co Sonderschmelzen mit unterschiedlichem V-Gehalt, inklusive Angabe der jeweiligen Glühbehandlung. Die Legierungen enthalten zusätzlich bis zu in Summe 0,6 Gew.-% an Cr und/oder Si. Die graphische Darstellung dieser Daten zeigt Figur 7.

Die Figuren 8 und 9 zeigen, dass der bei der erfindungsgemäßen Legierung 930330 vorhandene BCC/FCC-Phasenübergang starken Einfluss auf die Maximalpermeabilität und Koerzitivfeldstärke hat.

Bei der ersten Glühstufe (Figur 8) stimmt der 1.Onset des Abkühlens (= $T_{Ü1}$, untere Grenze Zweiphasengebiet) mit dem Anstieg von $\mu_{max}$ überein, $\mu_{max}$ wird maximal bzw. Hc wird minimal über dem 1. Onset des Aufheizens (= $T_{Ü2}$, obere Grenze Zweiphasengebiet). Zu höheren Temperaturen im FCC- Gebiet wird die Magnetik wieder schlechter.

Bei der zweiten Glühstufe (Figur 9) wird $\mu_{max}$ maximal unterhalb $T_{Ü1}$ und fällt mit dem Eintritt in das Zweiphasengebiet ab. Überschreitet man das Zweiphasengebiet und glüht erneut unterhalb $T_{Ü1}$ (hier 950°C) wird das Maximum von $\mu_{max}$ nicht mehr erreicht, vermutlich aufgrund des mit dieser Probe zweimaligen Durchfahrens des BCC+FCC-Mischgebietes und der dadurch zusätzlich entstandenen Korngrenzen.

Zusammenfassend lässt sich feststellen, dass die besten magnetischen Eigenschaften erreicht werden, wenn die erste Glühstufe oberhalb $T_{Ü2}$ stattfindet und die zweite Glühstufe unterhalb $T_{Ü1}$.

Der Einfluss der Kaltverformungsgrad auf die magnetischen Eigenschaften wird untersucht.

Figur 10 zeigt Koerzitivfeldstärke $H_c$ der Chargen 930329 (Fe-17Co-0,5Cr-1,5V) und 930330 (Fe-17Co-2,0V) in Abhängigkeit vom Kaltverformungsgrad. Bei "ohne Zwischenglühung" entspricht die Warmwalzdicke einem KV von 0%, bei "mit ZGL" entspricht die Dicke der Zwischenglühung einem KV von 0%.

Der Kaltverformungsgrad KV bei Band der Enddicke $D_2$ ist definiert als die prozentuale Dickenabnahme bezogen auf eine nicht kaltverformte Ausgangsdicke $D_1$, da beim Walzen die Breitung vernachlässigt werden kann. Die nicht kaltverformte Ausgangsdicke $D_1$ kann beispielsweise durch Warmwalzen oder durch eine Zwischenglühung (ZGL) realisiert werden.

$$KV\ [\%] = [(D_1-D_2)/D_1] \times 100$$

In Figur 10 erkennt man beispielhaft an der Koerzitivfeldstärke $H_c$, dass bei steigendem KV, realisiert durch Zwischenglühung bei unterschiedlichen $D_1$ = 1,3mm; 1,0mm; 0,60mm und gleicher Enddicke $D_2$ = 0,35mm, die Magnetik bis ca. 90% KV besser wird.

Geht man von einem konstanten $D_1$ bei 3,5mm (Warmwalzdicke) aus und realisiert die Kaltverformung durch hohe Walzgrade an 0,20mm und 0,10mm, ergibt sich wieder ein Anstieg von $H_c$, der mit der gestrichelten Linie dargestellt ist. Dies lässt sich dadurch erklären, dass bei höchsten Kaltverformungsgraden zu viele Keimstellen für Körner entstehen und sich die Körner beim Wachstum während der Glühung gegenseitig behindern. So hat die Legierung der Charge 930329 (Fe-17Co-0,5Cr-1,5V) (jew. in Gew.-%) ohne Zwischenglühung gefertigt nach der Schlußglühung für 4h bei $T_1$=1000°C und für 10h bei $T_2$=910°C bei Enddicke 0,35mm eine mittlere Korngröße von 0,25mm, bei Enddicke 0,20mm eine mittlere Korngröße von 0,21mm, und bei Enddicke 0,10mm eine mittlere Korngröße von 0,15mm. Es gibt daher einen optimalen Kaltverformungsgrad, der bei etwa 90% liegt.

Um zu untersuchen, ob eine Texturbildung maßgeblich für die magnetischen Eigenschaften ist, wurde die Textur mittels Röntgenbeugung an Blechen der Abmessung 50 mm x 45 mm bestimmt.

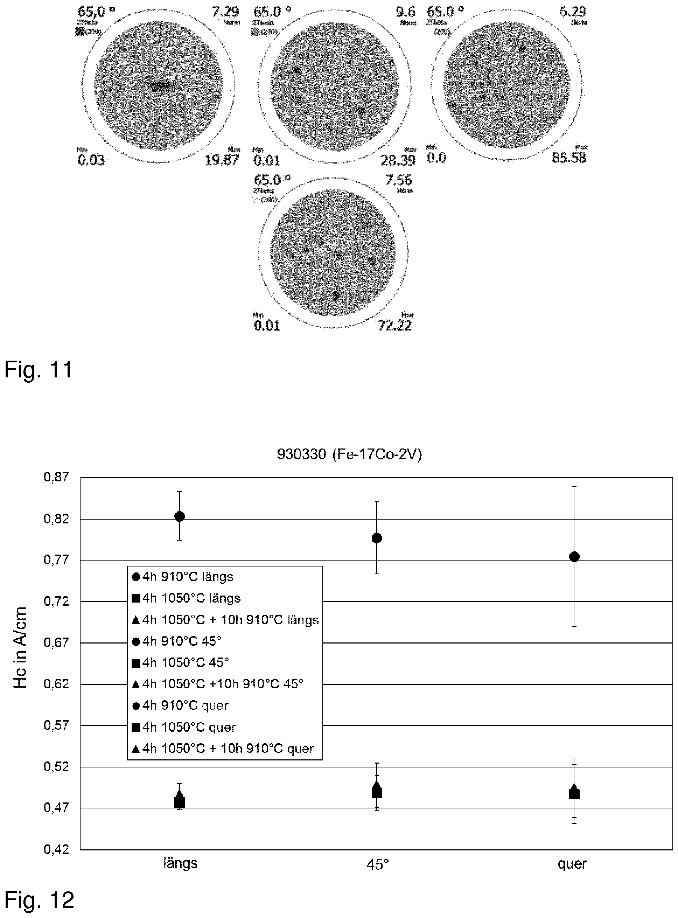

Figur 11 zeigt (200)-Polfiguren von Charge 93/0330 (Fe-17Co-2V). Links ist das Ergebnis für ein ungeglühtes Blech mit einer Walztextur. In der Mitte ist das Ergebnis für ein Blech, das bei 910°C für 10h geglüht wird und eine nur sehr schwach ausgeprägte Textur aufweist. Rechts ist das Ergebnis für ein Blech, das bei 1050°C für 4h geglüht wird und keine Textur aufweist. Unten ist das Ergebnis für ein Blech, das bei 1050°C für 4h und 910°C für 10h geglüht wird und keine Textur aufweist.

Dabei wurde winkelabhängig Cu-$K_\alpha$ = 0,154059295 nm auf die Probe gestrahlt und die gebeugte Intensität mit einer 2 mm Lochblende gemessen. Als Detektor kam ein Halbleiterstreifendetektor Lynxexe mit 2° Winkelbereich und energiedispersivem Betrieb zum Einsatz. Wie z.B. die (200)-Polfiguren zeigen, liegt im ungeglühten, walzharten Zustand eine Walztextur vor, die sich nach der Glühung im FCC-Gebiet bei 4h 1050°C, $H_2$ vollständig aufgelöst hat.

Das Fehlen einer Textur deckt sich auch mit den Messungen des richtungsabhängigen $H_c$. Dazu wurden jeweils fünf $H_c$-Streifen der Abmessung 50mm x 10mm aus verschiedenen Richtungen relativ zur Walzrichtung entnommen (längs = 0°, diagonal=45°, quer=90°) und im Förster- Koerzimaten gemessen.

Figur 12 zeigt die Koerzitivfeldstärke $H_c$ der Charge 930330 (Fe-17Co-2V) gemessen parallel zur Walzrichtung ("längs"), in 45° zur Walzrichtung und senkrecht zur Walzrichtung ("quer") für die angegebenen Glühungen. Jeder Punkt ist Mittelwert aus fünf Messungen. Die Fehlerbalken stellen die Standardabweichung dar.

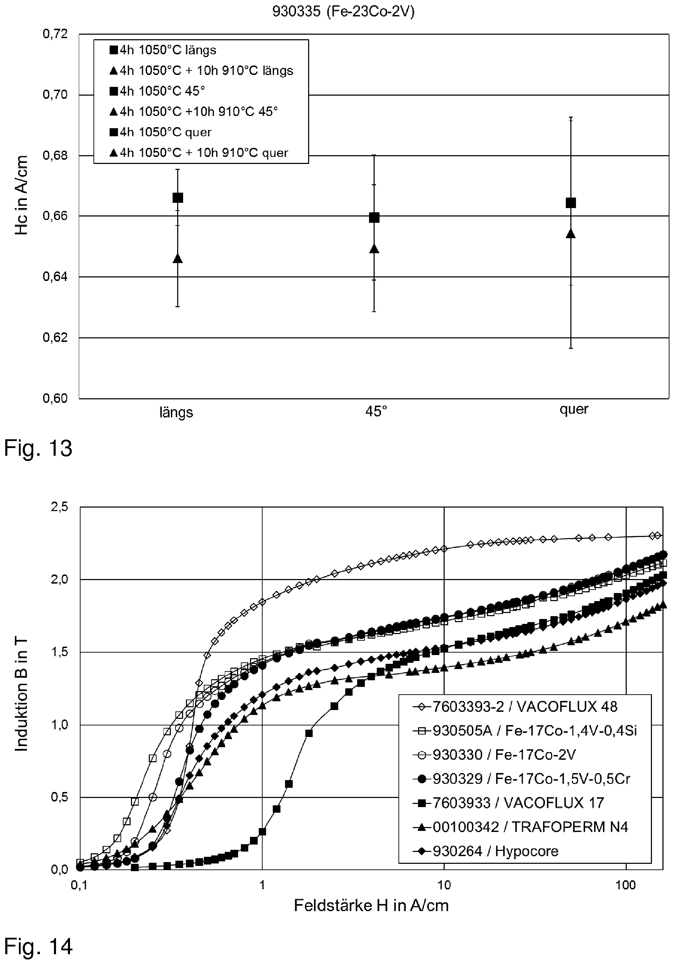

Figur 13 zeigt die Koerzitivfeldstärke Hc der Charge 930335 (Fe-23Co-2V) gemessen parallel zur Walzrichtung ("längs"), in 45° zur Walzrichtung und senkrecht zur Walzrichtung ("quer") für die angegebenen Glühungen. Jeder Punkt ist Mittelwert aus fünf Messungen. Die Fehlerbalken stellen die Standardabweichung dar.

Nach Glühung 4h 910°C zeigen die Mittelwerte ein anisotropes Verhalten, berücksichtigt man den statistischen Fehler ist diese Anisotropie aber nicht signifikant. Diese leichte Anisotropie deckt sich aber mit den Resten an Textur aus der entsprechenden Polfigur (mittleres Bild oben der Figur 11). Nach der Glühung 4h 1050°C, und 4h 1050°C + 10h 910°C ergeben sich nahezu identische Mittelwerte im Hc. Die Glühung im FCC-Gebiet bei 1050°C löscht also die vorhandene Textur vollständig und die anschließende zweite Glühstufe im BCC-Gebiet bei 910°C bringt keine neue Textur hervor.

Im Folgenden werden die magnetischen Eigenschaften der erfindungsgemäßen Legierung beispielhaft anhand der erfindungsgemäßen Chargen 930329 (Fe-17Co-1,5V-0,5Cr) und 930330 (Fe-17Co-2,0V) mit Vergleichslegierungen verglichen. Als Vergleichslegierung sind ein typisches Elektroblech TRAFOPERM N4 (Fe-2,5Si-Al-Mn) und drei FeCo-Legierungen VACOFLUX 17 (Fe-17Co-2Cr-Mo-V-Si), VACOFLUX 48 (Fe-49Co-1,9V) und eine HYPOCORE Sonderschmelze dargestellt. Die HYPOCORE Sonderschmelze wurde nach der von der Firma Carpenter Technologies veröffentlichten Zusammensetzung erschmolzen (Fe-5Co-2,3Si-1Mn-0,3Cr - Angaben in Gew.-%).

Figur 14 zeigt Neukurven der erfindungsgemäßen Chargen 930329 (Fe-17Co-1,5V-0,5Cr), 930505 (Fe-17Co-1,4V-0,4Si) und 930330 (Fe-17Co-2V) nach optimaler Glühung im Vergleich zu einem SiFe (TRAFOPERM N4) und FeCo Vergleichslegierungen.

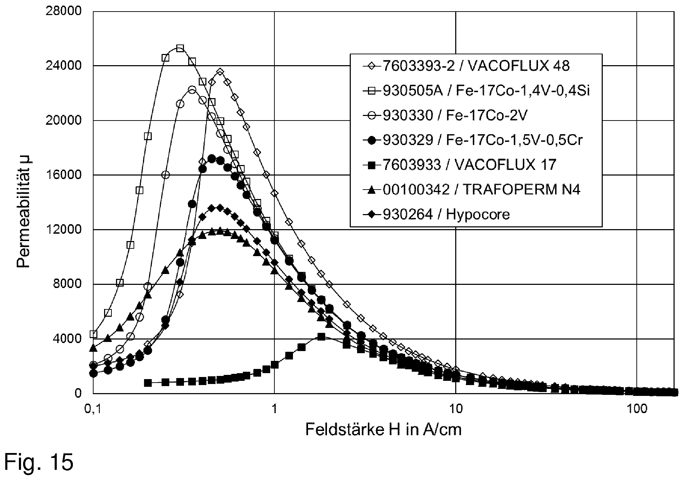

Figur 15 zeigt Permeabilität der erfindungsgemäßen Chargen 930329 (Fe-17Co-1,5V-0,5Cr), 930505 (Fe-17Co-1,4V-0,4Si) und 930330 (Fe-17Co-2V) nach optimaler Glühung im Vergleich zu einem pSiFe (TRAFOPERM N4) und FeCo Vergleichslegierungen.

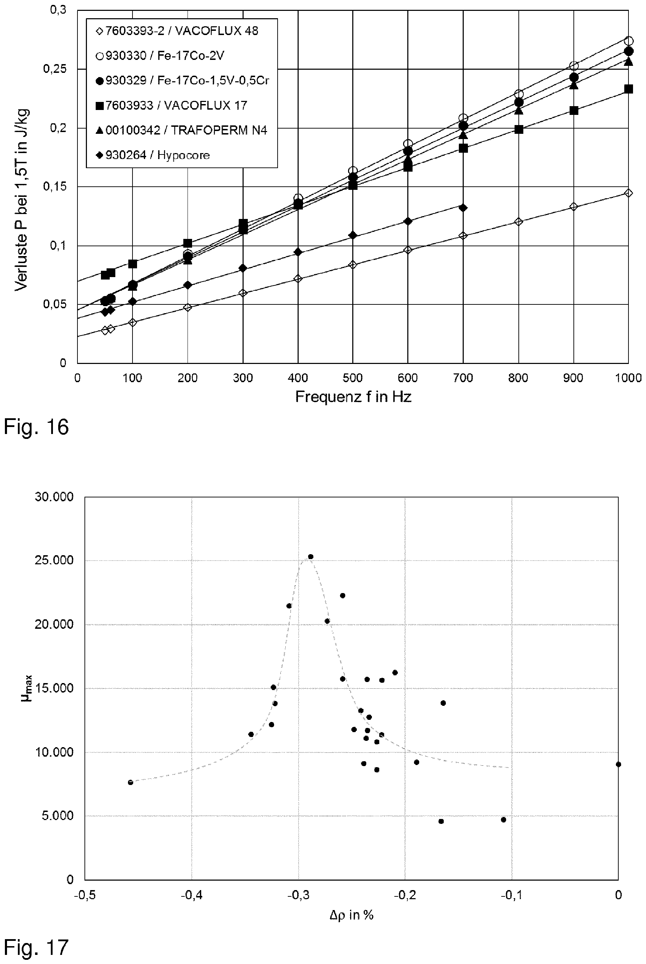

Figur 16 zeigt Verluste der erfindungsgemäßen Chargen 930329 (Fe-17Co-1,5V-0,5Cr) und 930330 (Fe-17Co-2V) nach optimaler Glühung bei einer Amplitude von 1,5T im Vergleich zu einem SiFe (TRAFOPERM N4) und FeCo Vergleichslegierungen. Die Hystereseverluste (y- Achsenabschnitt) von 930329, 930330 und TRAFOPERM N4 sind ähnlich. Die Blechdicke betrug jeweils 0,35mm.

Figur 17 zeigt die Maximalpermeabilität als Funktion des relativen Dichteunterschiedes $\Delta\rho$ für Legierungen auf der Basis Fe-17Co (Daten aus Tabelle 25). Man erkennt, dass man hohe Maximalpermeabilitäten für Legierungen mit einem relativen Dichteunterschied von -0,10% bis -0,35% erhält, besonders hohe Maximalpermeabilitäten für Legierungen mit einem relativen Dichteunterschied von -0,20% bis -0,35%. Dieser relative Dichteunterschied zur binären Fe-17Co-Legierung bedeutet letztlich, dass die Gitterkonstante dieser Legierungen etwas größer sein muss, als die der binären Legierung. Eine größere Gitterkonstante bedeutet durch den größeren Atomabstand im Kristallgitter eine niedrigere Aktivierungsenergie für Platzwechselvorgänge und damit eine bessere Diffusion. Dies trägt ebenfalls zum Kornwachstum bei und damit zu einer niedrigeren Koerzitivfeldstärke bzw. einer höheren Permeabilität.

Um die Eigenschaften erfindungsgemäßer Legierungen im Fertigungsmaßstab zu untersuchen, wurden zwei Großschmelzen in der normalen Fertigung durchgeführt. Dazu wurden 2,2t der gewünschten Zusammensetzung in einem Vakuuminduktionsofen aufgeschmolzen und nach Einstellung und Analyse der genauen Zusammensetzung in zwei Rundkokillen Durchmesser 340mm abgegossen. Nach Erstarrung und Abkühlung wurden die Rundblöcke der Kokille entnommen und für das Warmwalzen in einem gasbefeuerten Drehherdofen auf eine Temperatur von 1170°C erwärmt. Anschließend wurden die durchgewärmten Blöcke auf einer Blockwalze zu Brammen mit einem Querschnitt von 231 $\times$ 96mm$^2$ warmgewalzt. Diese Brammen wurden dann zur Entfernung der Oxidhaut allseitig auf ein Maß 226 $\times$ 93 mm$^2$ geschliffen.

Von Charge 76/4988 wurden beide so erhaltenen Brammen auf einer Warmwalzstraße zu Warmband ausgewalzt. Dazu wurden die Brammen zunächst bei einer Temperatur von 1130°C warmgelegt, und nach ausreichender Durchwärmung anschließend zu Warmband ausgewalzt. Für ein Band wurde dabei die Enddicke 2,6mm gewählt. Die Endwalztemperatur dieses Bandes betrug 900°C, die Haspeltemperatur betrug 828°C. Für das andere Band wurde die Enddicke 1,9mm gewählt. Die Endwalztemperatur dieses Bandes betrug 871°C, die Haspeltemperatur betrug 718°C. Beide Warmbänder wurden anschließend zur Entfernung der Oxidhaut gestrahlt. Ein Teil des Warmwalzbandes wurde für 1h bei 750°C unter H$_2$-Schutzgasatmosphäre zwischengeglüht. Ein anderer Teil des Warmwalzbandes wurde für 1h bei 1050°C unter H$_2$-Schutzgasatmosphäre zwischengeglüht. Ein restlicher Teil des Warmwalzbandes blieb ohne Zwischenglühung. Anschließend erfolgte das Walzen an Enddicke, wobei die Bänder bei einer Zwischendicke beidseitig von Oxiden befreit wurden. Vor dem Warmwalzen des Bandes wurden zusätzlich von den Brammen Abschnitte der Dicke 15 mm abgesägt und daraus durch Warmwalzen (Dicke 3,5mm), Beizen des erhaltenen Warmbandes, und anschließendes Kaltwalzen im Technikum ein Band hergestellt. Die daran erhaltenen Ergebnisse sind zum Vergleich mit aufgeführt.

Von Charge 76/5180 wurde von beiden Brammen jeweils an beiden Enden eine Scheibe von 15mm Dicke abgesägt. Diese Scheiben wurden bei 1200°C angewärmt, und anschließend zu einem Band der Dicke 3,5mm warmgewalzt. Die so erhaltenen Warmbänder wurden zur Entfernung der Oxide gebeizt. Anschließend wurde auf Dicke 0,35mm kaltgewalzt.

Von allen so erhaltenen Bändern wurden Stanzringe angefertigt und einer abschließenden Glühbehandlung unterzogen. Tabelle 28 zeigt die erhaltenen Ergebnisse für die Magnetwerte. Der spezifische Widerstand der Charge 76/4988 beträgt 0,306$\mu\Omega$m, der der Charge 76/5180 beträgt 0,318$\mu\Omega$m.

Wie aus der Tabelle 28 ersichtlich ist, werden bessere magnetische Eigenschaften für Proben aus der Großschmelze gemessen, als für die kommerziell erhältlichen Legierungen mit einem Co-Gehalt von unterhalb 30 Gewichtsprozent wie VACOFLUX 17. Für eine Probe aus der Großschmelze 76/5180B wurde eine maximale Permeabilität von oberhalb 20.000 gemessen. Somit ist die erfindungsgemäße Legierung für die großtechnische Herstellung von bandförmigem Material mit verbesserten magnetischen Eigenschaften geeignet.

Die erfindungsgemäße Legierung zeigt für jede Feldstärke höhere Induktionen als VACOFLUX 17. Bei den Induktionen oberhalb des Knickpunktes liegt die neue Legierung zwischen TRAFOPERM N4 und VACOFLUX 48. Die luftflusskorrigierte Induktion B bei einer Feldstärke von 400 A/cm nahe der magnetischen Sättigung beträgt für beide Chargen 2,264 T (dies entspricht einer Polarisation J von 2,214T). Im Betriebsbereich typischer E-Motoren und Generatoren wird das Drehmoment daher für die neue Legierung höher ausfallen als für VACOFLUX 17 und TRAFOPERM N4.

Man erkennt an dem Vergleich von 930329 und 930330, dass Vanadium in Verbindung mit der oben beschriebenen Wärmebehandlung die Rechteckigkeit der Hystereseschleife erhöht und zwar so stark, dass je nach Zulegierung die Maximalpermeabilität fast so groß wie diejenige von VACOFLUX 48 ist. Dies ist erstaunlich und auf das äußerste überraschend, da bei ca. 50%Co ein Nulldurchgang der Anisotropiekonstante K$_1$ existiert, der bei 17%Co nicht vorhanden ist. Bei 17%Co ist im System Fe-Co im Gegenteil die Anisotropiekonstante K$_1$ sehr hoch.

Die sehr guten weichmagnetischen Eigenschaften zeigen sich auch bei den Hystereseverlusten, die auf vergleichbaren Niveau liegen wie bei TRAFOPERM N4. Mit zunehmender Frequenz steigen bei gleicher Banddicke die Verluste von TRAFOPERM N4 aufgrund des höheren elektrischen Widerstandes jedoch weniger stark an als bei der neuen Legierung. Dieser Effekt kann jedoch über die Wahl einer etwas geringeren Banddicke mit entsprechend niedrigeren Wirbelstromverlusten kompensiert werden.

Zusammengefasst wird eine hochpermeable weichmagnetische Legierung bereitgestellt, die bessere weichmagnetische Eigenschaften, wie z.B. eine deutlich höhere Permeabilität und niedrigere Hystereseverluste aufweist, und gleichzeitig eine höhere Sättigung bietet als bestehende und kommerziell erhältliche FeCo-Legierungen Gleichzeitig bietet diese neue Legierung aber signifikant niedrigere Hystereseverluste als die bisher bekannten und kommerziell erhältlichen Legierungen mit Co-Gehalten zwischen 10 und 30 Gew.-%, und vor allem auch ein deutlich höheres, bisher für derartige Legierungen nie erreichtes Permeabilitätsniveau. Die erfindungsgemäße Legierung kann auch großtechnisch und kostengünstig hergestellt werden.

In den folgenden Tabellen gehören die Beispiele nur dann zur Erfindung, wenn sie in den Parameterraum des Anspruchs 1 fallen.

Tabelle 1

| Charge 93/ | Co | Ni | Cr | Mn | V | Si | Al | Mo | Be | Cer |
|---|---|---|---|---|---|---|---|---|---|---|
| 0322 | 17,80 | < 0,01 | 0,01 | < 0,01 | < 0,01 | < 0,01 | < 0,01 | 2,50 | < 0,01 | - |
| 0323 | 16,98 | < 0,01 | < 0,01 | < 0,01 | < 0,01 | < 0,01 | < 0,01 | < 0,01 | < 0,01 | - |
| 0324 | 23,20 | < 0,01 | < 0,01 | < 0,01 | < 0,01 | < 0,01 | < 0,01 | < 0,01 | < 0,01 | - |
| 0325 | 17,05 | < 0,01 | 2,01 | < 0,01 | < 0,01 | < 0,01 | < 0,01 | < 0,01 | < 0,01 | - |
| 0326 | 23,25 | < 0,01 | 2,03 | < 0,01 | < 0,01 | < 0,01 | < 0,01 | < 0,01 | < 0,01 | - |
| 0327 | 17,14 | < 0,01 | 1,54 | < 0,01 | 0,50 | < 0,01 | < 0,01 | < 0,01 | < 0,01 | - |
| 0328 | 17,08 | < 0,01 | 1,04 | < 0,01 | 0,98 | < 0,01 | < 0,01 | < 0,01 | < 0,01 | - |
| 0329 | 17,12 | < 0,01 | 0,54 | < 0,01 | 1,46 | < 0,01 | < 0,01 | < 0,01 | < 0,01 | - |
| 0330 | 17,19 | < 0,01 | < 0,01 | < 0,01 | 1,97 | < 0,01 | < 0,01 | < 0,01 | < 0,01 | - |
| 0331 | 23,09 | 0,012 | 1,04 | < 0,01 | 0,99 | < 0,01 | < 0,01 | < 0,01 | < 0,01 | - |
| 0332 | 22,97 | < 0,01 | 1,04 | < 0,01 | 0,99 | 0,19 | < 0,01 | < 0,01 | < 0,01 | - |
| 0333 | 22,96 | < 0,01 | 1,03 | < 0,01 | 0,98 | < 0,01 | 0,18 | < 0,01 | < 0,01 | - |
| 0334 | 23,01 | 0,022 | 1,04 | < 0,01 | 0,98 | < 0,01 | < 0,01 | < 0,01 | 0,06 | - |
| 0335 | 22,93 | < 0,01 | < 0,01 | < 0,01 | 1,95 | < 0,01 | < 0,01 | < 0,01 | < 0,01 | - |
| 0336 | 23,07 | < 0,01 | 1,04 | < 0,01 | 0,98 | < 0,01 | < 0,01 | < 0,01 | < 0,01 | <0,001 (Einsatz 0,02) |
| 0337 | 22,93 | < 0,01 | 1,03 | < 0,01 | 0,98 | < 0,01 | < 0,01 | < 0,01 | < 0,01 | <0,001 (Einsatz 0,01) |
| 0338 | 23,07 | < 0,01 | 1,04 | < 0,01 | 0,98 | < 0,01 | < 0,01 | < 0,01 | < 0,01 | <0,001 (Einsatz 0,005) |
| 0339 | 23,06 | 0,017 | < 0,01 | < 0,01 | < 0,01 | < 0,01 | 1,96 | < 0,01 | < 0,01 | - |

Tabelle 2

| Charge 93/ | C | S | O | N |
|---|---|---|---|---|
| 0322 | 0,0050 | 0,0012 | 0,0016 | 0,0012 |
| 0323 | 0,0045 | 0,0010 | 0,0150 | 0,0011 |
| 0324 | 0,0038 | 0,0010 | 0,0130 | 0,0009 |
| 0325 | 0,0031 | 0,0011 | 0,0100 | 0,0011 |
| 0326 | 0,0032 | 0,0011 | 0,0085 | 0,0012 |
| 0327 | 0,0032 | 0,0011 | 0,0097 | 0,0011 |
| 0328 | 0,0029 | 0,0011 | 0,0100 | 0,0013 |
| 0329 | 0,0028 | 0,0012 | 0,0093 | 0,0013 |
| 0330 | 0,0024 | 0,0011 | 0,0092 | 0,0014 |
| 0331 | 0,0030 | 0,0011 | 0,0087 | 0,0011 |
| 0332 | 0,0022 | 0,0011 | 0,0068 | 0,0012 |
| 0333 | 0,0040 | 0,0011 | 0,0014 | 0,0011 |
| 0334 | 0,0036 | 0,0010 | 0,0022 | 0,0013 |
| 0335 | 0,0034 | 0,0010 | 0,0120 | 0,0016 |
| 0336 | 0,0040 | 0,0010 | 0,0088 | 0,0014 |

(fortgesetzt)

| Charge 93/ | C | S | O | N |
|------------|--------|--------|--------|--------|
| 0337 | 0,0039 | 0,0010 | 0,0058 | 0,0012 |
| 0338 | 0,0036 | 0,0011 | 0,0082 | 0,0012 |
| 0339 | 0,0025 | 0,0009 | 0,0026 | 0,0010 |

Tabelle 3

| Charge 93/ | Co | V | Cr | Mn | Ni | Nb | Mo | Si | Al | Ta | Ti | Cer | Cu |
|---|---|---|---|---|---|---|---|---|---|---|---|---|---|
| 0420 | 17,03 | 2,26 | <0,01 | <0,01 | 0,011 | <0,01 | <0,01 | <0,01 | <0,01 | <0,01 | <0,01 | <0,01 | <0,01 |
| 0421 | 20,01 | 2,29 | <0,01 | <0,01 | 0,012 | <0,01 | <0,01 | <0,01 | <0,01 | <0,01 | <0,01 | <0,01 | <0,01 |
| 0422 | 16,98 | 3,01 | <0,01 | <0,01 | 0,010 | <0,01 | <0,01 | <0,01 | <0,01 | <0,01 | <0,01 | <0,01 | <0,01 |
| 0423 | 17,04 | 3,49 | <0,01 | <0,01 | 0,011 | <0,01 | <0,01 | <0,01 | <0,01 | <0,01 | <0,01 | <0,01 | <0,01 |
| 0424 | 9,94 | 1,47 | 0,50 | <0,01 | <0,01 | <0,01 | <0,01 | <0,01 | <0,01 | <0,01 | <0,01 | <0,01 | <0,01 |
| 0425 | 13,97 | 1,49 | 0,50 | <0,01 | <0,01 | <0,01 | <0,01 | <0,01 | <0,01 | <0,01 | <0,01 | <0,01 | <0,01 |
| 0426 | 20,03 | 1,48 | 0,50 | <0,01 | 0,012 | <0,01 | <0,01 | <0,01 | <0,01 | <0,01 | <0,01 | <0,01 | <0,01 |
| 0427 | 25,00 | 1,50 | 0,50 | <0,01 | 0,015 | <0,01 | <0,01 | <0,01 | <0,01 | <0,01 | <0,01 | <0,01 | <0,01 |
| 0428 | 16,95 | 1,48 | 0,50 | <0,01 | 0,010 | <0,01 | <0,01 | <0,01 | <0,01 | <0,01 | <0,01 | <0,01 | <0,01 |
| 0429 | 16,94 | 1,48 | 0,49 | <0,01 | 0,010 | <0,01 | <0,01 | <0,01 | <0,01 | <0,01 | <0,01 | <0,01 | <0,01 |
| 0430 | 17,04 | 1,50 | 0,50 | <0,01 | 0,010 | <0,01 | <0,01 | <0,01 | <0,01 | <0,01 | <0,01 | <0,01 | <0,01 |
| 0431 | 16,97 | 1,48 | 0,50 | 0,094 | 0,010 | 0,057 | <0,01 | <0,01 | <0,01 | <0,01 | <0,01 | <0,01 | <0,01 |
| 0432 | 17,00 | 1,49 | 0,50 | 0,27 | 0,010 | <0,01 | <0,01 | <0,01 | <0,01 | <0,01 | <0,01 | <0,01 | <0,01 |
| 0433 | 17,02 | 1,48 | 0,50 | <0,01 | 0,12 | <0,01 | <0,01 | <0,01 | <0,01 | <0,01 | <0,01 | <0,01 | <0,01 |
| 0434 | 16,99 | 1,45 | 0,50 | <0,01 | 0,32 | <0,01 | <0,01 | <0,01 | <0,01 | <0,01 | <0,01 | <0,01 | <0,01 |
| 0435 | 17,01 | 1,43 | 0,50 | <0,01 | <0,01 | <0,01 | <0,01 | <0,01 | <0,01 | <0,01 | <0,01 | <0,01 | <0,01 |
| 0436 | 17,03 | 1,43 | 0,50 | <0,01 | <0,01 | <0,01 | 0,30 | <0,01 | <0,01 | <0,01 | <0,01 | <0,01 | <0,01 |
| 0437 | 17,02 | 1,47 | 0,50 | <0,01 | <0,01 | <0,01 | <0,01 | 0,055 | <0,01 | <0,01 | <0,01 | <0,01 | <0,01 |
| 0438 | 16,95 | 1,47 | 0,50 | <0,01 | 0,016 | <0,01 | <0,01 | 0,026 | <0,01 | 0,086 | <0,01 | <0,01 | <0,01 |
| 0439 | 17,00 | 1,49 | 0,50 | <0,01 | 0,012 | <0,01 | <0,01 | 0,021 | <0,01 | <0,01 | 0,078 | <0,01 | <0,01 |
| 0440 | 17,02 | 1,50 | 0,50 | <0,01 | 0,010 | <0,01 | <0,01 | 0,022 | <0,01 | <0,01 | <0,01 | 0,006 (Einsatz 0,05) | <0,01 |
| 0441 | 17,04 | 1,49 | 0,50 | <0,01 | 0,010 | <0,01 | <0,01 | 0,022 | <0,01 | <0,01 | <0,01 | <0,01 | 0,11 |
| 0442 | 16,99 | <0,01 | <0,01 | <0,01 | 0,010 | <0,01 | <0,01 | 0,019 | 1,97 | <0,01 | <0,01 | - | <0,01 |
| 0443 | 17,05 | 4,02 | <0,01 | <0,01 | 0,011 | <0,01 | <0,01 | <0,01 | <0,01 | <0,01 | <0,01 | <0,01 | <0,01 |
| 0502 | 16,96 | 1,66 | 0,32 | 0,04 | 0,025 | <0,01 | <0,01 | <0,01 | <0,01 | <0,01 | <0,01 | | 0,01 |

(fortgesetzt)

| Charge 93/ | Co | V | Cr | Mn | Ni | Nb | Mo | Si | Al | Ta | Ti | Cer | Cu |
|---|---|---|---|---|---|---|---|---|---|---|---|---|---|
| 0503 | 16,97 | 1,68 | 0,32 | 0,04 | 0,024 | <0,01 | <0,01 | <0,01 | <0,01 | <0,01 | <0,01 | <0,001 (Einsatz 0,10) | 0,01 |
| 0504 | 16,94 | 1,68 | <0,01 | <0,01 | 0,011 | <0,01 | <0,01 | 0,20 | <0,01 | <0,01 | <0,01 | <0,01 | <0,01 |
| 0505 | 16,97 | 1,39 | <0,01 | <0,01 | 0,011 | <0,01 | <0,01 | 0,40 | <0,01 | <0,01 | <0,01 | <0,01 | <0,01 |
| Großschmelzen: | | | | | | | | | | | | | |
| 76/4988 | 16,81 | 2,29 | 0,013 | 0,024 | 0,028 | <0,001 | <0,001 | 0,016 | <0,001 | <0,001 | <0,001 | <0,001 | 0,005 |
| 76/5180 | 17,11 | 1,47 | 0,011 | 0,094 | 0,008 | <0,001 | <0,001 | 0,28 | <0,001 | <0,001 | <0,001 | <0,005 | 0,006 |

Tabelle 4

| Charge 93/ | C | S | O | N |
|---|---|---|---|---|
| 0420 | 0,0034 | 0,0012 | 0,0130 | 0,0016 |
| 0421 | 0,0021 | 0,0012 | 0,0110 | 0,0014 |
| 0422 | 0,0021 | 0,0012 | 0,0110 | 0,0015 |
| 0423 | 0,0034 | 0,0012 | 0,0100 | 0,0014 |
| 0424 | 0,0028 | 0,0011 | 0,0110 | 0,0010 |
| 0425 | 0,0032 | 0,0012 | 0,0089 | 0,0012 |
| 0426 | 0,0020 | 0,0012 | 0,0081 | 0,0011 |
| 0427 | 0,0022 | 0,0011 | 0,0084 | 0,0010 |
| 0428 | 0,0026 | 0,0012 | 0,0086 | 0,0013 |
| 0429 | 0,0056 | 0,0012 | 0,0070 | 0,0012 |
| 0430 | 0,0170 | 0,0012 | 0,0048 | 0,0012 |
| 0431 | 0,0014 | 0,0013 | 0,0094 | 0,0013 |
| 0432 | 0,0019 | 0,0013 | 0,0096 | 0,0012 |
| 0433 | 0,0019 | 0,0012 | 0,0100 | 0,0012 |
| 0434 | 0,0017 | 0,0025 | 0,0110 | 0,0010 |
| 0435 | 0,0030 | 0,0032 | 0,0150 | 0,0007 |
| 0436 | 0,0022 | 0,0030 | 0,0110 | 0,0007 |
| 0437 | 0,0023 | 0,0017 | 0,0110 | 0,0006 |
| 0438 | 0,0027 | 0,0010 | 0,0093 | 0,0011 |
| 0439 | 0,0050 | 0,0010 | 0,0023 | 0,0006 |
| 0440 | 0,0022 | 0,0008 | 0,0050 | 0,0010 |
| 0441 | 0,0020 | 0,0009 | 0,0075 | 0,0008 |
| 0442 | 0,0027 | 0,0008 | 0,0017 | 0,0005 |
| 0443 | 0,0032 | 0,0009 | 0,0130 | 0,0070 |
| 0502 | 0,0038 | 0,0028 | 0,0120 | 0,0029 |
| 0503 | 0,0058 | 0,0022 | 0,0035 | 0,0028 |
| 0504 | 0,0025 | 0,0010 | 0,0092 | 0,0008 |
| 0505 | 0,0024 | 0,0010 | 0,0063 | 0,0008 |
| Großschmelzen | | | | |
| 76/4988 | 0,0010 | 0,0042 | 0,0121 | 0,0023 |
| 76/5180 | 0,0021 | 0,0062 | 0,0073 | 0,0026 |

Tabelle 5

| Charge 93/ | Banddicke mm | Glühung | mittl. Korngröße d mm | 1/d 1/mm | $H_C$ A/cm | $\mu_{max}$ |
|---|---|---|---|---|---|---|
| 0329 | 0,35 | 4h 850°C | 0,075 | 13,33 | 1,035 | 3584 |
| 0329 | 0,35 | 10h 910°C | 0,151 | 6,62 | 0,622 | 5090 |

(fortgesetzt)

| Charge 93/ | Banddicke mm | Glühung | mittl. Korngröße d mm | 1/d 1/mm | $H_C$ A/cm | $\mu_{max}$ |
|---|---|---|---|---|---|---|
| 0329 | 0,35 | 10h 910°C + 70h 930°C | 0,254 | 3,94 | 0,418 | 5737 |
| 0329 | 0,35 | 4h 1100°C | 0,214 | 4,67 | 0,524 | 7497 |
| 0329 | 0,35 | 4h 1100°C + 10h 910°C | 0,360 | 2,78 | 0,396 | 12084 |
| 0329 | 0,35 | 4h 1050°C | 0,302 | 3,31 | 0,501 | 7943 |
| 0329 | 0,35 | 4h 1050°C + 10h 910°C | 0,214 | 4,67 | 0,367 | 14291 |
| 0329 | 0,35 | 4h 1150°C | 0,254 | 3,94 | 0,473 | 7860 |
| 0325 | 0,35 | 4h 1050°C | 0,197 | 5,08 | 1,004 | 3554 |
| 0328 | 0,35 | 4h 1050°C | 0,278 | 3,60 | 0,625 | 5387 |
| 0330 | 0,35 | 4h 1050°C | 0,401 | 2,49 | 0,353 | 11509 |
| 0329 | 0,35 | 4h 1000°C + 10h 910°C | 0,250 | 4,00 | 0,384 | 15658 |
| 0329 | 0,20 | 4h 1000°C + 10h 910°C | 0,213 | 4,69 | 0,474 | 10978 |
| 0329 | 0,10 | 4h 1000°C + 10h 910°C | 0,151 | 6,62 | 0,523 | 10965 |

Tabelle 6

| Charge 93/ | 1. Onset Aufheizen ($T_{ü2}$) | Peak Aufheizen | 1. Onset Abkühlen ($T_{ü1}$) | Peak Abkühlen | $T_C$ Peak Aufheizen | $T_C$ Peak Abkühlen | Mitte Tc Peak |
|---|---|---|---|---|---|---|---|
| 0322 | 928 | 938 | 908 | 897 | #NV | #NV | #NV |
| 0323 | 940 | 951 | 932 | 919 | #NV | #NV | #NV |
| 0324 | 950 | 964 | 944 | 928 | #NV | #NV | #NV |
| 0325 | 905 | 918 | 880 | 859 | #NV | #NV | #NV |
| 0326 | 921 | 937 | 884 | 862 | #NV | #NV | #NV |
| 0327 | 919 | 930 | 897 | 879 | #NV | #NV | #NV |
| 0328 | 934 | 943 | 914 | 898 | #NV | #NV | #NV |
| 0329 | 952 | 958 | 933 | 926 | 937 | #NV | #NV |
| 0330 | 980 | 987 | 958 | 951 | 943 | 931 | 937 |
| 0331 | 934 | 946 | 913 | 895 | #NV | #NV | #NV |
| 0332 | 931 | 945 | 910 | 893 | #NV | #NV | #NV |
| 0333 | 937 | 950 | 915 | 898 | #NV | #NV | #NV |
| 0334 | 933 | 945 | 912 | 895 | #NV | #NV | #NV |
| 0335 | 962 | 974 | 953 | 939 | #NV | #NV | #NV |
| 0336 | 933 | 947 | 912 | 895 | #NV | #NV | #NV |
| 0337 | 933 | 947 | 912 | 895 | #NV | #NV | #NV |
| 0338 | 934 | 947 | 913 | 895 | #NV | #NV | #NV |

(fortgesetzt)

| Charge 93/ | 1. Onset Aufheizen ($T_{ü2}$) | Peak Aufheizen | 1. Onset Abkühlen ($T_{ü1}$) | Peak Abkühlen | $T_C$ Peak Aufheizen | $T_C$ Peak Abkühlen | Mitte Tc Peak |
|---|---|---|---|---|---|---|---|
| 0339 | 1070 | 1088 | 1020 | 1011 | 962 | 950 | 956 |
| 0420 | 988 | 995 | 964 | 958 | 941 | 933 | 937 |
| 0421 | 971 | 978 | 956 | 947 | 960 | #NV | #NV |
| 0422 | 1017 | 1026 | 979 | 974 | 940 | 931 | 936 |
| 0423 | 1037 | 1063 | 994 | 988 | 938 | 929 | 934 |
| 0424 | 993 | 997 | 952 | 947 | 886 | 878 | 882 |
| 0425 | 965 | 971 | 939 | 933 | 916 | 907 | 912 |
| 0426 | 949 | 958 | 935 | 923 | #NV | #NV | #NV |
| 0427 | 951 | 963 | 939 | 924 | #NV | #NV | #NV |
| 0428 | 951 | 960 | 934 | 923 | 936 | #NV | #NV |
| 0429 | 947 | 960 | 934 | 922 | 938 | #NV | #NV |
| 0430 | 944 | 952 | 932 | 917 | 938 | #NV | #NV |
| 0431 | 950 | 958 | 931 | 920 | 937 | #NV | #NV |
| 0432 | 946 | 953 | 925 | 912 | 935 | #NV | #NV |
| 0433 | 949 | 957 | 929 | 919 | 938 | #NV | #NV |
| 0434 | 944 | 952 | 921 | 911 | 937 | #NV | #NV |
| 0435 | 953 | 961 | 932 | 924 | 938 | #NV | #NV |
| 0436 | 952 | 959 | 931 | 922 | 935 | #NV | #NV |
| 0437 | 954 | 961 | 934 | 926 | 937 | #NV | #NV |
| 0438 | 955 | 962 | 934 | 926 | 938 | #NV | #NV |
| 0439 | 958 | 965 | 936 | 926 | 934 | #NV | #NV |
| 0440 | 954 | 961 | 934 | 925 | 936 | #NV | #NV |
| 0441 | 952 | 959 | 932 | 924 | 937 | #NV | #NV |
| 0442 | #NV | #NV | (1065) | (1050) | 924 | 916 | 920 |
| 0443 | #NV | #NV | 1012 | 1001 | 936 | 925 | 931 |
| 0502 | 960 | 968 | 941 | 930 | 939 | #NV | #NV |
| 0503 | 959 | 968 | 941 | 929 | 939 | #NV | #NV |
| 0504 | 975 | 982 | 956 | 949 | 939 | 929 | 934 |
| 0505 | 970 | 977 | 953 | 946 | 936 | 926 | 931 |
| 76/4988 | 989 | 995 | 962 | 957 | 939 | 929 | 934 |
| 76/5180 | 965 | 974 | 949 | 942 | 938 | #NV | #NV |

Tabelle 7

| Glühung | Glüh-Variante | B20 in T | B25 in T | B50 in T | B90 in T | B100 in T | B160 in T | Hc in A/cm | $\mu_{max}$ | Br in T | $P_{Hyst.}$ 1,5T Ws/kg |
|---|---|---|---|---|---|---|---|---|---|---|---|
| 4h 1050°C Abk.50°C/h +10h, 910°C | 1 | 1,813 | 1,84 | 1,933 | 2,025 | 2,043 | 2,121 | 0,296 | 1965 3 | 1,505 | 0,045 |
| 4h 1050°C +10h 910°C | 1 | 1,814 | 1,84 | 1,931 | 2,024 | 2,042 | 2,12 | 0,340 | 1776 7 | 1,525 | 0,046 |
| 10h 1050°C Abk.30°C/h +10h 910°C | 1 | 1,760 | 1,788 | 1,888 | 1,990 | 2,010 | 2,102 | 0,316 | 1435 8 | 1,457 | 0,050 |
| 4h 1050°C +10h 910°C | 1 | 1,790 | 1,817 | 1,916 | 2,015 | 2,034 | 2,122 | 0,346 | 1258 4 | 1,378 | 0,049 |
| 4h 1050°C Kühlzone +10h, 910°C | 1 | 1,643 | 1,672 | 1,776 | 1,892 | 1,917 | 2,035 | 0,660 | 6010 | 1,392 | 0,075 |
| 4h 1050°C ,10h 910°C | 2 | 1,799 | 1,825 | 1,921 | 2,018 | 2,037 | 2,124 | 0,326 | 1458 6 | 1,542 | 0,043 |
| 4h 1050°C ,2h 930°C | 2 | 1,795 | 1,820 | 1,915 | 2,012 | 2,032 | 2,119 | 0,341 | 1383 7 | 1,532 | 0,043 |
| 4h 1050°C ,2h 910°C | 2 | 1,798 | 1,824 | 1,921 | 2,018 | 2,037 | 2,125 | 0,354 | 1310 5 | 1,517 | 0,044 |
| 2h 1050°C ,4h 910°C | 2 | 1,798 | 1,824 | 1,919 | 2,016 | 2,036 | 2,123 | 0,380 | 1258 1 | 1,508 | 0,046 |
| 10h 1050°C Abk.50°C/h bis 930°C 10h | 2 | 1,749 | 1,776 | 1,877 | 1,982 | 2,003 | 2,098 | 0,293 | 1249 4 | 1,482 | 0,045 |
| 4h 1050°C ,2h 910°C | 2 | 1,790 | 1,817 | 1,914 | 2,012 | 2,031 | 2,119 | 0,413 | 9787 | 1,384 | 0,051 |
| 4h 1050°C Abk.50°C/h | 3 | 1,812 | 1,839 | 1,932 | 2,025 | 2,043 | 2,122 | 0,305 | 1401 5 | 1,518 | 0,043 |
| 4h 1050°C Abk.150°C/h | 3 | 1,812 | 1,838 | 1,929 | 2,021 | 2,04 | 2,119 | 0,347 | 1267 0 | 1,502 | 0,045 |
| 10h 1050°C Abk.30°C/h | 3 | 1,756 | 1,783 | 1,885 | 1,986 | 2,007 | 2,095 | 0,342 | 1041 9 | 1,438 | 0,051 |
| 4h 1050°C Abk.150°C/h | 3 | 1,791 | 1,819 | 1,917 | 2,016 | 2,036 | 2,124 | 0,359 | 1034 8 | 1,405 | 0,047 |
| | | | | | | | | | | | |
| 10h 910°C +70h 930°C +61h 950°C | nicht nach Erfindung | 1,595 | 1,622 | 1,723 | 1,838 | 1,863 | 1,991 | 0,456 | 5415 | 1,271 | 0,072 |
| 10h 910°C +70h 930°C | nicht nach Erfindung | 1,613 | 1,640 | 1,740 | 1,853 | 1,877 | 1,999 | 0,662 | 4868 | 1,148 | 0,072 |
| 10h 910°C | nicht nach Erfindung | 1,615 | 1,642 | 1,74 | 1,848 | 1,873 | 1,989 | 0,684 | 4868 | 1,112 | 0,074 |

(fortgesetzt)

| Glühung | Glüh-Variante | B20 in T | B25 in T | B50 in T | B90 in T | B100 in T | B160 in T | Hc in A/cm | $\mu_{max}$ | Br in T | $P_{Hyst.}$ 1,5T Ws/kg |
|---|---|---|---|---|---|---|---|---|---|---|---|
| 4h 1050°C Kühlzone | nicht nach Erfindung | 1,635 | 1,667 | 1,775 | 1,893 | 1,917 | 2,035 | 0,740 | 3769 | 0,969 | 0,095 |
| 4h 850°C | nicht nach Erfindung | 1,648 | 1,677 | 1,776 | 1,883 | 1,906 | 2,019 | 1,052 | 3533 | 0,867 | 0,081 |

Tabelle 8

| Glühung | B20 in T | B25 in T | B50 in T | B90 in T | B100 in T | B160 in T | Hc in A/cm | $\mu_{max}$ | Br in T |
|---|---|---|---|---|---|---|---|---|---|
| 10h 910°C | 1,615 | 1,642 | 1,740 | 1,848 | 1,873 | 1,989 | 0,684 | 4868 | 1,112 |
| 10h 910°C +70h 930°C | 1,613 | 1,640 | 1,740 | 1,853 | 1,877 | 1,999 | 0,662 | 4868 | 1,148 |
| 10h 910°C +70h 930°C +61h 950°C | 1,595 | 1,622 | 1,723 | 1,838 | 1,863 | 1,991 | 0,456 | 5415 | 1,271 |
| 10h 910°C +70h 930°C +61h 950°C +4h 960°C | 1,596 | 1,623 | 1,722 | 1,838 | 1,863 | 1,990 | 0,473 | 5557 | 1,222 |
| 10h 910°C +70h 930°C +61h 950°C +4h 960°C +4h 970°C | 1,713 | 1,742 | 1,842 | 1,948 | 1,969 | 2,070 | 0,544 | 8117 | 1,391 |
| 10h 910°C +70h 930°C +61h 950°C +4h 960°C +4h 970°C +4h 980°C | 1,783 | 1,811 | 1,909 | 2,011 | 2,030 | 2,119 | 0,414 | 10784 | 1,452 |
| 10h 910°C +70h 930°C +61h 950°C +4h 960°C +4h 970°C +4h 980°C +4h 990°C | 1,792 | 1,822 | 1,923 | 2,025 | 2,045 | 2,131 | 0,358 | 11337 | 1,432 |
| 10h 910°C +70h 930°C +61h 950°C +4h 960°C +4h 970°C +4h 980°C +4h 990°C +4h 1000°C | 1,779 | 1,808 | 1,911 | 2,015 | 2,035 | 2,117 | 0,315 | 11155 | 1,406 |
| 10h 910°C +70h 930°C +61h 950°C +4h 960°C +4h 970°C + 4h 980°C +4h 990°C +4h 1000°C +4h 1010°C | 1,772 | 1,803 | 1,908 | 2,015 | 2,036 | 2,128 | 0,321 | 11227 | 1,397 |
| 10h 910°C +70h 930°C +61h 950°C +4h 960°C +4h 970°C +4h 980°C +4h 990°C +4h 1000°C +4h 1010°C +4h 1030°C | 1,757 | 1,787 | 1,892 | 2,002 | 2,023 | 2,120 | 0,343 | 10375 | 1,387 |
| 10h 910°C +70h 930°C +61h 950°C +4h 960°C +4h 970°C +4h 980°C +4h 990°C +4h 1000°C +4h 1010°C +4h 1030°C +4h 1050°C | 1,703 | 1,734 | 1,844 | 1,962 | 1,986 | 2,095 | 0,371 | 8527 | 1,343 |

Tabelle 9

| Glühung | B20 in T | B25 in T | B50 in T | B90 in T | B100 in T | B160 in T | Hc in A/cm | μmax | Br in T | Entmagnetisiert? |
|---|---|---|---|---|---|---|---|---|---|---|
| 4h 1000°C | 1,801 | 1,828 | 1,923 | 2,019 | 2,038 | 2,123 | 0,407 | 10618 | 1,444 | nein |
| 4h 1000°C +4h 900°C | 1,796 | 1,825 | 1,921 | 2,018 | 2,038 | 2,124 | 0,422 | 10593 | 1,324 | nein |
| 4h 1000°C +4h 900°C +4h 910°C | 1,796 | 1,824 | 1,921 | 2,018 | 2,037 | 2,123 | 0,414 | 11436 | 1,359 | nein |
| 4h 1000°C +4h 900°C +4h 910°C +4h 920°C | 1,795 | 1,822 | 1,918 | 2,015 | 2,034 | 2,119 | 0,406 | 12326 | 1,363 | nein |
| 4h 1000°C +4h 900°C +4h 910°C +4h 920°C +4h 930°C | 1,799 | 1,826 | 1,921 | 2,017 | 2,036 | 2,121 | 0,386 | 13961 | 1,410 | nein |
| 4h 1000°C +4h 900°C +4h 910°C +4h 920°C +4h 930°C +4h 940°C | 1,791 | 1,818 | 1,916 | 2,013 | 2,031 | 2,119 | 0,387 | 15856 | 1,511 | ja |
| 4h 1000°C +4h 900°C +4h 910°C +4h 920°C +4h 930°C +4h 940°C +4h 950°C | 1,793 | 1,819 | 1,916 | 2,013 | 2,032 | 2,119 | 0,401 | 16609 | 1,550 | ja |
| 4h 1000°C +4h 900°C +4h 910°C +4h 920°C +4h 930°C +4h 940°C +4h 950°C +4h 960°C | 1,794 | 1,820 | 1,916 | 2,012 | 2,031 | 2,117 | 0,427 | 15298 | 1,554 | ja |
| 4h 1000°C +4h 900°C +4h 910°C +4h 920°C +4h 930°C +4h 940°C +4h 950°C +4h 960°C +4h 970°C | 1,767 | 1,794 | 1,890 | 1,990 | 2,009 | 2,102 | 0,525 | 11053 | 1,497 | ja |
| 4h 1000°C +4h 900°C +4h 910°C +4h 920°C +4h 930°C +4h 940°C +4h 950°C +4h 960°C +4h 970°C +4h 980°C | 1,787 | 1,815 | 1,917 | 2,017 | 2,036 | 2,123 | 0,433 | 9550 | 1,469 | nein |
| 4h 1000°C +4h 900°C +4h 910°C +4h 920°C +4h 930°C +4h 940°C +4h 950°C +4h 960°C +4h 970°C +4h 980°C +4h 980°C | 1,787 | 1,815 | 1,917 | 2,018 | 2,037 | 2,124 | 0,430 | 11789 | 1,463 | ja |
| 4h 1000°C +4h 900°C +4h 910°C +4h 920°C +4h 930°C +4h 940°C +4h 950°C +4h 960°C +4h 970°C +4h 980°C +4h 980°C +4h 990°C | 1,782 | 1,811 | 1,910 | 2,011 | 2,031 | 2,119 | 0,431 | 12585 | 1,482 | ja |
| +4h 970°C +4h 980°C +4h 990°C | | | | | | | | | | |
| 4h 1000°C +4h 900°C +4h 910°C +4h 920°C +4h 930°C +4h 940°C +4h 950°C +4h 960°C +4h 970°C +4h 980°C +4h 990°C | 1,783 | 1,812 | 1,912 | 2,012 | 2,032 | 2,120 | 0,429 | 9965 | 1,485 | nein |
| 4h 1000°C +4h 900°C +4h 910°C +4h 920°C +4h 930°C +4h 940°C +4h 950°C +4h 960°C +4h 970°C +4h 980°C +4h 990°C +4h 1000°C | 1,778 | 1,807 | 1,907 | 2,009 | 2,028 | 2,117 | 0,433 | 11762 | 1,424 | ja |

(fortgesetzt)

| Glühung | B20 in T | B25 in T | B50 in T | B90 in T | B100 in T | B160 in T | Hc in A/cm | $\mu_{max}$ | Br in T | Entmagnetisiert? |
|---|---|---|---|---|---|---|---|---|---|---|
| 4h 1000°C +4h 900°C +4h 910°C +4h 920°C +4h 930°C +4h 940°C +4h 950°C +4h 960°C +4h 970°C +4h 980°C +4h 990°C +4h 1000°C | 1,779 | 1,807 | 1,908 | 2,009 | 2,029 | 2,118 | 0,437 | 9405 | 1,425 | nein |
| 4h 1000°C +4h 900°C +4h 910°C +4h 920°C +4h 930°C +4h 940°C +4h 950°C +4h 960°C +4h 970°C +4h 980°C +4h 990°C +4h 1000°C +10h 950°C | 1,775 | 1,804 | 1,905 | 2,007 | 2,026 | 2,116 | 0,460 | 11012 | 1,430 | ja |

Tabelle 10

| Charge 93/ | B20 T | B25 T | B50 T | B90 T | B100 T | B160 T | $H_c$ A/cm | $\mu_{max}$ | $B_r$ T | rho in $\mu\Omega$m | $P_{Hyst.}$ 1,5T Ws/kg |
|---|---|---|---|---|---|---|---|---|---|---|---|
| 0322 | 1,676 | 1,709 | 1,815 | 1,924 | 1,947 | 2,056 | 1,465 | 3130 | 1,098 | 0,3081 | 0,107 |
| 0323 | 1,765 | 1,795 | 1,892 | 1,995 | 2,016 | 2,121 | 1,120 | 3815 | 1,015 | 0,1872 | 0,079 |
| 0324 | 1,800 | 1,836 | 1,949 | 2,059 | 2,082 | 2,189 | 1,451 | 2544 | 0,766 | 0,1570 | 0,093 |
| 0325 | 1,700 | 1,729 | 1,830 | 1,937 | 1,959 | 2,068 | 0,894 | 4195 | 0,919 | 0,3360 | 0,067 |
| 0326 | 1,715 | 1,753 | 1,873 | 1,992 | 2,016 | 2,133 | 1,144 | 2735 | 0,533 | 0,3739 | 0,074 |
| 0327 | 1,665 | 1,694 | 1,794 | 1,904 | 1,926 | 2,039 | 0,890 | 4059 | 0,908 | 0,3287 | 0,070 |
| 0328 | 1,656 | 1,686 | 1,787 | 1,895 | 1,918 | 2,031 | 0,928 | 3890 | 0,945 | 0,3154 | 0,076 |
| 0329 | 1,651 | 1,681 | 1,780 | 1,887 | 1,911 | 2,024 | 1,035 | 3584 | 0,876 | 0,3042 | 0,079 |
| 0330 | 1,648 | 1,677 | 1,776 | 1,883 | 1,906 | 2,019 | 1,052 | 3533 | 0,867 | 0,2859 | 0,081 |
| 0331 | 1,693 | 1,729 | 1,847 | 1,967 | 1,991 | 2,110 | 1,167 | 2639 | 0,551 | 0,3326 | 0,080 |
| 0332 | 1,681 | 1,719 | 1,837 | 1,956 | 1,980 | 2,098 | 1,229 | 2633 | 0,588 | 0,3580 | 0,083 |
| 0333 | 1,703 | 1,740 | 1,856 | 1,972 | 1,996 | 2,109 | 1,328 | 2788 | 0,756 | 0,3518 | 0,088 |
| 0334 | 1,788 | 1,822 | 1,929 | 2,035 | 2,055 | 2,151 | 0,968 | 3656 | 0,692 | 0,3475 | 0,069 |
| 0335 | 1,673 | 1,710 | 1,826 | 1,945 | 1,970 | 2,089 | 1,248 | 2643 | 0,658 | 0,2857 | 0,089 |
| 0336 | 1,696 | 1,733 | 1,850 | 1,969 | 1,992 | 2,109 | 1,198 | 2626 | 0,586 | 0,3396 | 0,081 |
| 0337 | 1,698 | 1,735 | 1,852 | 1,969 | 1,992 | 2,107 | 1,270 | 2563 | 0,578 | 0,3388 | 0,082 |
| 0338 | 1,696 | 1,734 | 1,852 | 1,970 | 1,994 | 2,110 | 1,241 | 2653 | 0,636 | 0,3334 | 0,084 |

Tabelle 11

| Charge 93/ | B20 T | B25 T | B50 T | B90 T | B100 T | B160 T | $H_c$ A/cm | $\mu_{max}$ | $B_r$ T | rho in $\mu\Omega$m | $P_{Hyst.}$ 1,5T Ws/kg |
|---|---|---|---|---|---|---|---|---|---|---|---|
| 0328 | 1,623 | 1,652 | 1,751 | 1,864 | 1,887 | 2,005 | 0,627 | 4902 | 1,022 | - | 0,067 |
| 0329 | 1,618 | 1,646 | 1,746 | 1,858 | 1,881 | 2,002 | 0,622 | 5090 | 1,129 | - | 0,069 |
| 0330 | 1,615 | 1,642 | 1,74 | 1,848 | 1,873 | 1,989 | 0,684 | 4868 | 1,112 | - | 0,074 |
| 0331 | 1,657 | 1,69 | 1,807 | 1,933 | 1,961 | 2,09 | 0,659 | 3795 | 0,502 | - | 0,074 |
| 0334 | 1,799 | 1,832 | 1,938 | 2,039 | 2,059 | 2,148 | 0,659 | 4556 | 0,81 | - | 0,059 |
| 0335 | 1,652 | 1,686 | 1,801 | 1,923 | 1,948 | 2,073 | 0,928 | 3059 | 0,587 | - | 0,082 |

Tabelle 12

| Charge 93/ | B20 T | B25 T | B50 T | B90 T | B100 T | B160 T | $H_c$ A/cm | $\mu_{max}$ | $B_r$ T | Rho in $\mu\Omega$m | $P_{Hyst.}$1,5T Ws/kg |
|---|---|---|---|---|---|---|---|---|---|---|---|
| 0328 | 1,771 | 1,802 | 1,911 | 2,017 | 2,036 | 2,126 | 0,473 | 6912 | 1,164 | - | 0,061 |
| 0329 | 1,598 | 1,624 | 1,725 | 1,842 | 1,868 | 1,997 | 0,418 | 5737 | 1,168 | - | 0,061 |
| 0330 | 1,613 | 1,64 | 1,74 | 1,853 | 1,877 | 1,999 | 0,662 | 4868 | 1,148 | - | 0,072 |

(fortgesetzt)

| Charge 93/ | B20 T | B25 T | B50 T | B90 T | B100 T | B160 T | H_c A/cm | μ_max | B_r T | Rho in μΩm | P_Hyst.1,5T Ws/kg |
|---|---|---|---|---|---|---|---|---|---|---|---|
| 0331 | 1,658 | 1,693 | 1,811 | 1,941 | 1,967 | 2,098 | 1,265 | 2702 | 0,938 | - | 0,104 |
| 0334 | 1,787 | 1,820 | 1,931 | 2,038 | 2,060 | 2,155 | 1,289 | 3228 | 1,158 | - | 0,099 |
| 0335 | 1,652 | 1,688 | 1,809 | 1,943 | 1,972 | 2,116 | 0,978 | 3246 | 0,546 | - | 0,084 |

Tabelle 13

| Charge 93/ | B20 T | B25 T | B50 T | B90 T | B100 T | B160 T | H_c A/cm | μ_max | B_r T | Rho in μΩm | P_Hyst. 1,5T Ws/kg |
|---|---|---|---|---|---|---|---|---|---|---|---|
| 0323 | 1,719 | 1,75 | 1,855 | 1,973 | 1,997 | 2,111 | 0,492 | 5433 | 1,003 | 0,189 | 0,071 |
| 0328 | 1,768 | 1,797 | 1,895 | 1,994 | 2,013 | 2,102 | 0,643 | 5392 | 1,212 | 0,317 | 0,065 |
| 0329 | 1,803 | 1,83 | 1,923 | 2,017 | 2,035 | 2,117 | 0,509 | 7929 | 1,377 | 0,310 | 0,055 |
| 0330 | 1,809 | 1,836 | 1,927 | 2,019 | 2,037 | 2,117 | 0,369 | 16218 | 1,498 | 0,291 | 0,046 |
| 0331 | 1,703 | 1,739 | 1,86 | 1,985 | 2,01 | 2,127 | 1,033 | 2980 | 0,967 | 0,335 | 0,091 |
| 0334 | 1,707 | 1,742 | 1,860 | 1,979 | 2,002 | 2,113 | 1,145 | 2994 | 0,958 | 0,350 | 0,091 |
| 0335 | 1,801 | 1,833 | 1,942 | 2,046 | 2,067 | 2,155 | 0,414 | 6043 | 1,168 | 0,289 | 0,064 |
| 0339 | 1,707 | 1,739 | 1,851 | 1,968 | 1,990 | 2,089 | 0,297 | 7651 | 0,869 | - | 0,051 |

Tabelle 14

| Charge 93/ | B20 T | B25 T | B50 T | B90 T | B100 T | B160 T | H_c A/cm | μ_max | B_r T | Rho in μΩm | P_Hyst. 1,5T Ws/kg |
|---|---|---|---|---|---|---|---|---|---|---|---|
| 0323 | 1,72 | 1,748 | 1,853 | 1,971 | 1,995 | 2,11 | 0,402 | 7983 | 1,312 | 0,189 | 0,060 |
| 0328 | 1,777 | 1,805 | 1,902 | 2,001 | 2,02 | 2,108 | 0,415 | 11322 | 1,493 | 0,317 | 0,049 |
| 0329 | 1,808 | 1,834 | 1,927 | 2,02 | 2,038 | 2,12 | 0,383 | 13490 | 1,529 | 0,311 | 0,046 |
| 0330 | 1,807 | 1,834 | 1,927 | 2,02 | 2,039 | 2,119 | 0,353 | 14673 | 1,529 | 0,290 | 0,047 |
| 0331 | 1,701 | 1,734 | 1,854 | 1,982 | 2,008 | 2,129 | 0,926 | 4382 | 1,277 | 0,335 | 0,081 |
| 0334 | 1,705 | 1,738 | 1,855 | 1,975 | 1,999 | 2,113 | 0,998 | 4145 | 1,184 | 0,348 | 0,087 |
| 0335 | 1,802 | 1,834 | 1,941 | 2,047 | 2,066 | 2,156 | 0,401 | 5998 | 1,234 | 0,288 | 0,065 |

Tabelle 15

| Charge 93/ | B20 T | B25 T | B50 T | B90 T | B100 T | B160 T | $H_c$ A/cm | $\mu_{max}$ | $B_r$ T | rho in $\mu\Omega$m | $P_{Hyst.}$ 1,5T Ws/kg |
|---|---|---|---|---|---|---|---|---|---|---|---|
| 0322 | 1,691 | 1,722 | 1,828 | 1,942 | 1,965 | 2,077 | 0,731 | 4574 | 1,093 | - | 0,074 |
| 0323 | 1,713 | 1,742 | 1,852 | 1,972 | 1,997 | 2,114 | 0,456 | 5732 | 0,998 | - | 0,074 |
| 0324 | 1,757 | 1,79 | 1,908 | 2,036 | 2,063 | 2,186 | 0,713 | 4522 | 1,051 | - | 0,078 |
| 0325 | 1,680 | 1,710 | 1,816 | 1,929 | 1,952 | 2,063 | 1,004 | 3554 | 0,925 | - | 0,082 |
| 0326 | 1,695 | 1,732 | 1,858 | 1,988 | 2,014 | 2,136 | 1,336 | 2397 | 0,899 | - | 0,107 |
| 0327 | 1,674 | 1,705 | 1,813 | 1,929 | 1,953 | 2,068 | 0,826 | 4061 | 0,948 | - | 0,078 |
| 0328 | 1,767 | 1,796 | 1,893 | 1,993 | 2,012 | 2,103 | 0,625 | 5387 | 1,179 | - | 0,066 |
| 0329 | 1,809 | 1,836 | 1,928 | 2,021 | 2,039 | 2,12 | 0,501 | 7943 | 1,388 | - | 0,054 |
| 0330 | 1,812 | 1,838 | 1,929 | 2,021 | 2,040 | 2,119 | 0,347 | 12670 | 1,502 | - | 0,045 |
| 0331 | 1,707 | 1,743 | 1,863 | 1,986 | 2,012 | 2,125 | 0,969 | 3049 | 0,948 | - | 0,088 |
| 0332 | 1,700 | 1,734 | 1,854 | 1,977 | 2,002 | 2,115 | 0,974 | 2982 | 0,894 | - | 0,087 |
| 0333 | 1,677 | 1,712 | 1,833 | 1,960 | 1,986 | 2,109 | 0,921 | 3259 | 0,903 | - | 0,084 |
| 0334 | 1,704 | 1,740 | 1,857 | 1,976 | 2,000 | 2,112 | 1,071 | 3042 | 0,925 | - | 0,087 |
| 0335 | 1,809 | 1,840 | 1,947 | 2,051 | 2,070 | 2,159 | 0,480 | 5631 | 1,194 | - | 0,068 |
| 0336 | 1,701 | 1,735 | 1,855 | 1,979 | 2,004 | 2,120 | 0,931 | 3140 | 0,907 | - | 0,085 |
| 0337 | 1,703 | 1,737 | 1,857 | 1,983 | 2,007 | 2,125 | 0,950 | 3157 | 0,926 | - | 0,087 |
| 0338 | 1,707 | 1,743 | 1,860 | 1,982 | 2,006 | 2,121 | 1,058 | 2934 | 0,912 | - | 0,089 |
| 0339 | 1,674 | 1,716 | 1,849 | 1,971 | 1,993 | 2,094 | 0,623 | 3911 | 0,552 | - | 0,053 |
| 0420 | 1,792 | 1,817 | 1,910 | 2,001 | 2,019 | 2,101 | 0,393 | 11121 | 1,483 | 0,3000 | 0,049 |
| 0421 | 1,795 | 1,822 | 1,919 | 2,017 | 2,037 | 2,124 | 0,459 | 7856 | 1,387 | 0,3013 | 0,058 |
| 0422 | 1,749 | 1,774 | 1,866 | 1,960 | 1,978 | 2,064 | 0,472 | 9770 | 1,441 | 0,3289 | 0,052 |
| 0423 | 1,577 | 1,604 | 1,703 | 1,815 | 1,838 | 1,956 | 0,798 | 5361 | 1,287 | 0,3552 | 0,079 |
| 0424 | 1,728 | 1,752 | 1,840 | 1,934 | 1,953 | 2,039 | 0,352 | 13523 | 1,458 | 0,2683 | 0,045 |
| 0425 | 1,783 | 1,808 | 1,898 | 1,989 | 2,007 | 2,089 | 0,404 | 11119 | 1,464 | 0,2928 | 0,048 |
| 0426 | 1,783 | 1,812 | 1,913 | 2,017 | 2,037 | 2,129 | 0,562 | 5515 | 1,229 | 0,2993 | 0,064 |

| Charge 93/ | B20 T | B25 T | B50 T | B90 T | B100 T | B160 T | $H_c$ A/cm | $\mu_{max}$ | $B_r$ T | rho in $\mu\Omega$m | $P_{Hyst.}$ 1,5T Ws/kg |
|---|---|---|---|---|---|---|---|---|---|---|---|
| 0427 | 1,782 | 1,817 | 1,934 | 2,049 | 2,071 | 2,171 | 0,765 | 3805 | 1,013 | 0,3137 | 0,078 |
| 0428 | 1,764 | 1,790 | 1,885 | 1,981 | 2,001 | 2,089 | 0,580 | 6594 | 1,284 | 0,3004 | 0,059 |
| 0429 | 1,780 | 1,806 | 1,900 | 1,996 | 2,015 | 2,102 | 0,514 | 7120 | 1,276 | 0,3019 | 0,055 |
| 0430 | 1,777 | 1,804 | 1,898 | 1,993 | 2,012 | 2,097 | 0,637 | 5092 | 0,997 | 0,2999 | 0,061 |
| 0431 | 1,796 | 1,822 | 1,913 | 2,005 | 2,023 | 2,106 | 0,672 | 6160 | 1,263 | 0,3069 | 0,059 |
| 0432 | 1,795 | 1,821 | 1,910 | 1,997 | 2,015 | 2,099 | 0,746 | 5357 | 1,204 | 0,3149 | 0,064 |
| 0433 | 1,774 | 1,801 | 1,897 | 1,995 | 2,014 | 2,104 | 0,544 | 6782 | 1,291 | 0,3038 | 0,058 |
| 0434 | 1,746 | 1,775 | 1,873 | 1,976 | 1,998 | 2,094 | 0,683 | 5514 | 1,255 | 0,3057 | 0,066 |
| 0435 | 1,795 | 1,821 | 1,915 | 2,010 | 2,029 | 2,113 | 0,488 | 8261 | 1,437 | 0,3020 | 0,057 |
| 0436 | 1,769 | 1,798 | 1,896 | 1,995 | 2,015 | 2,105 | 0,500 | 6983 | 1,322 | 0,3128 | 0,059 |
| 0437 | 1,763 | 1,791 | 1,889 | 1,991 | 2,010 | 2,101 | 0,436 | 7917 | 1,336 | 0,3064 | 0,056 |
| 0438 | 1,804 | 1,830 | 1,924 | 2,016 | 2,034 | 2,116 | 0,470 | 8359 | 1,370 | 0,3065 | 0,054 |
| 0439 | 1,643 | 1,673 | 1,780 | 1,898 | 1,923 | 2,041 | 0,578 | 5351 | 1,228 | 0,3026 | 0,076 |
| 0440 | 1,800 | 1,828 | 1,921 | 2,016 | 2,035 | 2,117 | 0,391 | 10119 | 1,301 | 0,2996 | 0,052 |
| 0441 | 1,800 | 1,828 | 1,925 | 2,021 | 2,039 | 2,121 | 0,353 | 8636 | 1,260 | 0,3053 | 0,053 |
| 0442 | 1,654 | 1,684 | 1,791 | 1,903 | 1,926 | 2,026 | 0,243 | 8863 | 0,803 | 0,3464 | 0,050 |
| 0443 | 1,561 | 1,590 | 1,693 | 1,807 | 1,830 | 1,949 | 0,792 | 4639 | 1,133 | 0,3869 | 0,078 |
| 0502 | 1,742 | 1,770 | 1,871 | 1,974 | 1,996 | 2,092 | 0,615 | 7186 | 1,307 | 0,2999 | 0,063 |
| 0503 | 1,751 | 1,779 | 1,878 | 1,979 | 1,999 | 2,094 | 0,547 | 6764 | 1,157 | 0,3019 | 0,057 |
| 0504 | 1,772 | 1,801 | 1,899 | 1,998 | 2,018 | 2,109 | 0,394 | 10716 | 1,303 | 0,3059 | 0,055 |
| 0505 | 1,785 | 1,814 | 1,912 | 2,012 | 2,031 | 2,119 | 0,334 | 12009 | 1,264 | 0,3085 | 0,051 |

Tabelle 16

| Charge 93/ | B20 T | B25 T | B50 T | B90 T | B100 T | B160 T | H$_c$ A/cm | μ$_{max}$ | B$_r$ T | P$_{Hyst.}$1,5T Ws/kg |
|---|---|---|---|---|---|---|---|---|---|---|
| 0322 | 1,693 | 1,722 | 1,826 | 1,940 | 1,964 | 2,077 | 0,586 | 8599 | 1,373 | 0,061 |
| 0323 | 1,715 | 1,744 | 1,852 | 1,973 | 1,996 | 2,114 | 0,400 | 9047 | 1,272 | 0,062 |
| 0324 | 1,753 | 1,786 | 1,903 | 2,032 | 2,058 | 2,180 | 0,718 | 4769 | 1,126 | 0,079 |
| 0325 | 1,669 | 1,701 | 1,815 | 1,936 | 1,960 | 2,075 | 0,813 | 3928 | 0,961 | 0,082 |
| 0326 | 1,694 | 1,731 | 1,856 | 1,986 | 2,013 | 2,135 | 1,782 | 1959 | 0,886 | 0,131 |
| 0327 | 1,704 | 1,736 | 1,849 | 1,965 | 1,988 | 2,093 | 0,653 | 4605 | 1,034 | 0,075 |
| 0328 | 1,773 | 1,800 | 1,896 | 1,995 | 2,014 | 2,102 | 0,410 | 13856 | 1,488 | 0,050 |
| 0329 | 1,808 | 1,833 | 1,925 | 2,018 | 2,035 | 2,115 | 0,369 | 17227 | 1,528 | 0,046 |
| 0330 | 1,813 | 1,839 | 1,930 | 2,021 | 2,039 | 2,118 | 0,354 | 19591 | 1,514 | 0,046 |
| 0331 | 1,717 | 1,750 | 1,868 | 1,993 | 2,018 | 2,132 | 0,883 | 4899 | 1,281 | 0,079 |
| 0332 | 1,704 | 1,738 | 1,855 | 1,980 | 2,004 | 2,119 | 0,852 | 4964 | 1,267 | 0,076 |
| 0333 | 1,671 | 1,705 | 1,824 | 1,953 | 1,979 | 2,104 | 0,771 | 5067 | 1,240 | 0,073 |
| 0334 | 1,707 | 1,740 | 1,855 | 1,976 | 2,000 | 2,114 | 0,944 | 4607 | 1,187 | 0,080 |
| 0335 | 1,817 | 1,846 | 1,951 | 2,053 | 2,073 | 2,161 | 0,451 | 9277 | 1,273 | 0,064 |
| 0336 | 1,713 | 1,746 | 1,864 | 1,989 | 2,014 | 2,131 | 0,766 | 5201 | 1,271 | 0,073 |
| 0337 | 1,707 | 1,74 | 1,859 | 1,986 | 2,011 | 2,131 | 0,792 | 5153 | 1,275 | 0,074 |
| 0338 | 1,71 | 1,743 | 1,859 | 1,981 | 2,006 | 2,120 | 0,904 | 4893 | 1,239 | 0,078 |
| 0339 | 1,684 | 1,723 | 1,850 | 1,968 | 1,990 | 2,089 | 0,512 | 4711 | 0,596 | 0,052 |
| 0420 | 1,786 | 1,811 | 1,904 | 1,997 | 2,015 | 2,098 | 0,445 | 12018 | 1,506 | 0,058 |
| 0421 | 1,797 | 1,824 | 1,920 | 2,018 | 2,037 | 2,122 | 0,489 | 8162 | 1,433 | 0,066 |
| 0422 | 1,746 | 1,773 | 1,866 | 1,962 | 1,980 | 2,066 | 0,512 | 9799 | 1,423 | 0,062 |
| 0423 | 1,573 | 1,601 | 1,702 | 1,814 | 1,838 | 1,955 | 0,845 | 5155 | 1,282 | 0,092 |
| 0424 | 1,726 | 1,750 | 1,839 | 1,931 | 1,949 | 2,035 | 0,383 | 14713 | 1,504 | 0,053 |
| 0425 | 1,780 | 1,806 | 1,896 | 1,987 | 2,005 | 2,089 | 0,399 | 15271 | 1,553 | 0,053 |
| 0426 | 1,785 | 1,814 | 1,915 | 2,017 | 2,038 | 2,129 | 0,561 | 6785 | 1,415 | 0,067 |
| 0427 | 1,791 | 1,825 | 1,941 | 2,055 | 2,077 | 2,176 | 0,823 | 4271 | 1,173 | 0,083 |
| 0428 | 1,772 | 1,799 | 1,893 | 1,990 | 2,009 | 2,097 | 0,540 | 8640 | 1,450 | 0,061 |
| 0429 | 1,781 | 1,807 | 1,901 | 1,996 | 2,015 | 2,103 | 0,465 | 10832 | 1,486 | 0,056 |
| 0430 | 1,782 | 1,809 | 1,901 | 1,995 | 2,014 | 2,101 | 0,520 | 9229 | 1,463 | 0,057 |
| 0431 | 1,801 | 1,827 | 1,918 | 2,010 | 2,027 | 2,110 | 0,572 | 9119 | 1,503 | 0,060 |
| 0432 | 1,815 | 1,840 | 1,927 | 2,017 | 2,033 | 2,113 | 0,516 | 11109 | 1,491 | 0,050 |
| 0433 | 1,782 | 1,808 | 1,903 | 2,000 | 2,020 | 2,108 | 0,412 | 12767 | 1,478 | 0,050 |
| 0434 | 1,752 | 1,780 | 1,877 | 1,980 | 2,001 | 2,095 | 0,495 | 11386 | 1,467 | 0,054 |
| 0435 | 1,795 | 1,821 | 1,914 | 2,009 | 2,027 | 2,111 | 0,404 | 15751 | 1,542 | 0,049 |
| 0436 | 1,775 | 1,802 | 1,900 | 1,998 | 2,017 | 2,104 | 0,402 | 13814 | 1,480 | 0,049 |
| 0437 | 1,767 | 1,793 | 1,891 | 1,993 | 2,013 | 2,103 | 0,409 | 13273 | 1,488 | 0,053 |
| 0438 | 1,810 | 1,836 | 1,929 | 2,021 | 2,039 | 2,120 | 0,406 | 15090 | 1,547 | 0,047 |

(fortgesetzt)

| Charge 93/ | B20 T | B25 T | B50 T | B90 T | B100 T | B160 T | $H_c$ A/cm | $\mu_{max}$ | $B_r$ T | $P_{Hyst.}$1,5T Ws/kg |
|---|---|---|---|---|---|---|---|---|---|---|
| 0439 | 1,647 | 1,676 | 1,783 | 1,901 | 1,925 | 2,042 | 0,761 | 4766 | 1,319 | 0,087 |
| 0440 | 1,801 | 1,829 | 1,921 | 2,016 | 2,033 | 2,115 | 0,347 | 15730 | 1,499 | 0,047 |
| 0441 | 1,804 | 1,832 | 1,927 | 2,022 | 2,040 | 2,120 | 0,327 | 16232 | 1,493 | 0,048 |
| 0442 | 1,655 | 1,685 | 1,792 | 1,903 | 1,925 | 2,026 | 0,256 | 9205 | 0,784 | 0,050 |
| 0443 | 1,559 | 1,590 | 1,694 | 1,808 | 1,831 | 1,946 | 0,865 | 4148 | 1,143 | 0,097 |
| 0502 | 1,744 | 1,772 | 1,869 | 1,973 | 1,993 | 2,089 | 0,527 | 10468 | 1,423 | 0,056 |
| 0503 | 1,757 | 1,784 | 1,879 | 1,980 | 2,000 | 2,095 | 0,453 | 11708 | 1,408 | 0,050 |
| 0504 | 1,776 | 1,803 | 1,900 | 1,999 | 2,019 | 2,109 | 0,351 | 14009 | 1,396 | 0,051 |
| 0505 | 1,787 | 1,813 | 1,912 | 2,011 | 2,031 | 2,118 | 0,297 | 15480 | 1,362 | 0,047 |

Tabelle 17

| Charge 93/ | Glühung | B20 T | B25 T | B50 T | B90 T | B100 T | B160 T | $H_c$ A/cm | $\mu_{max}$ | $B_r$ T | $P_{Hyst.}$ 1,5T Ws/kg |
|---|---|---|---|---|---|---|---|---|---|---|---|
| 0322 | 4h 1000°C<br>+10h 880°C | 1,724<br>1,729 | 1,754<br>1,759 | 1,859<br>1,862 | 1,969<br>1,972 | 1,991<br>1,995 | 2,097<br>2,102 | 0,768<br>0,737 | 4338<br>5449 | 1,069<br>1,261 | 0,079<br>0,074 |
| 0323 | 4h 1000°C<br>+10h 880°C | 1,719<br>1,721 | 1,750<br>1,750 | 1,858<br>1,858 | 1,976<br>1,978 | 2,000<br>2,002 | 2,116<br>2,118 | 0,486<br>0,483 | 5242<br>5573 | 0,913<br>0,968 | 0,079<br>0,075 |
| 0325 | 4h 1000°C<br>+10h 850°C | 1,684<br>1,687 | 1,716<br>1,716 | 1,824<br>1,823 | 1,938<br>1,939 | 1,962<br>1,963 | 2,073<br>2,075 | 0,999<br>0,903 | 3559<br>4733 | 0,940<br>1,224 | 0,083<br>0,077 |
| 0326 | 4h 1000°C<br>+10h 850°C | 1,711<br>1,710 | 1,749<br>1,745 | 1,873<br>1,866 | 1,996<br>1,992 | 2,021<br>2,018 | 2,137<br>2,137 | 1,485<br>1,478 | 2412<br>2945 | 0,911<br>1,010 | 0,110<br>0,102 |
| 0327 | 4h 1000°C<br>+10h 850°C | 1,688<br>1,689 | 1,719<br>1,720 | 1,827<br>1,828 | 1,941<br>1,942 | 1,964<br>1,965 | 2,072<br>2,073 | 0,830<br>0,890 | 4123<br>4324 | 0,992<br>1,130 | 0,076<br>0,080 |
| 0328 | 4h 1000°C<br>+10h 880°C | 1,768<br>1,772 | 1,795<br>1,799 | 1,892<br>1,896 | 1,991<br>1,995 | 2,011<br>2,014 | 2,101<br>2,104 | 0,655<br>0,637 | 5130<br>6179 | 1,160<br>1,368 | 0,068<br>0,067 |
| 0331 | 4h 1000°C<br>+10h 880°C | 1,716<br>1,717 | 1,753<br>1,752 | 1,873<br>1,870 | 1,995<br>1,992 | 2,019<br>2,016 | 2,132<br>2,130 | 1,053<br>1,192 | 3037<br>3336 | 0,942<br>1,065 | 0,090<br>0,093 |
| 0332 | 4h 1000°C<br>+10h 880°C | 1,706<br>1,709 | 1,741<br>1,745 | 1,862<br>1,865 | 1,986<br>1,988 | 2,011<br>2,013 | 2,124<br>2,128 | 0,994<br>1,079 | 3212<br>3460 | 0,950<br>1,153 | 0,088<br>0,095 |
| 0333 | 4h 1000°C<br>+10h 880°C | 1,691<br>1,683 | 1,726<br>1,718 | 1,843<br>1,837 | 1,964<br>1,961 | 1,989<br>1,986 | 2,105<br>2,107 | 1,147<br>1,089 | 3036<br>3858 | 0,944<br>0,972 | 0,090<br>0,081 |
| 0334 | 4h 1000°C<br>+10h 880°C | 1,707<br>1,706 | 1,742<br>1,742 | 1,860<br>1,859 | 1,979<br>1,978 | 2,003<br>2,001 | 2,115<br>2,114 | 1,144<br>1,100 | 3075<br>3581 | 0,928<br>1,000 | 0,090<br>0,089 |
| 0336 | 4h 1000°C<br>+10h 880°C | 1,732<br>1,736 | 1,766<br>1,770 | 1,883<br>1,885 | 2,001<br>2,003 | 2,024<br>2,027 | 2,133<br>2,137 | 1,035<br>1,092 | 3128<br>3634 | 0,893<br>1,125 | 0,085<br>0,088 |
| 0337 | 4h 1000°C<br>+10h 880°C | 1,707<br>1,704 | 1,741<br>1,738 | 1,861<br>1,857 | 1,985<br>1,982 | 2,010<br>2,007 | 2,127<br>2,123 | 1,027<br>1,095 | 3190<br>3449 | 0,943<br>1,108 | 0,089<br>0,095 |
| 0338 | 4h 1000°C<br>+10h 880°C | 1,712<br>1,713 | 1,749<br>1,748 | 1,866<br>1,864 | 1,986<br>1,986 | 2,010<br>2,010 | 2,122<br>2,125 | 1,161<br>1,260 | 2888<br>3421 | 0,919<br>1,057 | 0,092<br>0,094 |
| 0339 | 4h 1100°C<br>+10h 910°C<br>+4h 1000°C | 1,686<br>1,687<br>1,692 | 1,722<br>1,723<br>1,726 | 1,841<br>1,843<br>1,841 | 1,961<br>1,963<br>1,960 | 1,983<br>1,986<br>1,983 | 2,085<br>2,087<br>2,086 | 0,587<br>0,507<br>0,438 | 5345<br>6186<br>6989 | 0,897<br>0,952<br>0,984 | 0,059<br>0,058<br>0,061 |

| Charge 93/ | Glühung | B20 T | B25 T | B50 T | B90 T | B100 T | B160 T | $H_c$ A/cm | $\mu_{max}$ | $B_r$ T | $P_{Hyst.}$ 1,5T Ws/kg |
|---|---|---|---|---|---|---|---|---|---|---|---|
| 0420 | 4h 1050°C | 1,788 | 1,813 | 1,905 | 1,998 | 2,018 | 2,101 | 0,420 | 11185 | 1,479 | - |
| | +10h 910°C | 1,789 | 1,816 | 1,907 | 2,000 | 2,017 | 2,098 | 0,444 | 11842 | 1,514 | 0,058 |
| | +10h 950°C | 1,794 | 1,820 | 1,912 | 2,004 | 2,023 | 2,102 | 0,433 | 14222 | 1,540 | 0,056 |
| 0421 | 4h 1050°C | 1,795 | 1,822 | 1,919 | 2,017 | 2,037 | 2,124 | 0,459 | 7856 | 1,387 | 0,058 |
| | +10h 910°C | 1,797 | 1,824 | 1,920 | 2,018 | 2,037 | 2,122 | 0,489 | 8162 | 1,433 | - |
| | +10h 940°C | 1,798 | 1,825 | 1,921 | 2,018 | 2,037 | 2,121 | 0,467 | 11468 | 1,519 | 0,061 |
| 0422 | 4h 1100°C | 1,733 | 1,760 | 1,856 | 1,955 | 1,974 | 2,063 | 0,432 | 11411 | 1,408 | 0,053 |
| | +10h 960°C | 1,736 | 1,764 | 1,859 | 1,958 | 1,978 | 2,068 | 0,382 | 14880 | 1,448 | 0,048 |
| 0423 | 4h 1100°C | 1,635 | 1,662 | 1,760 | 1,867 | 1,888 | 1,993 | 0,653 | 6647 | 1,280 | 0,065 |
| | +4h 950°C | 1,634 | 1,661 | 1,760 | 1,868 | 1,891 | 1,998 | 0,621 | 7626 | 1,296 | 0,064 |
| 0424 | 4h 1050°C | 1,728 | 1,752 | 1,840 | 1,934 | 1,953 | 2,039 | 0,352 | 13523 | 1,458 | 0,045 |
| | +10h 910°C | 1,726 | 1,750 | 1,839 | 1,931 | 1,949 | 2,035 | 0,383 | 14713 | 1,504 | - |
| | +10h 940°C | 1,716 | 1,743 | 1,836 | 1,930 | 1,948 | 2,033 | 0,329 | 12908 | 1,217 | 0,055 |
| 0425 | 4h 1050°C | 1,783 | 1,808 | 1,898 | 1,989 | 2,007 | 2,089 | 0,404 | 11119 | 1,464 | 0,048 |
| | +10h 910°C | 1,780 | 1,806 | 1,896 | 1,987 | 2,005 | 2,089 | 0,399 | 15271 | 1,553 | - |
| | +10h 925°C | 1,781 | 1,807 | 1,897 | 1,988 | 2,006 | 2,088 | 0,361 | 18225 | 1,559 | 0,047 |
| 0432 | 4h 1000°C | 1,797 | 1,824 | 1,915 | 2,009 | 2,027 | 2,112 | 0,640 | 6876 | 1,329 | 0,059 |
| | +10h 900°C | 1,799 | 1,826 | 1,917 | 2,010 | 2,028 | 2,113 | 0,541 | 10118 | 1,509 | 0,058 |
| 0434 | 4h 1000°C | 1,739 | 1,767 | 1,868 | 1,973 | 1,995 | 2,094 | 0,675 | 5583 | 1,235 | 0,067 |
| | +10h 900°C | 1,737 | 1,765 | 1,865 | 1,971 | 1,992 | 2,092 | 0,617 | 7890 | 1,420 | 0,064 |
| 0443 | 60h 980°C | 1,564 | 1,595 | 1,701 | 1,813 | 1,836 | 1,949 | 1,022 | 3991 | 1,245 | 0,108 |

Tabelle 18

| Charge 93/ | Glühung | B20 T | B25 T | B50 T | B90 T | B100 T | B160 T | $H_c$ A/cm | $\mu_{max}$ | $B_r$ T | $P_{Hyst.}$ 1,5T Ws/kg |
|---|---|---|---|---|---|---|---|---|---|---|---|
| 0423 | 4h 1050°C +10h 910°C | 1,577 | 1,604 | 1,703 | 1,815 | 1,838 | 1,956 | 0,798 | 5361 | 1,287 | 0,079 |
| | | 1,573 | 1,601 | 1,702 | 1,814 | 1,838 | 1,955 | 0,845 | 5155 | 1,282 | 0,092 |
| 0423 | 4h 1100°C +4h 950°C | 1,635 | 1,662 | 1,760 | 1,867 | 1,888 | 1,993 | 0,653 | 6647 | 1,280 | 0,065 |
| | | 1,634 | 1,661 | 1,760 | 1,868 | 1,891 | 1,998 | 0,621 | 7626 | 1,296 | 0,064 |
| 0423 | 4h 1100°C +4h 910°C +4h 950°C +4h 1030°C | 1,639 | 1,666 | 1,764 | 1,871 | 1,893 | 1,998 | 0,630 | 6814 | 1,278 | 0,065 |
| | | 1,636 | 1,664 | 1,762 | 1,869 | 1,890 | 1,996 | 0,715 | 6508 | 1,241 | 0,071 |
| | | 1,635 | 1,662 | 1,761 | 1,870 | 1,892 | 1,998 | 0,616 | 7820 | 1,321 | 0,065 |
| | | 1,635 | 1,662 | 1,762 | 1,870 | 1,892 | 1,999 | 0,874 | 5103 | 1,303 | 0,076 |
| 0423 | 4h 910°C | 1,597 | 1,625 | 1,723 | 1,831 | 1,853 | 1,964 | 0,777 | 4524 | 0,974 | 0,077 |
| 0423 | 20h 910°C | 1,588 | 1,616 | 1,716 | 1,825 | 1,847 | 1,962 | 0,744 | 4412 | 1,016 | 0,074 |
| 0423 | 4h 950°C | 1,576 | 1,604 | 1,703 | 1,816 | 1,839 | 1,959 | 0,593 | 4901 | 1,117 | 0,071 |
| 0423 | 20h 950°C | 1,579 | 1,607 | 1,705 | 1,814 | 1,837 | 1,952 | 0,608 | 4782 | 1,193 | 0,080 |

Tabelle 19

| Charge 93/ | B20 T | B25 T | B50 T | B90 T | B100 T | B160 T | $H_c$ A/cm | $\mu_{max}$ | $B_r$ T | $P_{Hyst.}$ 1,5T Ws/kg |
|---|---|---|---|---|---|---|---|---|---|---|
| 0325 | 1,691 | 1,721 | 1,829 | 1,945 | 1,968 | 2,079 | 0,804 | 4377 | 1,139 | 0,079 |
| 0328 | 1,77 | 1,798 | 1,898 | 1,999 | 2,019 | 2,108 | 0,530 | 6309 | 1,283 | 0,060 |
| 0330 | 1,812 | 1,839 | 1,932 | 2,025 | 2,043 | 2,122 | 0,305 | 14015 | 1,518 | 0,043 |

Tabelle 20

| Charge 93/ | B20 T | B25 T | B50 T | B90 T | B100 T | B160 T | $H_c$ A/cm | $\mu_{max}$ | $B_r$ T | $P_{Hyst.}$ 1,5T Ws/kg |
|---|---|---|---|---|---|---|---|---|---|---|
| 0325 | 1,679 | 1,71 | 1,822 | 1,941 | 1,966 | 2,078 | 0,657 | 4347 | 1,054 | 0,078 |
| 0328 | 1,773 | 1,801 | 1,899 | 1,999 | 2,019 | 2,108 | 0,369 | 9970 | 1,417 | 0,050 |
| 0330 | 1,813 | 1,84 | 1,933 | 2,025 | 2,043 | 2,121 | 0,296 | 19653 | 1,505 | 0,045 |

Tabelle 21

| Charge 93/ | B20 T | B25 T | B50 T | B90 T | B100 T | B160 T | $H_c$ A/cm | $\mu_{max}$ | $B_r$ T | Rho in $\mu\Omega$m | $P_{Hyst.}$ 1,5T Ws/kg |
|---|---|---|---|---|---|---|---|---|---|---|---|
| 0322 | 1,674 | 1,705 | 1,813 | 1,929 | 1,953 | 2,069 | 0,694 | 4737 | 1,067 | 0,3155 | 0,071 |
| 0323 | 1,681 | 1,711 | 1,820 | 1,945 | 1,971 | 2,095 | 0,473 | 6562 | 1,154 | 0,1891 | 0,065 |
| 0324 | 1,747 | 1,781 | 1,903 | 2,034 | 2,061 | 2,185 | 0,655 | 4720 | 1,025 | 0,1572 | 0,078 |
| 0325 | 1,652 | 1,684 | 1,797 | 1,917 | 1,941 | 2,061 | 0,845 | 3729 | 0,878 | 0,3393 | 0,081 |
| 0326 | 1,685 | 1,724 | 1,852 | 1,984 | 2,012 | 2,136 | 1,283 | 2410 | 0,895 | 0,3731 | 0,108 |
| 0327 | 1,649 | 1,680 | 1,793 | 1,917 | 1,942 | 2,061 | 0,712 | 4155 | 0,909 | 0,3274 | 0,077 |
| 0328 | 1,726 | 1,754 | 1,854 | 1,958 | 1,980 | 2,077 | 0,685 | 4958 | 1,097 | 0,3171 | 0,069 |
| 0329 | 1,797 | 1,824 | 1,918 | 2,012 | 2,031 | 2,114 | 0,524 | 7497 | 1,347 | 0,3019 | 0,053 |
| 0330 | 1,786 | 1,814 | 1,910 | 2,009 | 2,028 | 2,117 | 0,382 | 10051 | 1,414 | 0,2904 | 0,051 |
| 0331 | 1,689 | 1,724 | 1,847 | 1,975 | 2,002 | 2,123 | 0,935 | 3003 | 0,884 | 0,3356 | 0,088 |
| 0332 | 1,679 | 1,715 | 1,838 | 1,968 | 1,995 | 2,115 | 0,907 | 3034 | 0,863 | 0,3624 | 0,089 |
| 0333 | 1,664 | 1,699 | 1,821 | 1,951 | 1,978 | 2,103 | 0,828 | 3402 | 0,869 | 0,3557 | 0,085 |
| 0334 | 1,718 | 1,754 | 1,872 | 1,992 | 2,016 | 2,126 | 0,979 | 2986 | 0,826 | 0,3533 | 0,083 |
| 0335 | 1,811 | 1,843 | 1,948 | 2,051 | 2,071 | 2,158 | 0,479 | 5484 | 1,141 | 0,2922 | 0,066 |
| 0336 | 1,687 | 1,723 | 1,845 | 1,972 | 1,998 | 2,117 | 0,877 | 3184 | 0,843 | 0,3372 | 0,086 |
| 0337 | 1,679 | 1,715 | 1,839 | 1,970 | 1,996 | 2,120 | 0,865 | 3245 | 0,882 | 0,3346 | 0,087 |
| 0338 | 1,703 | 1,739 | 1,858 | 1,979 | 2,004 | 2,119 | 0,999 | 2916 | 0,865 | 0,3356 | 0,088 |
| 0339 | 1,686 | 1,722 | 1,841 | 1,961 | 1,983 | 2,085 | 0,587 | 5345 | 0,897 | 0,3027 | 0,059 |
| 0422 | 1,733 | 1,760 | 1,856 | 1,955 | 1,974 | 2,063 | 0,432 | 11411 | 1,408 | - | 0,053 |
| 0423 | 1,635 | 1,662 | 1,760 | 1,867 | 1,888 | 1,993 | 0,653 | 6647 | 1,280 | - | 0,065 |

Tabelle 22

| Charge 93/ | B20 T | B25 T | B50 T | B90 T | B100 T | B160 T | $H_c$ A/cm | $\mu_{max}$ | $B_r$ T | $P_{Hyst.}$1,5T Ws/kg |
|---|---|---|---|---|---|---|---|---|---|---|
| 0322 | 1,674 | 1,702 | 1,808 | 1,926 | 1,950 | 2,069 | 0,471 | 7929 | 1,376 | **0,056** |
| 0323 | 1,684 | 1,714 | 1,823 | 1,946 | 1,971 | 2,096 | 0,383 | 8883 | 1,353 | 0,058 |
| 0324 | 1,750 | 1,783 | 1,903 | 2,034 | 2,060 | 2,184 | 0,695 | 4542 | 1,113 | 0,080 |
| 0325 | 1,649 | 1,681 | 1,796 | 1,921 | 1,946 | 2,066 | 0,783 | 3975 | 0,968 | 0,085 |
| 0326 | 1,690 | 1,728 | 1,854 | 1,986 | 2,012 | 2,137 | 1,644 | 1987 | 0,915 | 0,131 |
| 0327 | 1,667 | 1,699 | 1,813 | 1,936 | 1,961 | 2,075 | 0,616 | 4476 | 0,992 | 0,080 |
| 0328 | 1,730 | 1,757 | 1,856 | 1,962 | 1,982 | 2,080 | 0,489 | 8729 | 1,393 | 0,054 |
| 0329 | 1,805 | 1,831 | 1,923 | 2,016 | 2,034 | 2,116 | 0,396 | 12084 | 1,520 | 0,047 |
| 0330 | 1,787 | 1,814 | 1,908 | 2,006 | 2,025 | 2,113 | 0,378 | 9892 | 1,457 | 0,054 |
| 0331 | 1,693 | 1,726 | 1,846 | 1,974 | 2,001 | 2,123 | 0,854 | 4279 | 1,237 | 0,080 |
| 0332 | 1,679 | 1,714 | 1,834 | 1,964 | 1,990 | 2,113 | 0,817 | 4486 | 1,233 | 0,080 |
| 0333 | 1,664 | 1,698 | 1,817 | 1,949 | 1,977 | 2,104 | 0,656 | 5334 | 1,274 | 0,071 |
| 0334 | 1,722 | 1,755 | 1,869 | 1,987 | 2,011 | 2,121 | 0,851 | 4767 | 1,253 | 0,078 |
| 0335 | 1,815 | 1,845 | 1,948 | 2,051 | 2,070 | 2,158 | 0,457 | 5600 | 1,258 | 0,064 |
| 0336 | 1,696 | 1,729 | 1,849 | 1,977 | 2,002 | 2,125 | 0,747 | 4965 | 1,228 | 0,075 |
| 0337 | 1,685 | 1,719 | 1,841 | 1,972 | 1,999 | 2,123 | 0,738 | 4623 | 1,226 | 0,078 |
| 0338 | 1,712 | 1,745 | 1,861 | 1,983 | 2,008 | 2,125 | 0,897 | 4543 | 1,246 | 0,081 |
| 0339 | 1,687 | 1,723 | 1,843 | 1,963 | 1,986 | 2,087 | 0,507 | 6186 | 0,952 | 0,058 |

Tabelle 23

| Charge 93/ | B20 T | B25 T | B50 T | B90 T | B100 T | B160 T | $H_c$ A/cm | $\mu_{max}$ | $B_r$ T | Rho in $\mu\Omega$m | $P_{Hyst.}$ 1,5T Ws/kg |
|---|---|---|---|---|---|---|---|---|---|---|---|
| 0323 | 1,678 | 1,708 | 1,818 | 1,943 | 1,97 | 2,095 | 0,397 | 6506 | 1,087 | 0,1929 | 0,069 |
| 0328 | 1,692 | 1,721 | 1,823 | 1,933 | 1,956 | 2,063 | 0,683 | 4863 | 1,088 | 0,3146 | 0,070 |
| 0329 | 1,778 | 1,806 | 1,902 | 1,999 | 2,018 | 2,106 | 0,473 | 7860 | 1,346 | 0,3022 | 0,053 |
| 0330 | 1,756 | 1,784 | 1,882 | 1,985 | 2,005 | 2,096 | 0,362 | 10568 | 1,438 | 0,2927 | 0,048 |
| 0334 | 1,683 | 1,719 | 1,84 | 1,967 | 1,992 | 2,113 | 0,856 | 3306 | 0,874 | 0,3474 | 0,083 |
| 0335 | 1,748 | 1,780 | 1,893 | 2,008 | 2,031 | 2,137 | 0,486 | 5009 | 1,119 | 0,2891 | 0,067 |
| 0339 | 1,599 | 1,641 | 1,776 | 1,910 | 1,938 | 2,062 | 0,489 | 4985 | 0,770 | - | 0,066 |
| 0442 | 1,612 | 1,654 | 1,780 | 1,897 | 1,919 | 2,022 | 0,412 | 5510 | 0,606 | - | 0,057 |

Tabelle 24

| Charge 93/ | B20 T | B25 T | B50 T | B90 T | B100 T | B160 T | H_c A/cm | μ_max | B_r T | P_Hyst. 1,5T Ws/kg |
|---|---|---|---|---|---|---|---|---|---|---|
| 0323 | 1,672 | 1,701 | 1,811 | 1,937 | 1,964 | 2,089 | 0,348 | 8185 | 1,297 | 0,064 |
| 0328 | 1,693 | 1,721 | 1,823 | 1,934 | 1,957 | 2,063 | 0,511 | 8157 | 1,37 | 0,057 |
| 0329 | 1,778 | 1,804 | 1,9 | 1,998 | 2,017 | 2,105 | 0,383 | 11748 | 1,475 | 0,048 |
| 0330 | 1,759 | 1,786 | 1,883 | 1,983 | 2,004 | 2,093 | 0,344 | 14191 | 1,46 | 0,049 |
| 0334 | 1,684 | 1,717 | 1,837 | 1,966 | 1,992 | 2,113 | 0,753 | 4701 | 1,202 | 0,076 |
| 0335 | 1,749 | 1,781 | 1,892 | 2,008 | 2,031 | 2,136 | 0,457 | 5275 | 1,174 | 0,070 |

Tabelle 25

| Charge 93/ | μ_max | Dichte (g/cm³) | Mittleres Atomgewicht Hauptelemente | Dichte per Dreisatz | Δρ (%) |
|---|---|---|---|---|---|
| 323 | 9.047 | 7,942 | 56,371 | **7,942** | 0,00% |
| 325 | 4.722 | 7,923 | 56,296 | 7,931 | -0,11% |
| 327 | 4.605 | 7,918 | 56,292 | 7,931 | -0,17% |
| 328 | 13.859 | 7,917 | 56,286 | 7,930 | -0,16% |
| 329 | 15.658 | 7,912 | 56,283 | 7,930 | -0,22% |
| 330 | 22.271 | 7,909 | 56,281 | 7,929 | -0,26% |
| 420 | 20.281 | 7,905 | 56,262 | 7,927 | -0,27% |
| 422 | 11.411 | 7,894 | 56,224 | 7,921 | -0,34% |
| 423 | 7.626 | 7,882 | 56,202 | 7,918 | -0,46% |
| 428 | 8.640 | 7,911 | 56,279 | 7,929 | -0,23% |
| 429 | 10.832 | 7,911 | 56,279 | 7,929 | -0,23% |
| 430 | 9.229 | 7,914 | 56,280 | 7,929 | -0,19% |
| 431 | 9.119 | 7,910 | 56,278 | 7,929 | -0,24% |
| 432 | 11.109 | 7,910 | 56,277 | 7,929 | -0,24% |
| 433 | 12.767 | 7,911 | 56,284 | 7,930 | -0,23% |
| 434 | 11.386 | 7,913 | 56,290 | 7,931 | -0,22% |
| 435 | 15.751 | 7,912 | 56,304 | 7,933 | -0,26% |
| 436 | 13.814 | 7,921 | 56,403 | 7,947 | -0,32% |
| 437 | 13.273 | 7,908 | 56,266 | 7,927 | -0,24% |
| 438 | 15.090 | 7,917 | 56,380 | 7,943 | -0,32% |
| 440 | 15.730 | 7,910 | 56,274 | 7,928 | -0,24% |
| 441 | 16.232 | 7,913 | 56,283 | 7,930 | -0,21 % |
| 76/4988 | 12.150 | 7,899 | 56,249 | 7,925 | -0,33% |
| 0502 | 11.770 | 7,909 | 56,277 | 7,929 | -0,25% |
| 0503 | 11.708 | 7,910 | 56,276 | 7,929 | -0,24% |
| 0504 | 21.461 | 7,898 | 56,232 | 7,922 | -0,31 % |
| 0505 | 25.320 | 7,894 | 56,192 | 7,917 | -0,29% |

Tabelle 26

| Charge 93/ | Glühung | B20 T | B25 T | B50 T | B90 T | B100 T | B160 T | $H_c$ A/cm | $\mu_{max}$ | $B_r$ in T | $P_{Hyst.}$ 1,5T Ws/kg |
|---|---|---|---|---|---|---|---|---|---|---|---|
| 0329 | 4h 1050°C + 10h 910°C | 1,808 | 1,833 | 1,925 | 2,018 | 2,035 | 2,115 | 0,369 | 17227 | 1,528 | 0,046 |
| 0330 | 4h 1050°C + 10h 910°C | 1,813 | 1,839 | 1,930 | 2,021 | 2,039 | 2,118 | 0,354 | 19591 | 1,514 | 0,046 |
| 0330 | 4h 1050°C Abkühlung 50°C/h + 10h, 910°C | 1,815 | 1,840 | 1,934 | 2,027 | 2,045 | 2,122 | 0,305 | 22271 | 1,514 | 0,045 |
| 0420 | 4h 1000°C + 60h 950°C | 1,798 | 1,824 | 1,914 | 2,006 | 2,024 | 2,104 | 0,347 | 20281 | 1,548 | 0,042 |
| 0420 | 4h 1050°C Abkühlung 150°C/h | 1,767 | 1,793 | 1,889 | 1,988 | 2,007 | 2,094 | 0,378 | 14388 | 1,456 | 0,049 |
| 0505 | 4h 1050°C Abkühlung 150°C/h | 1,809 | 1,837 | 1,935 | 2,031 | 2,049 | 2,129 | 0,279 | 13981 | 1,290 | 0,046 |
| 0505 | 4h 1050°C + 10h 910°C | 1,787 | 1,813 | 1,912 | 2,011 | 2,031 | 2,118 | 0,297 | 15480 | 1,362 | 0,047 |
| 0505 | 4h 1050°C + 10h 910°C + 10h 930°C + 10h 940°C | 1,790 | 1,817 | 1,914 | 2,012 | 2,032 | 2,117 | 0,244 | 25320 | 1,524 | 0,043 |
| 504 | 4h 1050°C Abkühlung 150°C/h | 1,772 | 1,801 | 1,899 | 1,998 | 2,018 | 2,109 | 0,394 | 10716 | 1,303 | 0,055 |
| 504 | 4h 1050°C + 10h 910°C | 1,776 | 1,803 | 1,900 | 1,999 | 2,019 | 2,109 | 0,351 | 14009 | 1,396 | 0,051 |
| 504 | 4h 1050°C + 10h 910°C + 10h 930°C + 10h 940°C | 1,774 | 1,800 | 1,894 | 1,993 | 2,011 | 2,098 | 0,294 | 21461 | 1,52 | 0,046 |

Tabelle 27

| Charge | Glühung | C in ppmw | S in ppmw |
|--------|---------|-----------|-----------|
| 93/0435 | ungeglüht | 32 | 36 |
| | 4h 1050°C, $H_2$ + 10h 910°C, $H_2$ (zwei Glühungen) | 15 | 12 |
| 93/0440 | ungeglüht | 30 | 13 |
| | 4h 1050°C, 10h 910°C, $H_2$ (eine Glühung) | 14 | 6 |
| 93/0505 | ungeglüht | 30 | 8 |
| | 4h 1050°C, $H_2$ (eine Glühung) | 12 | 4 |
| | 4h 1050°C, $H_2$ + 10h 910°C, $H_2$ (zwei Glühungen) | 16 | 4 |
| 76/4998 | ungeglüht | 20 | 48 |
| | 4h 1050°C, $H_2$,10h 910°C, $H_2$ (eine Glühung) | 21 | 23 |
| 76/5180 | ungeglüht | 26 | 60 |
| | 4h 1050°C, $H_2$ (eine Glühung) | 17 | 40 |
| | 4h 1050°C, $H_2$ + 10h 930°C, $H_2$ (zwei Glühungen) | 15 | 36 |
| | | | |
| 76/5180 | ungeglüht | 26 | 60 |
| | 6h 1050°C, $H_2$ (eine Glühung) | 17 | 31 |
| | 6h 1050°C, $H_2$ + 10h 930°C, $H_2$ (zwei Glühungen) | 17 | 28 |

Tabelle 28

| Charge | Probe | Abm. (mm) | Schlussglühung | B20 in T | B25 in T | B50 in T | B90 in T | B100 inT | B160 inT | Hc Ringe in A/cm | μmax | P$_{Hyst.}$ bei 1,5T in Ws/kg |
|---|---|---|---|---|---|---|---|---|---|---|---|---|
| | aus Warmwalzdicke 1,9mm | | | | | | | | | | | |
| 7604988A | ohne Zwischenglühung (ZGL) | 0,35 | 4h, 1050°C | 1,704 | 1,734 | 1,836 | 1,946 | 1,968 | 2,069 | 0,428 | 10836 | 0,054 |
| 7604988A | ohne ZGL | 0,35 | 4h, 1050°C + 10h, 910°C | 1,702 | 1,732 | 1,834 | 1,944 | 1,965 | 2,068 | 0,429 | 11635 | 0,053 |
| 7604988A | ohne ZGL | 0,20 | 4h, 1050°C | 1,723 | 1,753 | 1,857 | 1,964 | 1,985 | 2,080 | 0,423 | 10555 | 0,054 |
| 7604988A | ohne ZGL | 0,20 | 4h, 1050°C + 10h, 910°C | 1,724 | 1,753 | 1,860 | 1,969 | 1,989 | 2,086 | 0,458 | 10478 | 0,054 |
| 7604988A | ZGL 1h 750°C | 0,20 | 4h, 1050°C | 1,736 | 1,764 | 1,868 | 1,972 | 1,993 | 2,086 | 0,417 | 11196 | 0,053 |
| 7604988A | ZGL 1h 750°C | 0,20 | 4h, 1050°C + 10h, 910°C | 1,738 | 1,766 | 1,868 | 1,973 | 1,994 | 2,088 | 0,421 | 12467 | 0,052 |
| 7604988A | ZGL 1h 1050°C | 0,20 | 4h, 1050°C | 1,740 | 1,769 | 1,872 | 1,976 | 1,996 | 2,088 | 0,437 | 10452 | 0,054 |
| 7604988A | ZGL 1h 1050°C | 0,20 | 4h, 1050°C + 10h, 910°C | 1,740 | 1,769 | 1,872 | 1,977 | 1,998 | 2,092 | 0,458 | 10668 | 0,054 |
| | aus Warmwalzdicke 2,6mm | | | | | | | | | | | |
| 7604988B | ohne ZGL | 0,35 | 4h, 1050°C | 1,707 | 1,735 | 1,838 | 1,945 | 1,968 | 2,067 | 0,394 | 11778 | 0,052 |
| 7604988B | ohne ZGL | 0,35 | 4h, 1050°C + 10h, 910°C | 1,709 | 1,737 | 1,839 | 1,948 | 1,970 | 2,072 | 0,406 | 12741 | 0,052 |
| 7604988B | ohne ZGL | 0,20 | 4h, 1050°C | 1,736 | 1,766 | 1,869 | 1,974 | 1,994 | 2,087 | 0,416 | 10529 | 0,053 |
| 7604988B | ohne ZGL | 0,20 | 4h, 1050°C + 10h, 910°C | 1,734 | 1,763 | 1,867 | 1,974 | 1,994 | 2,089 | 0,441 | 11174 | 0,052 |
| 7604988B | ZGL 1h 750°C | 0,20 | 4h, 1050°C | 1,762 | 1,790 | 1,888 | 1,989 | 2,009 | 2,096 | 0,383 | 12943 | 0,050 |
| 7604988B | ZGL 1h 750°C | 0,20 | 4h, 1050°C + 10h, 910°C | 1,762 | 1,790 | 1,890 | 1,991 | 2,011 | 2,100 | 0,390 | 14125 | 0,049 |
| 7604988B | ZGL 1h 1050°C | 0,20 | 4h, 1050°C | 1,753 | 1,783 | 1,883 | 1,985 | 2,005 | 2,094 | 0,395 | 12036 | 0,052 |
| 7604988B | ZGL 1h 1050°C | 0,20 | 4h, 1050°C + 10h, 910°C | 1,758 | 1,786 | 1,886 | 1,989 | 2,009 | 2,098 | 0,399 | 13094 | 0,049 |
| | aus Brammenabschnitt warm- und kaltgewalzt im Technikum | | | | | | | | | | | |
| 7604988A | ohne ZGL | 0,35 | 10h 1050°C Abk.50°C/h; 10h 930°C OK | 1,728 | 1,757 | 1,858 | 1,963 | 1,984 | 2,078 | 0,299 | 18717 | 0,043 |
| 7604988A | ohne ZGL | 0,35 | 4h, 1050°C Abk.IO°C/h | 1,732 | 1,761 | 1,860 | 1,965 | 1,985 | 2,077 | 0,485 | 8633 | 0,050 |

(fortgesetzt)

| Charge | Probe | Abm. (mm) | Schlussglühung | B20 in T | B25 in T | B50 in T | B90 in T | B100 inT | B160 inT | Hc Ringe in A/cm | $\mu_{max}$ | $P_{Hyst.}$ bei 1,5T in Ws/kg |
|---|---|---|---|---|---|---|---|---|---|---|---|---|
| 7604988A | ohne ZGL | 0,35 | 100h, 910°C | 1,584 | 1,612 | 1,711 | 1,824 | 1,849 | 1,972 | 0,578 | 5190 | 0,068 |
| 7604988A | ohne ZGL | 0,35 | 4h, 1050°C | 1,734 | 1,763 | 1,861 | 1,965 | 1,985 | 2,079 | 0,410 | 9315 | 0,050 |
| 7604988A | ohne ZGL | 0,35 | 10h 1050°C Abk.50°C/h; 10h 930°C OK | 1,725 | 1,754 | 1,855 | 1,961 | 1,982 | 2,077 | 0,311 | 12150 | 0,043 |
| 7604988A | ohne ZGL | 0,35 | 2h 1050°C; 4h 910°C | 1,735 | 1,765 | 1,867 | 1,972 | 1,993 | 2,090 | 0,422 | 9001 | 0,050 |
| | | | | | | | | | | | | |
| 7605180A | Kopf | 0,35 | 4h 1050°C | 1,760 | 1,787 | 1,888 | 1,990 | 2,010 | 2,101 | 0,388 | 9138 | 0,053 |
| 7605180A | Kopf | 0,35 | 4h 1050°C + 10h 930°C | 1,759 | 1,786 | 1,886 | 1,986 | 2,006 | 2,097 | 0,368 | 14130 | 0,050 |
| 7605180B | Kopf | 0,35 | 6h 1050°C | 1,782 | 1,810 | 1,908 | 2,008 | 2,028 | 2,114 | 0,334 | 10925 | 0,051 |
| 7605180B | Kopf | 0,35 | 6h 1050°C + 10h 930°C | 1,782 | 1,809 | 1,907 | 2,005 | 2,025 | 2,111 | 0,254 | 22632 | 0,039 |
| 7605180A | Fuß | 0,35 | 6h 1050°C | 1,784 | 1,811 | 1,907 | 2,004 | 2,023 | 2,109 | 0,370 | 9222 | 0,052 |
| 7605180A | Fuß | 0,35 | 6h 1050°C + 10h 930°C | 1,791 | 1,817 | 1,912 | 2,010 | 2,030 | 2,115 | 0,287 | 18397 | 0,041 |

Tabelle 29

| Charge 93/ | 1. Onset Auf-heizen $(T_{ü2})$ | 1. Onset Ab-kühlen $(T_{ü1})$ | bestes Hc in A/cm | Glühung |
|---|---|---|---|---|
| 323 | 940 | 932 | 0,348 | 4h 1150°C + 10h 910°C |
| 328 | 934 | 914 | 0,369 | 4h 1050°C Abk.50°C/h + 10h, 910°C |
| 329 | 952 | 933 | 0,367 | 4h 1050°C + 10h 910°C |
| 330 | 980 | 958 | 0,282 | 10h 1050°C Abk.50°C/h bis 930°C 10h OK |
| 420 | 988 | 964 | 0,347 | 4h 1000°C + 60h 950°C |
| 422 | 1017 | 979 | 0,382 | 4h 1100°C + 10h 960°C |
| 423 | 1037 | 994 | 0,593 | 4h 950°C |
| 428 | 951 | 934 | 0,540 | 4h 1050°C + 10h 910°C |
| 429 | 947 | 934 | 0,465 | 4h 1050°C + 10h 910°C |
| 430 | 944 | 932 | 0,520 | 4h 1050°C + 10h 910°C |
| 431 | 950 | 931 | 0,572 | 4h 1050°C + 10h 910°C |
| 432 | 946 | 925 | 0,516 | 4h 1050°C + 10h 910°C |
| 433 | 949 | 929 | 0,412 | 4h 1050°C + 10h 910°C |
| 434 | 944 | 921 | 0,495 | 4h 1050°C + 10h 910°C |
| 435 | 953 | 932 | 0,404 | 4h 1050°C + 10h 910°C |
| 436 | 952 | 931 | 0,402 | 4h 1050°C + 10h 910°C |
| 437 | 954 | 934 | 0,409 | 4h 1050°C + 10h 910°C |
| 438 | 955 | 934 | 0,406 | 4h 1050°C + 10h 910°C |
| 439 | 958 | 936 | 0,578 | 4h 1050°C |
| 440 | 954 | 934 | 0,331 | 4h 1050°C + 10h 910°C |
| 441 | 952 | 932 | 0,313 | 4h 1050°C + 10h 910°C |
| 443 | #NV | 1012 | 0,792 | 4h 1050°C |
| | | | | |
| | | | | **OK = Ofenkühlung** |
| | | **Abkühlung von T1 mit 150K/h, wenn nicht anders angegeben** | | |
| | | **Abkühlung von T2 mit 150K/h, wenn nicht anders angegeben** | | |
| | | | **"+" bedeutet 2 separate Glühungen** | |

**Patentansprüche**

1. Verfahren zum Herstellen einer weichmagnetischen Legierung, aufweisend:

Bereitstellen eines Vorprodukts, das eine Zusammensetzung, die im Wesentlichen aus

5 Gew.-% $\leq$ Co $\leq$ 25 Gew.-%
0,3 Gew.-% $\leq$ V $\leq$ 5,0 Gew.-%
0 Gew.-% $\leq$ Cr $\leq$ 3,0 Gew.-%
0 Gew.% $\leq$ Si $\leq$ 3,0 Gew.-%
0 Gew.% $\leq$ Mn $\leq$ 3,0 Gew.-%

0 Gew.-% $\leq$ Al $\leq$ 3,0 Gew.-%

0 Gew.% $\leq$ Ta $\leq$ 0,5 Gew.-%

0 Gew.% $\leq$ Ni $\leq$ 0,5 Gew.-%

0 Gew.% $\leq$ Mo $\leq$ 0,5 Gew.-%

0 Gew.% $\leq$ Cu $\leq$ 0,2 Gew.-%

0 Gew.% $\leq$ Nb $\leq$ 0,25 Gew.-%

0 Gew.% $\leq$ Ti $\leq$ 0,05 Gew.-%

0 Gew.% $\leq$ Ce $\leq$ 0,05 Gew.-%

0 Gew.% $\leq$ Ca $\leq$ 0,05 Gew.-%

0 Gew.% $\leq$ Mg $\leq$ 0,05 Gew.-%

0 Gew.% $\leq$ C $\leq$ 0,02 Gew.-%

0 Gew.% $\leq$ Zr $\leq$ 0,1 Gew.-%

0 Gew.% $\leq$ O $\leq$ 0,025 Gew.-%

0 Gew.% $\leq$ S $\leq$ 0,015 Gew.-%

Rest Eisen, wobei Cr+Si+Al+Mn $\leq$ 3,0 Gew.-%, und bis zu 0,2 Gew.-% an anderen Verunreinigungen besteht,

und das eine Kaltwalztextur aufweist,

wobei das Vorprodukt einen Phasenübergang von einem BCC-Phasengebiet in ein BCC/FCC Mischgebiet zu einem FCC Phasengebiet aufweist,

wobei bei aufsteigender Temperatur der Phasenübergang zwischen dem BCC Phasengebiet und dem BCC/FCC Mischgebiet bei einer ersten Übergangstemperatur $T_{Ü1}$ und bei weiter ansteigender Temperatur der Übergang zwischen dem BCC/FCC Mischgebiet und dem FCC Phasengebiet bei einer zweiten Übergangstemperatur $T_{Ü2}$ stattfindet,

als magnetische Schlussglühung am Ende aller mechanischen Bearbeitungsschritte ein Wärmebehandeln des Vorprodukts

bei einer Temperatur $T_1$, wobei $T_1 > T_{Ü2}$,

gefolgt von einer Abkühlung bis Raumtemperatur,

gefolgt von einer Aufheizung auf $T_2$, wobei $T_2 < T_{Ü1}$,

gefolgt von einem Wärmebehandeln bei $T_2$ und anschließend Abkühlung auf Raumtemperatur,

wobei 930°C $\leq T_1 <$ Tm, 700°C $\leq T_2 \leq$ 1050°C, und $T_m$ die Solidustemperatur ist,

wobei die Abkühlrate über zumindest den Temperaturbereich von $T_1$ auf $T_2$ 10°C/h bis 900°C/h beträgt.

2. Verfahren zum Herstellen einer weichmagnetischen Legierung, aufweisend:

Bereitstellen eines Vorprodukts, das eine Zusammensetzung, die im Wesentlichen aus

5 Gew.-% $\leq$ Co $\leq$ 25 Gew.-%

0,3 Gew.-% $\leq$ V $\leq$ 5,0 Gew.-%

0 Gew.-% $\leq$ Cr $\leq$ 3,0 Gew.-%

0 Gew.% $\leq$ Si $\leq$ 3,0 Gew.-%

0 Gew.% $\leq$ Mn $\leq$ 3,0 Gew.-%

0 Gew.-% $\leq$ Al $\leq$ 3,0 Gew.-%

0 Gew.% $\leq$ Ta $\leq$ 0,5 Gew.-%

0 Gew.% $\leq$ Ni $\leq$ 0,5 Gew.-%

0 Gew.% $\leq$ Mo $\leq$ 0,5 Gew.-%

0 Gew.% $\leq$ Cu $\leq$ 0,2 Gew.-%

0 Gew.% $\leq$ Nb $\leq$ 0,25 Gew.-%

0 Gew.% $\leq$ Ti $\leq$ 0,05 Gew.-%

0 Gew.% $\leq$ Ce $\leq$ 0,05 Gew.-%

0 Gew.% $\leq$ Ca $\leq$ 0,05 Gew.-%

0 Gew.% $\leq$ Mg $\leq$ 0,05 Gew.-%

0 Gew.% $\leq$ C $\leq$ 0,02 Gew.-%

0 Gew.% $\leq$ Zr $\leq$ 0,1 Gew.-%

0 Gew.% $\leq$ O $\leq$ 0,025 Gew.-%

0 Gew.% $\leq$ S $\leq$ 0,015 Gew.-%

Rest Eisen, wobei Cr+Si+Al+Mn $\leq$ 3,0 Gew.-%, und bis zu 0,2 Gew.-% an anderen Verunreinigungen besteht,

und das eine Kaltwalztextur aufweist,

wobei das Vorprodukt einen Phasenübergang von einem BCC-Phasengebiet in ein BCC/FCC Mischgebiet zu einem FCC Phasengebiet aufweist,

wobei bei aufsteigender Temperatur der Phasenübergang zwischen dem BCC Phasengebiet und dem BCC/FCC Mischgebiet bei einer ersten Übergangstemperatur $T_{Ü1}$ und bei weiter ansteigender Temperatur der Übergang zwischen dem BCC/FCC Mischgebiet und dem FCC Phasengebiet bei einer zweiten Übergangstemperatur $T_{Ü2}$ stattfindet,

als magnetische Schlussglühung am Ende aller mechanischen Bearbeitungsschritte ein Wärmebehandeln des Vorprodukts

bei einer Temperatur $T_1$, wobei $T_1 > T_{Ü2}$,

gefolgt von einer Abkühlung bis $T_2$, wobei $T_2 \leq T_{Ü1}$,

gefolgt von einem Wärmebehandeln bei $T_2$ und anschließend Abkühlung auf Raumtemperatur,

wobei $930°C \leq T_1 < Tm$, $700°C \leq T_2 \leq 1050°C$, und $T_m$ die Solidustemperatur ist, wobei die Abkühlrate über zumindest den Temperaturbereich von $T_1$ auf $T_2$ 10°C/h bis 900°C/h beträgt.

3. Verfahren nach Anspruch 1 oder 2, wobei $960°C \leq T_1 < T_m$ ist.

4. Verfahren nach einem der Ansprüche 1 bis 3, wobei das Vorprodukt für eine Zeit von über 30 Minuten oberhalb von $T_{Ü2}$ wärmebehandelt, und danach auf $T_2$ abgekühlt wird.

5. Verfahren nach einem der Ansprüche 1 bis 4, wobei das Vorprodukt bei $T_1$ für eine Zeit $t_1$ wärmebehandelt wird, wobei 15 Minuten $\leq t_1 \leq$ 20 Stunden ist, und danach von $T_1$ auf $T_2$ abgekühlt wird.

6. Verfahren nach einem der Ansprüche 1 bis 5, wobei die Wärmebehandlung bei $T_2$ für eine Zeit $t_2$ durchgeführt wird, wobei 30 Minuten $\leq t_2 \leq$ 20 Stunden ist.

7. Verfahren nach Anspruch 1 bis 6, wobei das Vorprodukt von $T_1$ auf Raumtemperatur bei einer Rate von 10°C/h bis 900°C/h, vorzugsweise 25°C/h bis 500°C/h, vorzugsweise weniger als 200°C/h abgekühlt wird.

8. Verfahren nach einem der Ansprüche 1 bis 7, wobei das Wärmebehandeln unter einer wasserstoffhaltigen Atmosphäre oder unter einem Inertgas durchgeführt wird.

9. Verfahren nach einem der Ansprüche 1 bis 8, wobei das Wärmebehandeln bei $T_1$ in einem stationären Ofen und bei $T_2$ in einem stationären Ofen oder einem Durchlaufofen durchgeführt wird, oder wobei das Wärmebehandeln bei $T_1$ in einem Durchlaufofen und bei $T_2$ in einem stationären Ofen oder einem Durchlaufofen durchgeführt wird.

10. Verfahren nach einem der Ansprüche 1 bis 9, wobei das Vorprodukt die Gestalt eines oder mehrerer Bleche oder eines oder mehrerer Blechpakete aufweist.

11. Verfahren nach einem der Ansprüche 1 bis 10, wobei das Vorprodukt zunächst die Gestalt eines Bands aufweist, aus dem zumindest ein Blech durch Stanzen, Laserschneiden oder Wasserstrahlschneiden gefertigt wird, wobei das Wärmebehandeln an einem oder mehreren Blechen erfolgt.

12. Verfahren nach Anspruch 11, wobei mehrere Bleche nach dem Wärmebehandeln mittels eines isolierenden Klebers zu einem Blechpaket verklebt, oder oberflächlich zur Einstellung einer isolierend wirkenden Schicht oxidiert werden und anschließend zum Blechpaket verklebt oder lasergeschweißt, oder mit einer anorganisch-organischen Hybridbeschichtung beschichtet und anschließend zum Blechpaket weiterverarbeitet werden.

13. Verfahren nach einem der Ansprüche 1 bis 12, wobei das Vorprodukt zunächst die Gestalt eines Blechpakets aufweist und das Wärmebehandeln an einem oder mehreren Blechpaketen erfolgt.

14. Verfahren nach einem der Ansprüche 1 bis 13, ferner umfassend Beschichten des Vorprodukts zur elektrischen Isolation mit einer Oxidschicht.

Claims

1. Method for producing a soft-magnetic alloy, comprising the provision of a precursor having a composition consisting substantially of

| | | |
|---|---|---|
| 5 % w/w | $\leq$ Co | $\leq$ 25 % w/w |
| 0.3 % w/w | $\leq$ V | $\leq$ 5.0 % w/w |
| 0% w/w | $\leq$ Cr | $\leq$ 3.0 % w/w |
| 0% w/w | $\leq$ Si | $\leq$ 3.0 % w/w |
| 0% w/w | $\leq$ Mn | $\leq$ 3.0 % w/w |
| 0% w/w | $\leq$ Al | $\leq$ 3.0 % w/w |
| 0% w/w | $\leq$ Ta | $\leq$ 0.5 % w/w |
| 0% w/w | $\leq$ Ni | $\leq$ 0.5 % w/w |
| 0% w/w | $\leq$ Mo | $\leq$ 0.5 % w/w |
| 0% w/w | $\leq$ Cu | $\leq$ 0.2 % w/w |
| 0% w/w | $\leq$ Nb | $\leq$ 0.25 % w/w |
| 0% w/w | $\leq$ Ti | $\leq$ 0.05 % w/w |
| 0% w/w | $\leq$ Ce | $\leq$ 0.05 % w/w |
| 0% w/w | $\leq$ Ca | $\leq$ 0.05 % w/w |
| 0% w/w | $\leq$ Mg | $\leq$ 0.05 % w/w |
| 0% w/w | $\leq$ C | $\leq$ 0.02 % w/w |
| 0% w/w | $\leq$ Zr | $\leq$ 0.1 % w/w |
| 0% w/w | $\leq$ O | $\leq$ 0.025 % w/w |
| 0% w/w | $\leq$ S | $\leq$ 0.015 % w/w |

rest iron, wherein Cr+Si+Al+Mn $\leq$ 3.0 % w/w, and up to 0.2 % w/w of other impurities,
and having a cold-rolled texture,
wherein the precursor has a phase transition from a BCC phase area into a BCC/FCC mixed area to an FCC phase area,
wherein at increasing temperature the phase transition between the BCC phase area and the BCC/FCC mixed area occurs at a first transition temperature $T_{\ddot{U}1}$ and at further increasing temperature the transition between the BCC/FCC mixed area and the FCC phase area occurs at a second transition temperature $T_{\ddot{U}2}$,

as magnetic final annealing a heat treatment of the precursor at the end of all mechanical machining steps

at a temperature $T_1 > T_{\ddot{U}2}$,
followed by a cooling to room temperature,
followed by heating to $T_2$, wherein $T_2 < T_{\ddot{U}2}$,
followed by a heat treatment at $T_2$ and then cooling to room temperature,
wherein 930°C $\leq T_1 < T_m$, 700°C $\leq T_2 \leq$ 1050°C, and $T_m$ is the solidus temperature,
the cooling rate being 10°C/h to 900°C/h at least across the temperature range from $T_1$ to $T_2$.

2. Method for producing a soft-magnetic alloy, comprising the provision of a precursor having a composition consisting substantially of

| | | |
|---|---|---|
| 5 % w/w | $\leq$ Co | $\leq$ 25 % w/w |
| 0.3 % w/w | $\leq$ V | $\leq$ 5.0 % w/w |
| 0 % w/w | $\leq$ Cr | $\leq$ 3.0 % w/w |
| 0 % w/w | $\leq$ Si | $\leq$ 3.0 % w/w |
| 0 % w/w | $\leq$ Mn | $\leq$ 3.0 % w/w |
| 0 % w/w | $\leq$ Al | $\leq$ 3.0 % w/w |
| 0 % w/w | $\leq$ Ta | $\leq$ 0.5 % w/w |
| 0 % w/w | $\leq$ Ni | $\leq$ 0.5 % w/w |
| 0 % w/w | $\leq$ Mo | $\leq$ 0.5 % w/w |

(continued)

| 0% w/w | ≤Cu | ≤0.2 % w/w |
|---|---|---|
| 0 % w/w | ≤Nb | ≤0.25 % w/w |
| 0 % w/w | ≤Ti | ≤0.05 % w/w |
| 0 % w/w | ≤Ce | ≤0.05 % w/w |
| 0 % w/w | ≤Ca | ≤0.05 % w/w |
| 0 % w/w | ≤Mg | ≤0.05 % w/w |
| 0 % w/w | ≤C | ≤0.02 % w/w |
| 0 % w/w | ≤Zr | ≤0.1 % w/w |
| 0 % w/w | ≤O | ≤0.025 % w/w |
| 0 % w/w | ≤S | ≤0.015 % w/w |

rest iron, wherein $Cr+Si+Al+Mn \leq 3.0$ % w/w, and up to 0.2 % w/w of other impurities, and having a cold-rolled texture, wherein the precursor has a phase transition from a BCC phase area into a BCC/FCC mixed area to an FCC phase area, wherein at increasing temperature the phase transition between the BCC phase area and the BCC/FCC mixed area occurs at a first transition temperature $T_{\ddot{U}1}$ and at further increasing temperature the transition between the BCC/FCC mixed area and the FCC phase area occurs at a second transition temperature $T_{\ddot{U}2}$,

as magnetic final annealing a heat treatment of the precursor at the end of all mechanical machining steps

at a temperature $T_1 > T_{\ddot{U}2}$,
followed by a cooling to $T_2$, wherein $T_2 < T_m$,
followed by a heat treatment at $T_2$ and then cooling to room temperature,
wherein $930°C \leq T_1 < T_m$, $700°C \leq T_2 \leq 1050°C$, and $T_m$ is the solidus temperature,
the cooling rate being 10°C/h to 900°C/h at least across the temperature range from $T_1$ to $T_2$.

3. Method according to claim 1 or 2, wherein $960°C \leq T_1 < T_m$,

4. Method according to any of claims 1 to 3, wherein the precursor is heat-treated for a time of more than 30 minutes above $T_{\ddot{U}2}$ and then cooled to $T_2$,

5. Method according to any of claims 1 to 4, wherein the precursor is heat-treated at $T_1$ for a time $t_1$, wherein 15 minutes $\leq t_1 \leq 20$ hours, and then cooled from $T_1$ to $T_2$.

6. Method according to any of claims 1 to 5, wherein the heat treatment is carried out at $T_2$ for a time $t_2$, wherein 30 minutes $\leq t_2 \leq 20$ hours.

7. Method according to any of claims 1 to 6, wherein the precursor is cooled from $T_1$ to room temperature at a rate of 10°C/h to 900°C/h, preferably of 25°C/h to 500°C/h, preferably of less than 200°C/h.

8. Method according to any of claims 1 to 7, wherein the heat treatment is carried out under a hydrogenous atmosphere or under an inert gas.

9. Method according to any of claims 1 to 8, wherein the heat treatment is carried out at $T_1$ in a stationary furnace and at $T_2$ in a stationary furnace or a continuous furnace
or
wherein the heat treatment is carried out at $T_1$ in a continuous furnace and at $T_2$ in a stationary furnace or a continuous furnace.

10. Method according to any of claims 1 to 9, wherein the precursor has the form of one or more pieces of sheet metal or of one or more stacks of sheets.

11. Method according to any of claims 1 to 10, wherein the precursor initially has the form of a strip from which at least one piece of sheet metal is produced by stamping, laser cutting or water jet cutting, wherein the heat treatment is carried out on one or several of the pieces of sheet metal.

12. Method according to claim 11, wherein several pieces of sheet metal, following the heat treatment, are bonded by means of an insulating adhesive to form a stack of sheets, or

    oxidised on the surface to set a layer with an insulating action and then bonded or laserwelded to form the stack of sheets, or
    coated with an inorganic / organic hybrid coating and then processed to form the stack of sheets.

13. Method according to any of claims 1 to 12, wherein the precursor initially has the form of a stack of sheets and the heat treatment is carried out on one or several of the stacks of sheets.

14. Method according to any of claims 1 to 13, further comprising the coating of the precursor with an oxide layer for electric insulation.


## Revendications

1. Procédé de fabrication d'un alliage magnétique doux, consistant à :

    fournir un précurseur qui présente une composition qui est constituée essentiellement de :

    5 % en poids ≤ Co ≤ 25 % en poids
    0,3 % en poids ≤ V ≤ 5,0 % en poids
    0 % en poids ≤ Cr ≤ 3,0 % en poids
    0 % en poids ≤ Si ≤ 3,0 % en poids
    0 % en poids ≤ Mn ≤ 3,0 % en poids
    0 % en poids ≤ Al ≤ 3,0 % en poids
    0 % en poids ≤ Ta ≤ 0,5 % en poids
    0 % en poids ≤ Ni ≤ 0,5 % en poids
    0 % en poids ≤ Mo ≤ 0,5 % en poids
    0 % en poids ≤ Cu ≤ 0,2 % en poids
    0 % en poids ≤ Nb ≤ 0,25 % en poids
    0 % en poids ≤ Ti ≤ 0,05 % en poids
    0 % en poids ≤ Ce ≤ 0,05 % en poids
    0 % en poids ≤ Ca ≤ 0,05 % en poids
    0 % en poids ≤ Mg ≤ 0,05 % en poids
    0 % en poids ≤ C ≤ 0,02 % en poids
    0 % en poids ≤ Zr ≤ 0,1 % en poids
    0 % en poids ≤ O ≤ 0,025 % en poids
    0 % en poids ≤ S ≤ 0,015 % en poids

    le reste étant du fer, Cr+Si+Al+Mn étant ≤ 3,0 % en poids, et jusqu'à 0,2 % en poids d'autres impuretés,
    et qui présente une texture laminée à froid,
    le précurseur présentant une transition de phase d'une zone de phase BCC dans une zone de mélange BCC/FCC en une zone de phase FCC,
    lorsque la température augmente, se produit la transition de phase entre la zone de phase BCC et la zone de mélange BCC/FCC à une première température de transition $T_{Ü1}$ et lorsqu'une autre température augmente, la transition de phase se produit entre la zone de mélange BCC/FCC et la zone de phase FCC à une seconde température de transition $T_{Ü2}$,
    un traitement thermique du précurseur étant le recuit final magnétique à la fin de toutes les étapes de traitement mécanique
    à une température $T_1$, $T_1 > T_{Ü2}$,
    suivi d'un refroidissement jusqu'à la température ambiante,
    suivi d'un chauffage à $T_2$, $T_2 < T_{Ü1}$
    suivi d'un traitement thermique à $T_2$ et ensuite un refroidissement à température ambiante,
    930°C ≤ $T_1$ ≤ $T_m$, 700°C ≤ $T_2$ ≤1 050°C, et $T_m$ étant la température de solidus, la vitesse de refroidissement s'élevant au-dessus au moins de la plage de température de $T_1$ à $T_2$ de 10°C/h à 900°C/h.

**2.** Procédé de fabrication d'un alliage magnétique doux consistant à :

fournir un précurseur, qui présente une composition qui est constituée essentiellement de :

5 % en poids ≤ Co ≤ 25 % en poids
0,3 % en poids ≤ V ≤ 5,0 % en poids
0 % en poids ≤ Cr ≤ 3,0 % en poids
0 % en poids ≤ Si ≤ 3,0 % en poids
0 % en poids ≤ Mn ≤ 3,0 % en poids
0 % en poids ≤ Al ≤ 3,0 % en poids
0 % en poids ≤ Ta ≤ 0,5 % en poids
0 % en poids ≤ Ni ≤ 0,5 % en poids
0 % en poids ≤ Mo ≤ 0,5 % en poids
0 % en poids ≤ Cu ≤ 0,2 % en poids
0 % en poids ≤ Nb ≤ 0,25 % en poids
0 % en poids ≤ Ti ≤ 0,05 % en poids
0 % en poids ≤ Ce ≤ 0,05 % en poids
0 % en poids ≤ Ca ≤ 0,05 % en poids
0 % en poids ≤ Mg ≤ 0,05 % en poids
0 % en poids ≤ C ≤ 0,02 % en poids
0 % en poids ≤ Zr ≤ 0,1 % en poids
0 % en poids ≤ O ≤ 0,025 % en poids
0 % en poids ≤ S ≤ 0,015 % en poids

le reste étant du fer, Cr+Si+Al+Mn étant ≤ 3,0 % en poids, et jusqu'à 0,2 % en poids d'autres impuretés, et qui présente une texture laminée à froid,
le précurseur présentant une transition de phase d'une zone de phase BCC dans une zone de mélange BCC/FCC en une zone de phase FCC,
lorsque la température augmente, se produit la transition de phase entre la zone de phase BCC et la zone de mélange BCC/FCC à une première température de transition $T_{Ü1}$ et lorsqu'une autre température augmente, la transition se produit entre la zone de mélange BCC/FCC et la zone de phase FCC à une seconde température de transition $T_{Ü2}$,
un traitement thermique du précurseur étant le recuit final magnétique à la fin de toutes les étapes de traitement mécanique
à une température $T_1$, $T_1 > T_{Ü2}$,
suivi d'un refroidissement jusqu'à $T_2$, $T_2 < T_{Ü1}$,
suivi d'un traitement thermique à $T_2$ et ensuite un refroidissement à température ambiante,
930°C ≤ $T_1$ ≤ $T_m$, 700°C ≤ $T_2$ ≤1 050°C, et $T_m$ étant la température de solidus, la vitesse de refroidissement s'élevant au-dessus au moins de la plage de température de $T_1$ à $T_2$ de 10°C/h à 900°C/h.

**3.** Procédé selon la revendication 1 ou 2, dans lequel 960°C ≤ $T_1$ ≤ $T_m$.

**4.** Procédé selon l'une quelconque des revendications 1 à 3, dans lequel le précurseur est soumis à un traitement thermique pendant une durée supérieure à 30 minutes au-dessus de la température $T_{Ü2}$ et ensuite est refroidi à la température $T_2$.

**5.** Procédé selon l'une quelconque des revendications 1 à 4, dans lequel le précurseur est soumis à un traitement thermique à $T_1$ pour une durée $t_1$, $t_1$ étant supérieure ou égale à 15 minutes et inférieure ou égale à 20 heures, et ensuite est refroidi de la température $T_1$ à la température $T_2$.

**6.** Procédé selon l'une quelconque des revendications 1 à 5, dans lequel le traitement thermique est effectué à $T_2$ pour une durée $t_2$, $t_2$ étant supérieure ou égale à 30 minutes et inférieure ou égale à 20 heures.

**7.** Procédé selon l'une quelconque des revendications 1 à 6, dans lequel le précurseur est refroidi de $T_1$ à la température ambiante à une vitesse comprise entre 10°C/h et 900°C/h de préférence entre 25°C/h et 500°C/h, de préférence à moins de 200°C/h.

**8.** Procédé selon l'une quelconque des revendications 1 à 7, dans lequel le traitement thermique est effectué sous atmosphère contenant de l'hydrogène ou sous un gaz inerte.

9. Procédé selon l'une quelconque des revendications 1 à 8, dans lequel le traitement thermique est effectué à $T_1$ dans un four stationnaire continu et à $T_2$ dans un four stationnaire ou dans un four continu, ou le traitement thermique s'effectue à $T_1$ dans un four continu et à $T_2$ dans un four stationnaire ou dans un four continu.

10. Procédé selon l'une quelconque des revendications 1 à 9, dans lequel le précurseur présente ensuite la forme d'une ou de plusieurs tôles ou d'un ou plusieurs paquets de tôles.

11. Procédé selon l'une quelconque des revendications 1 à 10, dans lequel le précurseur présente au moins la forme d'une bande, à partir de laquelle est fabriquées au moins une tôle par estampage, par découpage au laser ou par découpage au jet d'eau, le traitement thermique s'effectuant sur une ou plusieurs tôles.

12. Procédé selon la revendication 11, dans lequel plusieurs tôles sont collées à un paquet de tôles au moyen d'un adhésif isolant après le traitement thermique, ou

sont oxydées en surface pour fabriquer une couche agissant comme isolation et ensuite sont collées ou soudées au laser au paquet de tôles, ou
sont revêtues d'un revêtement hybride anorganique-organique et ensuite sont transformées en paquet de tôles.

13. Procédé selon l'une quelconque des revendications 1 à 12, dans lequel le précurseur présente ensuite la forme d'un paquets de tôles et le traitement thermique est réalisé sur un ou plusieurs paquets de tôles.

14. Procédé selon l'une quelconque des revendications 1 à 13, consistant en outre à revêtir le précurseur d'une isolation électrique au moyen d'une couche d'oxyde.

Fig. 1

Fig. 2

Fig. 3

Fig. 4

Fig. 5

Fig. 6

Fig. 7

Fig. 8

Fig. 9

Fig. 10

Fig. 11

Fig. 12

930335 (Fe-23Co-2V)

Fig. 13

Fig. 14

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0100895 A1
- EP 1918407 A1
- DE 102007035774 A1
- DE 1180954 B